# EUROPÄISCHE PATENTSCHRIFT

(11) **EP 1 121 240 B1**
(45) Veröffentlichungstag und Bekanntmachung des Hinweises auf die Patenterteilung: **12.03.2003**
(21) Anmeldenummer: 99944483.9
(22) Anmeldetag: 23.08.1999
(51) Int. Cl.: B29C 63/02

(54) **VERFAHREN UND EINE VORRICHTUNG ZUM KASCHIEREN VON PLATTENFÖRMIGEN WERKSTÜCKEN**
METHOD AND DEVICE FOR LAMINATING SHEET-SHAPED WORKPIECES
PROCEDE ET DISPOSITIF POUR LAMINER DES PIECES EN FORME DE PLAQUE

(30) Priorität: 25.08.1998 DE 19838581; 13.04.1999 DE 19916565
(43) Veröffentlichungstag der Anmeldung: 08.08.2001
(73) Patentinhaber: FRIZ MASCHINENBAU GmbH, D-74189 Weinsberg (DE)
(72) Erfinder: HÄFELE, Thomas, D-74182 Obersulm (DE); EISELE, Klaus, D-72160 Horb-Ihlingen (DE)
(74) Vertreter: HOFFMANN - EITLE
(86) Internationale Anmeldenummer: EP9906180
(87) Internationale Veröffentlichungsnummer: WO00010788

(56) Entgegenhaltungen:
- EP-A- 0 360 141
- EP-A- 0 390 130
- EP-A- 0 565 752
- WO-A-91/01873
- DE-A- 2 737 776
- DE-A- 2 833 052
- DE-A- 2 920 925
- DE-A- 3 011 171
- DE-A- 3 801 518
- DE-A- 4 212 504
- DE-A- 4 310 302
- US-A- 4 410 474
- US-A- 4 919 741
- US-A- 5 032 206
- US-A- 5 098 499

## Beschreibung

### TECHNISCHES GEBIET

Die Erfindung betrifft ein Verfahren und eine Vorrichtung zum Kaschieren von plattenförmigen Werkstücken.

### STAND DER TECHNIK

Gattungsgemäße Verfahren und Vorrichtungen werden beispielsweise in der Möbelindustrie oder bei der Herstellung von Decken- und Wandverkleidungen angewendet, um plattenförmige Werkstücke, insbesondere aus Holzwerkstoffen, deren sichtbare Oberflächen und/oder Werkstückkanten aus technischen und gestalterischen Gründen Profilierungen in der Gestalt von Vertiefungen, Nuten, Sicken, Rinnen, Erhebungen, Stegen, Durchgangsöffnungen und dergleichen aufweisen, mit einer verkleidenden Kaschierung, das heißt mit einem Beschichtungsmaterial zu versehen. Bei dem Beschichtungsmaterial handelt es sich zum Beispiel um Dekorpapiere oder Kunststoffolien, die unlösbar mit der Werkstückoberfläche verbunden werden und zu diesem Zweck eine bereits vorgefertigte Haftmittelbeschichtung aufweisen oder erst kurz vor dem Kaschiervorgang mit einem Haftmittel zu beschichten sind. Die Kaschierung bietet eine optisch ansprechende Werkstückoberfläche, beispielsweise in der Form eines Holzdekors, und schützt das Werkstückmaterial gleichzeitig gegen Witterungseinflüsse sowie mechanische und chemische Einwirkungen.

Bei den hier zu betrachtenden Werkstücken verlaufen die zuvor genannten Profilierungen nicht nur in einer Richtung, wie etwa bei Fußbodenleisten oder dergleichen, sondern erstrecken sich, teilweise auch sehr großflächig, mit unterschiedlichster Orientierung sowohl in Werkstückbreiten- als auch in Längsrichtung. Hierbei finden sich sowohl geradlinige als auch kurvenförmige Verläufe, einschließlich komplexerer Formen wie z.B. in sich geschlossene Kurven, mit bezogen auf die Werkstückdicke zum Teil erheblichen Niveauunterschieden. Derartige Profilierungen werden deshalb auch als sog. 3D-Profile bezeichnet.

Aufgrund der mit ihren unterschiedlichen Orientierungen technisch recht schwierig zu beherrschenden 3D-Profile wird das Kaschieren derartiger Werkstücke bisher ausschließlich in Membranpressen durchgeführt. Diese Pressen sind üblicherweise mit einem tischartigen Unterbau zur Auflage der zu kaschierenden Werkstücke sowie einem über dem Unterbau angeordneten absenkbaren Rahmen ausgestattet, der eine aufgespannte elastische Membran, zum Beispiel eine Silikonmembran, trägt. Der Unterbau besitzt eine Auflagefläche von ca. 1 x 3 m; die Größe des Rahmens und der Membran ist entsprechend auf diese Abmessung abgestimmt, so daß im wesentlichen der gesamte Unterbau mit der Membran abgedeckt werden kann. Zum Kaschieren der Werkstücke werden diese bei offener Presse einzeln per Hand oder über Zuführvorrichtungen auf den Unterbau aufgelegt. Vor oder nach dem Auflegen werden die mit dem Beschichtungsmaterial, hier z.B. eine Kunststoffolie, zu versehenden Werkstückoberflächen mit einem Klebemittel versehen. Über die derart vorbereiteten Werkstücke wird dann eine Bahn der Kunststoffolie gezogen und auf die Werkstückoberflächen gelegt. Nach Abschluß dieser Tätigkeiten wird der Rahmen mit der Membran auf die Werkstücke und die darauf liegende Kunststoffolie abgesenkt und die Presse geschlossen. Die Membran wird dann von ihrer den Werkstückoberflächen abgewandten Außenseite her mit einem Druck beschlagt (was z.B. mittels Druckluft erfolgt), so daß.sich die Kunststoffolie an die Werkstückoberflächenkontur und damit auch an die Profilierungen anlegt. Dieser Vorgang kann gegebenenfalls mittels einer Evakuierungseinrichtung unterstützt werden, die den Raum unterhalb der Membrane, d.h. auf der der Werkstückoberfläche zugewandten Seite evakuiert. Auf diese Weise wird das aufzukaschierende Beschichtungsmaterial an das Werkstück und seine Profilierungen angepreßt und angeformt. Bei der Verarbeitung bestimmter Beschichtungsmaterialien kann zum besseren Verformen des Beschichtungsmaterials sowie zur Beschleunigung des Aushärtevorgangs des Klebemittels zusätzlich die Membran beziehungsweise die Werkstückoberfläche erwärmt werden. Nach der Aushärtephase wird die Presse zur Entnahme der kaschierten Werkstücke wieder geöffnet.

Es ist ersichtlich, daß bei diesem in Verbindung mit der genannten Membranpresse durchgeführten Kaschierungsverfahren nur im Pressentakt gearbeitet und aufgrund der vorgegebenen Pressen- bzw. Membrangröße auch nur eine begrenzte Anzahl plattenförmiger Werkstücke in einem Arbeitsgang beschichtet werden kann. Zudem ist eine Vielzahl von manuellen Tätigkeiten, insbesondere in der Arbeitsvorbereitung und in der Nachbearbeitung, erforderlich, was den gesamten Herstellungsvorgang nicht nur verlangsamt, sondern auch die Reproduzierbarkeit des Verfahrens und das Erzielen einer konstanten Produktionsqualität erschwert. Des weiteren hat es sich gezeigt, daß infolge des großflächigen Abdeckens sämtlicher Werkstücke durch das Beschichtungsmaterial und die Membran Verarbeitungsfehler, wie zum Beispiel eine Faltenbildung beim oder nach dem Anlegen der Membran, oftmals nicht oder nicht rechtzeitig erkannt werden können, so daß dann gleich die gesamte Pressencharge Ausschuß ist. Ergo ist die Ausschußrate auch relativ hoch. In Verbindung mit bekannten Membranpressen durchgeführte konventionelle Kaschierungsverfahren sind aufgrund der zuvor erläuterten Gegebenheiten selbst in der Serienproduktion recht aufwendig und dementsprechend kostenintensiv.

### DARSTELLUNG DER ERFINDUNG

Der Erfindung liegt daher das technische Problem zugrunde, ein geeignetes Kaschierungsverfahren und eine entsprechende Kaschierungsvorrichtung zu schaffen, welche die dem vorbekannten Stand der Technik anhaftenden Nachteile möglichst weitgehend vermeiden und ein demgegenüber effektiveres Produktionsverfahren ermöglichen.

Das technische Problem wird gelöst durch ein erfindungsgemäßes Verfahren mit den Merkmalen des Patentanspruchs 1.

Dieses Verfahren zum Kaschieren von plattenförmigen Werkstücken, insbesondere aus Holzwerkstoffen, deren Oberfläche bezogen auf eine Werkstücklängs- und Breitenrichtung unterschiedlich orientierte Profilierungen aufweist, mit einem flexiblen fixierfähigen Beschichtungsmaterial, umfaßt folgende Schritte, jedoch nicht zwingenderweise in der gegebenen Reihenfolge:
a) fortlaufendes Bewegen der Werkstücke in einer vorbestimmten Durchlaufrichtung auf einer Stützebene,
b) Zuführen und Auflegen des Beschichtungsmaterials auf die zu beschichtende Oberfläche der fortlaufend bewegten Werkstücke, und
c) Anpressen des Beschichtungsmaterials auf die zu beschichtende Oberfläche mittels mindestens einem sich während des Anpreßvorgangs bewegenden Anpreßelement, das wenigstens einen dem Beschichtungsmaterial und der zu beschichtenden Oberfläche zugeordneten elastischen Anpreßkörper aufweist, so daß das Beschichtungsmaterial fortlaufend an die zu beschichtende Oberfläche und deren unterschiedlich orientierte Profilierungen angeschmiegt, angedrückt und fixiert wird.

Unter einem fixierfähigen Beschichtungsmaterial wird im Sinne der Erfindung ein dünnes, platten- oder folienartiges (ggf. auch plastisch verformbares) Material verstanden, das zur Herstellung einer festen, unlösbaren Verbindung mit der Werkstückoberfläche entweder selbst mit einem bereits vorbereiteten Fixiermittel, z.B. einer Haft- oder Klebemittelschicht, versehen oder aber mit separat aufgetragenen Fixiermitteln, z.B. PUR-Schmelzkleber, kombinierbar ist. Beispiele für derartige Beschichtungsmaterialien sind Furniere, Dekorpapiere, sog. Transferfolien, PVC-, PET-, PO-Folien etc., dünne Kunststoffplatten, insbesondere aus thermoplastischen Kunststoffen, sowie andere verformbare Trägermaterialien. Sofern das Beschichtungsmaterial und/oder das Werkstück nicht selbst mit einem vorbereiteten Fixiermittel versehen sind, so kann die Bereitstellung beziehungsweise das Auftragen des zuvor erwähnten separaten Fixiermittels entweder vor und/oder während des Zuführens und Auflegens des Beschichtungsmaterials auf die zu kaschierende Werkstückoberfläche erfolgen. Anstelle das Beschichtungsmaterial während der fortlaufenden Werkstückbewegung zuzuführen und aufzulegen ist es natürlich ebenso möglich, diesen Schritt in einem vorbereitenden Arbeitsgang auszuführen und das Werkstück erst dann in der Durchlaufrichtung in Bewegung zu setzen. Unter einer Bewegung des Anpreßelements ist im Sinne der Erfindung jegliche translatorische, rotatorische oder kombinierte Bewegung zu verstehen. Das Anpreßelement kann beispielsweise relativ zu einem fixen Bezugskoordinatensystem stationär angeordnet sein und eine Rotation um eine oder mehrere Achsen ausführen. Oder das Anpreßelement steht selbst still, besitzt aber bewegte oder sich bewegende Anpreßkörper. Auch kann das Anpreßelement eine fortschreitende Bewegung ausführen, d.h., es kann zum Beispiel relativ zu einem fixen Bezugskoordinatensystem translatorisch von einem Startpunkt zu einem Endpunkt fortbewegt werden. Ebenso ist es beispielsweise möglich, daß sich das Anpreßelement auf einer gekrümmten Bewegungsbahn von einem Startpunkt zu einem Endpunkt bewegt und dabei eine Eigenrotation ausführt. Auch kann das bewegte Anpreßelement während des Bewegungsvorgangs eine Änderung der Bewegungsrichtung durchführen. Der das Beschichtungsmaterial direkt und/oder indirekt kontaktierende Anpreßkörper kann grundsätzlich jede, auf das jeweils zu bearbeitende Werkstück und dessen Profilierungen abgestimmte Formgebung besitzen. Ein indirekter Kontakt des Anpreßkörpers liegt beispielsweise dann vor, wenn das Beschichtungsmaterial noch mit einer Schutzfolie versehen ist, ein die Wirkung des Anpreßkörpers übertragendes Zwischenelement zwischen dem Anpreßkörper und dem Beschichtungsmaterial angeordnet ist, oder zum Anschmiegen, Andrücken und Fixieren des Beschichtungsmaterials ein Wirkmedium verwendet wird. Letzerer Fall liegt beispielsweise dann vor, wenn das Anpreßelement als eine Düseneinrichtung ausgestaltet ist, die ein flüssiges oder gasförmiges Medium oder elastische Festkörper ausstößt, welche dann die Funktion eines elastischen "Anpreßkörpers" übernehmen und die gewünschte Anschmiege-, Andrück- und Fixierwirkung erzielen.

Entgegen bisher bekannten konventionellen Methoden, bei denen die Werkstücke in einer Membranpresse verarbeitet werden, stehen bei der vorliegenden Erfindung die mit den (3D-)Profilierungen versehenen Werkstücke während des Kaschiervorgangs also nicht still, sondern werden in einer vorbestimmten Durchlaufrichtung bewegt und durchlaufen hierbei vorzugsweise kontinuierlich (diskontinuierliche Bewegungsabschnitte sind jedoch ebenso denkbar) eine oder mehrere stationäre und/oder mobile Bearbeitungsstationen. Hierbei wird insbesondere das Anpressen des Beschichtungsmaterials auf die zu beschichtende Oberfläche, das mittels dem sich während des Anpreßvorgangs bewegenden, speziell für diesen Zweck ausgestalteten Anpreßelement erfolgt, am fortschreitenden Werkstück ausgeführt. Das Anschmiegen, Andrücken und Fixieren des Beschichtungsmaterials an die Werkstückoberfläche und ihre unterschiedlich orientierten Profilierungen ist folglich ein dynamischer und zumeist auch fortlaufender Vorgang.

Das sich während des Anpreßvorgangs bewegende Anpreßelement mit seinem dem Beschichtungsmaterial und der zu beschichtenden Oberfläche zugeordneten elastischen Anpreßkörper gewährleistet hierbei, daß nicht nur Werkstücke mit sich in Werkstücklängsrichtung bzw. in Durchlaufrichtung erstreckenden Profilierungen sondern auch mit Profilierungen, die in einer beliebigen Richtung, insbesondere jedoch in der an sich kritischen Werkstückbreitenrichtung, d.h. quer zur Durchlaufrichtung, oder schräg dazu verlaufen, fortlaufend bearbeitet werden können. Der elastische Anpreßkörper paßt sich hierbei permanent den Profilierungen an, wodurch auch sehr komplexe Profilierungsformen, einschließlich kurvenförmiger Verläufe, geschlossene Kurven und Profilierungen mit erheblichen Niveauunterschieden sowie zusätzlich auch die Kantenbereiche des Werkstückes zuverlässig zu verarbeiten und ein hochwertiges Endergebnis zu erzielen ist. Auf diese Weise ist es erstmals möglich, plattenförmige Werkstücke mit 3D-Profilierungen erfolgreich in einem Durchlaufverfahren zu kaschieren.

Das erfindungsgemäße Verfahren gestattet es darüber hinaus, eine prinzipiell unbegrenzte Werkstückanzahl kontinuierlich und mit einer hohen Durchlaufgeschwindigkeit zu bearbeiten. Als grober Anhaltswert sind Durchlaufgeschwindigkeiten von bis zu ca. 30 m/min und mehr zu nennen. Das erfindungsgemäße Verfahren unterliegt im Gegensatz zu in Verbindung mit Membranpressen ausgeführten konventionellen Verfahren also nicht den durch den Pressentakt und der damit zusammenhängenden Pressentaktfrequenz vorgegebenen Einschränkungen hinsichtlich der zu verarbeitenden Werkstückanzahl. Gegenüber dem Stand der Technik können auch die bisher erforderlichen manuellen Tätigkeiten erheblich reduziert werden. Da die bei Membranpressen erforderlichen; sich vor bzw. nach jedem Pressentakt wiederholenden Arbeitsvorbereitungen und Nachbearbeitungen bei dem erfindungsgemäßen Verfahren entfallen, sind lediglich einmalige Einrichtungsarbeiten durchzuführen, danach kann eine vom Verfahrensprinzip her prinzipiell unlimitierte Werkstückanzahl bearbeitet werden. Auf diese Weise werden auch Maschinenstillstandszeiten stark reduziert und die Produktivität wesentlich gesteigert. Gegenüber konventionellen Verfahren ist das im Durchlauf arbeitende erfindungsgemäße Verfahren zudem erheblich schneller, was ebenfalls zu einer Produktionssteigerung und der Wirtschaftlichkeit des Verfahrens beiträgt. Aufgrund des erfindungsgemäßen Durchlaufverfahrens ist zudem eine relativ einfach zu realisierende automatische Beschickung der in oder an der Durchlaufbahn angeordneten Bearbeitungsstationen mit den Werkstücken möglich. Da die Werkstücke erfindungsgemäß gewissermaßen einzeln und individuell im Durchlauf bearbeitet werden, können etwaige Fertigungsfehler oder Ungenauigkeiten bei Bedarf sogar noch während eines Durchlaufs erkannt und bei den folgenden Werkstücken bereits entsprechend korrigiert werden. Die Ausschußrate kann bei dem erfindungsgemäßen Verfahren somit sehr klein gehalten werden. Nachbearbeitung, sofern erforderlich, lassen sich ebenfalls weitgehend automatisch und im Durchlauf ausführen. Mit dem erfindungsgemäßen Verfahren können in weitem Umfang überdies verschiedenste Werkstücktypen, größen und -formen in einem (gemeinsamen) Durchlaufvorgang kaschiert und weiterbearbeitet werden. Umrüstarbeiten oder Neueinstellung sind bei dem erfindungsgemäßen Verfahren in der Regel erst bei stark unterschiedlich ausgebildeten Werkstücken erforderlich. An die für das Kaschieren der Werkstücke notwendigen Verfahrensschritte können sich im Sinne der Erfindung weitere Bearbeitungsschritte, zum Beispiel spanende Bearbeitungen oder dergleichen unmittelbar anschließen. Auch diese Folgeschritte können grundsätzlich im Durchlauf ausgeführt werden, d.h., die Werkstücke können sich von der für die Kaschierung vorgesehenen Durchlaufstrecke zu einer daran anschließenden Durchlaufstrecke weiterbewegen, ohne daß eine Entnahme oder Zwischenlagerung der Werkstücke nötig ist. In Anbetracht der zuvor dargelegten Vorteile kann mittels des erfindungsgemäßen Verfahrens der gesamte Herstellungsvorgang erheblich beschleunigt und auch die Reproduzierbarkeit des Verfahrens sowie die erzielbare Produktqualität auf eine sehr wirtschaftliche, kostensparende Art und Weise erheblich verbessert werden.

Gemäß einem vorteilhaften Ausgestaltungsmerkmal des erfindungsgemäßen Verfahrens wird das zugeführte und auf die zu beschichtende Oberfläche der fortlaufend bewegten Werkstücke aufgelegte Beschichtungsmaterial nach jedem Werkstück abgetrennt. Auf diese Weise hängen die einzelnen Werkstücke während des Anpreß- und Kaschiervorgangs sowie im fertigt kaschierten Zustand nicht wie beim Stand der Technik über das Beschichtungsmaterial zusammen, sondern besitzen jeweils einen eigenen Beschichtungsmaterialabschnitt. Dies verhindert bei den relativ hohen Durchlaufgeschwindigkeiten eine Beschädigung des recht fragilen Beschichtungsmaterials. Ferner stellt auf diese Weise jedes Werkstück ein einzelnes Teil dar, das sowohl manuell als auch mittels automatischer Bearbeitungsstationen leichter zu handhaben und zu manipulieren ist. Das Abtrennen des Beschichtungsmaterial kann sowohl vor als auch nach dem Anpressen und Fixieren des Beschichtungsmaterials an die Werkstückoberfläche erfolgen.

Gemäß einer weiteren vorteilhaften Variante des erfindungsgemäßen Verfahren ist es vorgesehen, das Kaschieren nicht nur einseitig, sondern auch zweiseitig auszuführen. Hierbei erfolgt das Kaschieren mittels mindestens zwei, jeweils auf gegenüberliegenden Seiten der Stützebene angeordneten und einer jeweiligen Werkstückoberfläche zugeordneten, sich während des Anpreßvorgangs bewegenden Anpreßelementen. Das zu kaschierende Werkstück bewegt sich also relativ zu den Anpreßelementen jeweils zwischen zwei gegenüberliegenden Anpreßelementen hindurch. Auf diese Weise können in einem einzigen Arbeitsschritt gleichzeitig beide Werkstückoberflächen im Durchlauf kaschiert werden.

Bei einer anderen bevorzugten Ausführungsform des erfindungsgemäßen Verfahrens erfolgt das Kaschieren mittels mindestens zwei in Durchlaufrichtung der Werkstücke hintereinander angeordneten Anpreßelementen. Das Beschichtungsmaterial wird also beispielsweise bei der in Durchlaufrichtung vorderen Werkstückkante beginnend zunächst durch das erste Anpreßelement an die Werkstückoberfläche und die Profilierungen teilweise oder vollständig angeschmiegt, angedrückt und fixiert. Das oder die nachfolgenden Anpreßelemente vervollständigen dann das Anschmiegen, Andrücken und/oder Fixieren beziehungsweise halten bei einer schnellen Durchlaufgeschwindigkeit das bearbeitete Werkstück in diesem Zustand, bis eine stabile, feste Verbindung zwischen der Werkstückoberfläche und dem Beschichtungsmaterial eingetreten ist. In Durchlaufrichtung der Werkstücke hintereinander angeordnete Anpreßelemente können selbstverständlich auch bei der zuvor beschriebenen Variante mit den jeweils auf gegenüberliegenden Seiten der Stützebene angeordneten Anpreßelementen verwendet werden.

Bei dem erfindungsgemäßen Verfahren wird das sich bewegende Anpreßelement gemäß einer bevorzugten Ausführungsvariante während des Anpreßvorgangs relativ zum fortschreitenden Werkstück stationär gehalten. Das Anpreßelement kann dann beispielsweise eine Eigenbewegung in der Form einer Rotation oder dergleichen ausführen, oder bewegte bzw. sich bewegende Teile des Anpreßelements können sich relativ zum fortschreitenden Werkstück bewegen.

Erfindungsgemäß ist jedoch auch vorgesehen, daß das sich bewegende Anpreßelement während des Anpreßvorgangs relativ zum fortschreitenden Werkstück bewegt wird. Diese Relativbewegung kann grundsätzlich in einer beliebigen geeigneten Richtung relativ zum Werkstück und/oder zur Durchlaufrichtung erfolgen. Für bestimmte Anpreßelementarten hat es sich jedoch besonders bewährt, daß das sich bewegende Anpreßelement über zumindest einen Teilbereich eines Werkstück-Durchlaufabschnittes in Werkstück-Durchlaufrichtung mit dem fortschreitenden Werkstück mitbewegt wird. Somit läßt sich das Anschmiegen, Andrücken und Fixieren des Beschichtungsmaterials sehr effektiv beeinflussen und die Anpreßdauer erhöhen. Selbstverständlich sind auch Mischformen der beschriebenen Anpreßelementbewegungen möglich, insbesondere bei der Verwendung von mehreren Anpreßelementen.

Das erfindungsgemäße Verfahren sieht des weiteren vor, daß der Anpreßkörper des Anpreßelementes während des Anpreßvorgangs relativ zum bewegten Werkstück bewegt wird. Eine solche Bewegung des Anpreßkörpers kann sowohl bei einem stationär gehaltenen Anpreßelement als auch bei einem relativ zum fortschreitenden Werkstück bewegten Anpreßelement ausgeführt werden. Für bestimmte Einsatzzwecke und spezielle Anpreßelementtypen ist es jedoch auch zweckmäßig, daß der Anpreßkörper während des Anpreßvorgangs relativ zum bewegten Werkstück stillsteht. Diese Ausführungsform eignet sich besonders auch für ein Anpreßelement, das, wie zuvor erwähnt, über zumindest einen Teilbereich eines Werkstück-Durchlaufabschnittes in Werkstück-Durchlaufrichtung mit dem fortschreitenden Werkstück mitbewegt wird. Zudem sind natürlich Kombinationen der beschriebenen Anpreßkörperbewegungen möglich, insbesondere bei der Verwendung von mehreren Anpreßelementen und/oder mehreren Anpreßkörpern.

Für bestimmte Anwendungsfälle hat es sich auch bewährt, daß der Anpreßkörper beim Durchlauf bestimmter Bereiche des Werkstücks zumindest zeitweilig einer in eine Profilierungsvertiefung hinein wirkenden und/oder einer sich einer Profilierungserhebung anpassend wirkenden Zusatzverformung unterworfen wird. Unter einer Zusatzverformung wird eine solche Verformung des Anpreßkörpers verstanden, die über die normale Ausgangsform des Anpreßkörpers in einem Betriebszustand, in dem keine Zusatzverformung erfolgt, hinausgeht. Dies wird nachfolgend noch genauer im Zusammenhang mit der erfindungsgemäßen Vorrichtung erläutert werden. Auf diese Weise läßt sich der Anpreßkörper auch an sehr diffizile Profilierungen, zum Beispiel Hinterschneidungen oder Flächenbereiche in der Umgebung von Durchgangsöffnungen, anpassen.

In diesem Zusammenhang kann auch ein Verfahrensschritt Anwendung finden, dem gemäß das Anpreßelement und/oder der Anpreßkörper beim Durchlauf bestimmter Bereiche des Werkstücks zumindest zeitweilig oszillierend oder intermittierend bewegt werden. Diese Bewegungen können grundsätzlich in jeder in Bezug auf die Werkstückoberfläche und/oder das Beschichtungsmaterial gewählten geeigneten Richtung erfolgen. Als besonders günstig ist indes eine zumindest zeitweilig oszillierende oder intermittierende Bewegung anzusehen, die in einer zur Durchlaufrichtung im wesentlichen parallelen Richtung und/oder in einer zur Durchlaufrichtung im wesentlichen senkrechten Richtung ausgeführt wird. Diese Bewegungsarten können sowohl zum Verformen als auch zum Anschmiegen, Andrücken und Fixieren des Beschichtungsmaterials an die Werkstückoberfläche und die jeweiligen Profilierungen eingesetzt werden.

Im Rahmen des erfindungsgemäßen Verfahrens ist es ferner beabsichtigt, die Werkstücke vorzugsweise durch Antrieb von einem oder mehreren Anpreßelementen fortzubewegen. Auf dies Art und Weise üben die Anpreßelemente beziehungsweise deren Anpreßkörper eine vorteilhafte Doppelfunktion aus, so daß zumindest über eine Teilstrecke separate Werkstück-Transporteinrichtung zur Werkstückbewegung nicht zwingend erforderlich sind.

Bei einer weiteren vorteilhaften Ausgestaltungsform des erfindungsgemäßen Verfahrens werden die Werkstücke aufeinanderfolgend in der Durchlaufrichtung fortbewegt. Hintereinander liegende Werkstücke können sich hierbei bei Betrachtung in Durchlaufrichtung durchaus auch seitlich überlappen. Ferner können die Werkstücke sowohl Stoß an Stoß als auch mit gleichen oder unterschiedlichen Zwischenräumen aufeinanderfolgen. Diese Fortbewegungsart gestattet eine von der Werkstücklage weitgehend unabhängige, besonderes schnelle Beförderung und Bearbeitung der Werkstücke. Eine ausreichende Breite der Anpreßelemente bzw. Anpreßkörper vorausgesetzt, lassen sich die Werkstücke außerdem nebeneinander angeordnet in der Durchlaufrichtung fortbewegen. Die nebeneinander liegende Anordnung umfaßt hierbei auch eine nebeneinander versetzt angeordnete Position der Werkstücke während des Durchlaufs. Diese Variante ermöglicht eine gleichzeitige Bearbeitung der jeweils nebeneinanderliegenden Werkstücke und damit einen besonders hohen Werkstückdurchsatz.

Bei dem erfindungsgemäßen Verfahren werden die Werkstücke bevorzugt mit einer konstanten Geschwindigkeit fortlaufend bewegt, was den Werkstücktransport und die Werkstückbearbeitung vereinfacht. Ebenso sind jedoch zumindest über Teilstrecken auch positive oder negative Werkstückbeschleunigungen und/oder Durchlaufstreckenabschnitte mit unterschiedlichen konstanten Durchlaufgeschwindigkeiten realisierbar.

Es empfiehlt sich auch, beim Durchlauf bestimmter Bereiche eines Werkstücks durch die Anpreßeinrichtung die Durchlaufgeschwindigkeit zu verändern. So kann es beispielsweise von Vorteil sein, beim Durchlauf eines im Vergleich zu anderen profilierten Bereichen des Werkstücks tiefer profilierten Abschnittes die Durchlaufgeschwindigkeit zu verringern, während
beim Durchlauf eines im Vergleich zu anderen profilierten Bereichen des Werkstücks weniger tief profilierten Abschnittes die Durchlaufgeschwindigkeit bei Bedarf erhöht wird. Mit diesen Verfahrensschritten lassen sich auch bei komplizierten Profilierungen sehr hochwertige Kaschierungsergebnisse erzielen.

Bei der Verarbeitung einiger Beschichtungsmaterialien hat es sich als günstig erwiesen, daß das Beschichtungsmaterial und/oder die Werkstückoberfläche vor und/oder während des Anpreßvorgangs erwärmt wird. Die Erwärmungstemperatur und Erwärmungsdauer wird hierbei in Abhängigkeit der jeweiligen Eigenschaften des Beschichtungsmaterials sowie des verwendeten Fixiermittels eingestellt. Die Erwärmung ermöglicht nicht nur ein effektiveres Verformen, Anschmiegen und Andrücken des entsprechenden Beschichtungsmaterials an die Werkstückoberfläche, sondern gestattet auch eine Beschleunigung des eigentlichen Fixiervorgangs, beispielsweise durch Reduzierung der Aushärtezeit eines wärmeaushärtenden Klebemittels oder dergleichen. Eine Vorwärmung der Werkstückoberfläche vor dem eigentlichen Anpreßvorgang wiederum reduziert beispielsweise die Temperaturdifferenz zwischen dem Werkstück und einem erst nachfolgend während des Anpreßvorgangs erwärmten Beschichtungsmaterial, so daß ein Temperaturschock zwischen den zwei zu verbindenden Teilen sowie ungünstige Wärmespannungen effektiv vermieden werden können.

Entsprechend einem weiteren Ausgestaltungsmerkmal des erfindungsgemäßen Verfahrens wird das Beschichtungsmaterial, und damit in der Regel auch die Werkstückoberfläche, vorzugsweise indirekt durch Erwärmen des Anpreßelementes und/oder seines Anpreßkörpers erwärmt. Der Wärmeübergang zum Beschichtungsmaterial erfolgt dann durch direkten und/oder indirekten Kontakt mit dem Anpreßelement beziehungsweise dessen Anpreßkörper. Die Wärmeeinwirkung und das damit verbundene Erweichen und/oder Verformen des Beschichtungsmaterials kann auf diese Weise nahezu gleichzeitig mit der Anschmiege-, Andrück und Fixierwirkung des Anpreßelementes bzw. des Anpreßkörpers erfolgen. Ein direktes Erwärmen des Beschichtungsmaterials, etwa durch eine separate Heizeinrichtung, ist natürlich ebenfalls durchführbar.

Für die gängigsten Beschichtungsmaterialien hat es sich als günstig erwiesen, den Anpreßkörper auf eine Temperatur von 20°C bis 200°C, insbesondere 50°C bis 180°C, zu erwärmen. Handelt es sich bei dem zum Kaschieren verwendeten Beschichtungsmaterial um eine Transferfolie, so wird der Anpreßkörper vorzugsweise auf eine Temperatur von 170°C bis 190°C erwärmt. Beim Kaschieren einer als Beschichtungsmaterial dienenden PVC-Folie hingegen wird der Anpreßkörper nicht erwärmt. Die Erfindung ist indes nicht auf die genannten Temperaturbereiche beschränkt. Je nach Anwendungsfall und eingesetzten Beschichtungsmaterialien können auch andere Erwärmungstemperaturen sinnvoll sein.

Wird gemäß einem weiteren Aspekt des erfindungsgemäßen Verfahrens beim Kaschieren mittels mindestens zwei in Durchlaufrichtung des Werkstückes betrachtet hintereinander angeordneten Anpreßelementen das Beschichtungsmaterial von einem Anpreßelement zum nächsten stärker erwärmt, so läßt sich das Beschichtungsmaterial nicht nur auf einfache und effektive Art und Weise sehr stark verformen, sondern auch leichter an besonders ausgeprägte Profilierungen anpassen, anschmiegen und andrücken. Dies gilt insbesondere bei hohen Werkstückdurchlaufgeschwindigkeiten.

Es ist des weiteren vorgesehen, daß der durch ein jeweiliges Anpreßelement auf das Beschichtungsmaterial und die Werkstückoberfläche ausgeübte Anpreßdruck individuell für jedes Anpreßelement eingestellt wird. Die Einstellung kann hierbei sowohl manuell als auch automatisch, beispielsweise über eine geeignete Steuer- und/oder Regeleinrichtung, erfolgen. Auf diese Weise läßt sich der Anpreßdruck den jeweils zu verarbeitenden Beschichtungsmaterialien, den Werkstoffeigenschaften des Werkstückes sowie der Profilierungsgeometrie entsprechend leichter anpassen.

Der Anpreßdruck kann insbesondere durch eine Höheneinstellung des Anpreßelementes relativ zur Stützebene und/oder relativ zur zu kaschierenden Werkstückoberfläche eingestellt werden. Dies kann beispielsweise durch eine feste Voreinstellung erfolgen, die während der gesamten Betriebsdauer für eine Werkstückart beibehalten wird. Der Anpreßdruck ergibt sich damit gewissermaßen als Reaktionskraft durch das Zusammenwirken des Werkstückes mit dem Anpreßelement. Für bestimmte Anwendungsfälle hat es sich jedoch auch bewährt, daß gemäß einer weiteren vorteilhaften Ausgestaltungsvariante des erfindungsgemäßen Verfahrens der Anpreßdruck während des laufenden Betriebs durch eine sich permanent an die jeweilige Werkstückbasisquerschnittshöhe bzw. Profilierungsgeometrie anpassende Höheneinstellung des Anpreßelementes variiert wird. Dies gestattet nicht nur eine leichte Anpassung an unterschiedlichste Profilierungen, sondern auch die Verarbeitung von Werkstücken mit stark variierenden Basisquerschnittshöhen. Ferner lassen sich auf diese Weise unterschiedliche Werkstückarten verarbeiten, ohne daß dafür aufwendige Umrüstarbeiten oder nachteilige Maschinenstillstandszeiten erforderlich sind.

In einer anderen Verfahrensvariante wiederum wird der Anpreßdruck durch eine zur Werkstückoberfläche hin gerichtete Vorspannung des Anpreßelementes eingestellt. Beim Durchlauf von Werkstücken mit unterschiedlichen Basisquerschnittshöhen oder unterschiedlich profilierten Werkstückbereichen stellt sich somit eine automatische bzw. selbsttätige Veränderung und Anpassung des Anpreßdrucks ein. Die zur Ausführung dieses Verfahrensmerkmals erforderlichen Vorrichtungselemente sind darüber hinaus konstruktiv besonders einfach zu realisieren und benötigt in der Regel keine aufwendigen Steuer- oder Regeleinrichtungen.

Erfindungsgemäß ist es zudem beabsichtigt, daß der Anpreßdruck bei einem fest vorgegebenen und/oder variablen Abstand zwischen dem Anpreßkörper und der Oberfläche des durchlaufenden Werkstücks mit dem darauf aufliegenden Beschichtungsmaterial durch die Dicke und/oder den Aufbau und/oder die Elastizität des Materials des elastischen Anpreßkörper bestimmt wird. Diese Parameter des sich während des Anpreßvorgangs reversibel verformenden Anpreßkörpers gestatten eine besonders gezielt Einflußnahme auf den Anpreßdruck und damit das Anschmiegen, Anformen und Fixieren des Beschichtungsmaterials an die Werkstückoberfläche.

Beim Kaschieren mittels mindestens zwei in Durchlaufrichtung des Werkstückes betrachtet hintereinander angeordneten Anpreßelementen wird gemäß einem anderen bevorzugten vorteilhaften Ausgestaltungsmerkmal des erfindungsgemäßen Verfahrens der durch die Anpreßelemente auf das Beschichtungsmaterial und die Werkstückoberfläche ausgeübte Druck in Durchlaufrichtung von einem Anpreßelement zum nächsten erhöht. Auf diese Weise sind wiederum bestimmte beabsichtigte Anpreß-, Anschmiege- und Fixiereigenschaften zu erzielen.

Das erfindungsgemäße Verfahren mit den zuvor beschriebenen Merkmalen hat sich zum dreidimensionalen Kaschieren von plattenförmigen Werkstücken, bei denen die zu kaschierenden Werkstückoberflächen und auch die in diesen Oberflächen befindlichen Profilierungen primär in der großflächigen Plattenhauptebene des Werkstückes liegen bzw. keine zu großen oder abrupten Winkelunterschiede zur Plattenhauptebene, bestens bewährt. Beim Kaschieren kritischerer Werkstückbereiche, wie zum Beispiel der schmalen Plattenseitenränder, findet das erfindungsgemäße Verfahren in seiner bisher beschriebenen Form jedoch gewisse Grenzen, insbesondere dann, wenn sich die schmalen Plattenseitenränder in einem recht scharfen Winkel von ca. 90 Grad relativ zur Plattenhauptebene erstrecken. Es wäre jedoch wünschenswert, das erfindungsgemäße Verfahren zusätzlich auch zum Kaschieren dieser schmalen Plattenseitenränder und/oder ähnlich geformter, kritischer Werkstückbereiche nutzen zu können, um
die besagten Plattenseitenränder und/oder ähnlich geformten Werkstückbereiche formgenau und mit einer hohen Fertigungsqualität mit dem flexiblen fixierfähigen Beschichtungsmaterial automatisch dreidimensional zu kaschieren.

Zu diesem Zweck ist in einer weiteren vorteilhaften Ausgestaltungsvariante des erfindungsgemäßen Verfahrens vorgesehen, daß ein bereits in einem vorangegangenen Verfahrensschritt durch ein bewegliches Anpreßelement vorkaschiertes, d.h. auf die zu beschichtende Werkstückoberfläche aufgetragenes Beschichtungsmaterial mittels mindestens einer dem Anpreßelement in Durchlaufrichtung und auf einer der zu beschichtenden Oberfläche abgewandten Seite nachgeschalteten Beschichtungsmaterial-Tiefzieheinrichtung, die über einen vorbestimmten Durchlaufstreckenabschnitt mit den Werkstücken mitbewegbar ist, tiefgezogen wird.

Bei dieser erfindungsgemäßen Verfahrensvariante wird also nach dem mittels dem beweglichen Anpreßelement durchgeführten Vor/Kaschieren (bei dem, so wie es weiter ob beschrieben ist, hauptsächlich die großflächigen und im wesentlichen parallel zur Stützebene verlaufenden Hauptflächenabschnitte des Werkstückes einschließlich etwaiger unterschiedlich orientierter Profilierungen kaschiert werden) ein weiterer Bearbeitungsschritt am bewegten Werkstück durchgeführt, wobei das bereits vorkaschierte Beschichtungsmaterial im Durchlauf mittels Tiefziehen weiter (dreidimensional) verformt und an die komplexeren Werkstückkonturen angeschmiegt wird. Das Tiefziehen erfolgt hierbei zweckmäßigerweise von einer Seite her, die den bereits vorkaschierten Hauptflächenabschnitten abgewandt ist.

Dies gestattet es auf vorteilhafte Art und Weise, auch kritische Werkstückbereiche, die mit dem beweglichen Anpreßelement nicht oder nicht vollständig zu erfassen sind, wie zum Beispiel schmale Plattenseitenränder, tiefe Einbuchtungen, Hinterschneidungen oder ähnlich geformte Werkstückbereiche, die sich insbesondere in einem recht scharfen Winkel relativ zur Plattenhauptebene erstrecken, formgenau und mit einer hohen Fertigungsqualität in einem einzigen Durchlauf mit dem Beschichtungsmaterial dreidimensional zu kaschieren. Das Tiefziehen ermöglicht hierbei einen hohen Verformungsgrad des Beschichtungsmaterials, der durch die Verformungswirkung des vorgeschalteten beweglichen Anpreßelement noch weiter gesteigert werden kann. Diesbezüglich ist hervorzuheben, daß das bewegliche Anpreßelement das Beschichtungsmaterial an den hier zu betrachtenden kritischen Werkstückbereichen zwar nicht selbst vollständig in den endgültigen Verformungszustand bringen kann, jedoch bereits ein Vorformen bewirkt, so daß in Kombination mit dem anschließenden Tiefziehen selbst bei erheblichen Formänderungen ein Versagen bzw. Reißen des Beschichtungsmaterials sicher vermieden werden kann; auf diese Weise ist ein optimaler Verformungszustand realisierbar. Das ermöglicht es, selbst komplizierte Werkstücke in einem Arbeitsgang mit einer großen Produktionsgeschwindigkeit präzise und in einem kontinuierlichen Ablauf bei einer hervorragenden Reproduzierbarkeit automatisch zu kaschieren. Somit kann ein enormer weiterer Rationalisierungseffekt erzielt und ein qualitativ hochwertiges Produkt äußerst wirtschaftlich hergestellt werden.

In Schritt d) des erfindungsgemäßen Verfahrens werden vorzugsweise im wesentlichen Beschichtungsmaterialbereiche tiefgezogen werden, die bezogen auf eine auf die Stützebene projizierte Grundfläche eines in Schritt c) vorkaschierten Werkstücks seitlich über die Grundfläche hinausragen.

Ferner ist vorgesehen, dass in Schritt d) im wesentlichen Beschichtungsmaterialbereiche tiefgezogen werden, die innerhalb der Grundfläche eines in Schritt c) vorkaschierten Werkstücks liegen.

Das Tiefziehen des Beschichtungsmaterials kann zudem im wesentlichen in eine in Bezug auf die vorkaschierte Werkstückoberfläche entgegengesetzte Richtung erfolgen.

zweckmäßigerweise werden das Werkstück und/oder das Beschichtungsmaterial vor und/oder während des Tiefziehens erwärmt.

Vorzugsweise wird das Werkstück nach dem Tiefziehen gekühlt.

Das oben genannte technische Problem wird des weiteren gelöst durch eine erfindungsgemäße Vorrichtung mit den Merkmalen des Patentanspruchs 41.

Diese Vorrichtung zum Kaschieren von plattenförmigen Werkstücken, deren Oberfläche bezogen auf eine Werkstücklängsund Breitenrichtung unterschiedlich orientierte Profilierungen aufweist, mit einem flexiblen fixierfähigen Beschichtungsmaterial, umfaßt eine Werkstück-Stützeinrichtung, die eine Stützebene bildet, auf der das Werkstück abgestützt bewegbar ist, eine Werkstück-Bewegungseinrichtung zum fortlaufenden Bewegen des Werkstückes in einer vorbestimmten Durchlaufrichtung auf der Stützebene, eine Beschichtungsmaterial-Zuführeinrichtung und eine Beschichtungsmaterial-Auflegeeinrichtung zum Zuführen und Auflegen des Beschichtungsmaterials auf die zu beschichtende Oberfläche des fortlaufend bewegten Werkstückes, und eine Anpreßeinrichtung zum Anpressen des Beschichtungsmaterials auf die zu beschichtende Oberfläche, wobei die Anpreßeinrichtung mindestens ein während des Anpreßvorgangs bewegbares Anpreßelement besitzt, das wenigstens einen dem Beschichtungsmaterial und der zu beschichtenden Oberfläche zugeordneten elastischen Anpreßkörper aufweist, der das Beschichtungsmaterial fortlaufend an die zu beschichtende Oberfläche und deren unterschiedlich orientierte Profilierungen angeschmiegt, angedrückt und fixiert. Die von der Werkstück-Stützeinrichtung gebildete Stützebene ist vorzugsweise plan und in der Draufsicht geradlinig, sie kann jedoch grundsätzlich auch gekrümmt und/oder in der Draufsicht kurvenförmig sein. Mit Hilfe der gekrümmten Stützebene sind sogar einfach gekrümmte plattenförmige Werkstücke mittels der erfindungsgemäßen Vorrichtung kaschierbar.

Die erfindungsgemäße Vorrichtung bietet ebenfalls die bereits weiter oben im Zusammenhang mit dem erfindungsgemäßen Verfahren erläuterten Vorteile. Darüber hinaus ist es als positiv herauszustellen, daß die Vorrichtung bezogen auf die Abmessungen der zu verarbeitenden Werkstücke trotz Ihrer Durchlaufstrecke relativ kompakt ausgebildet werden kann und kaum größere Baumaße als eine konventionelle Membranpresse aufweist, dieser gegenüber jedoch eine erheblich größere Werkstückanzahl pro Zeiteinheit bearbeiten kann. Ferner ist die erfindungsgemäße Vorrichtung einfach an weitere Durchlaufbearbeitungsmaschinen, zum Beispiel zur spanenden Bearbeitung der kaschierten Werkstücke, anschließbar.

Ein vorteilhaftes Ausgestaltungsmerkmal der erfindungsgemäßen Vorrichtung sieht vor, daß diese mindestens eine Trenneinrichtung zum Trennen des zugeführten und auf die zu beschichtende Oberfläche der fortlaufend bewegten Werkstücke aufgelegten Beschichtungsmaterials aufweist. Vorzugsweise ist die Trenneinrichtung bezogen auf die Werkstückdurchlaufrichtung vor der Anpreßeinrichtung angeordnet. Das mit dem Werkstück durch die Anpreßeinrichtung laufende Werkstück kann dann kurz hinter dem Werkstückende abgetrennt werden, so daß jedes Werkstück gewissermaßen seinen eigenen Beschichtungsmaterialabschnitt besitzt und somit leichter zu handhaben und auch weniger anfällig gegen Beschädigungen ist. Des weiteren kann die Trenneinrichtung bezogen auf die Werkstückdurchlaufrichtung hinter der Anpreßeinrichtung angeordnet ist. Die Trenneinrichtungen gestatten es, das Beschichtungsmaterial bei Bedarf sowohl vor als auch nach dem Anpreß-, Anschmige- und Fixiervorgang abzutrennen bzw. überstehendes Material zu entfernen.

Eine weitere Ausgestaltungsvariante der erfindungsgemäßen Vorrichtung sieht vor, daß das mindestens eine bewegbare Anpreßelement stationär gehalten ist. Beispielsweise könnte das Anpreßelement also in einer relativ zum durchlaufenden Werkstück stationär an der Durchlaufstrecke angeordneten Halterung rotatorisch beweglich fixiert sein. Für bestimmte Anwendungsfälle hat es sich jedoch auch als vorteilhaft herausgestellt, daß das mindestens eine bewegbare Anpreßelement an einer beweglichen Halteeinrichtung gehalten ist. Zum Beispiel könnte die bewegliche Halteeinrichtung in einer Führungschiene oder dergleichen in einer geeigneten Richtung relativ zum fortschreitenden Werkstück fortbewegt werden, während das mit der Halterung mitbewegte Anpreßelement eine Eigenbewegung ausführt.

Wird das an der beweglichen Halteeinrichtung gehaltene bewegbare Anpreßelement in einer zu der Werkstückdurchlaufrichtung und/oder der Stützebene im wesentlichen senkrechten und/oder schrägen Richtung beweglich gehalten, so läßt sich das Anpreßelement und der damit ausgeübte Anpreßdruck besonders einfach und effektiv an verschiede Werkstückabmessungen und Profilierungen anpassen. Hierbei kann entweder eine für den gesamten Kaschierungsbetrieb beizubehaltende Einstellung gewählt oder aber auch durch eine im laufenden Betrieb variierende Höhenverstellung des Anpreßelementes in senkrechter und/oder schräger Richtung eine permanente Anpassung an die jeweiligen Werkstückbasisquerschnittshöhen bzw. die Profilierungsgeometrie der Werkstücke erzielt werden.

Ein weiteres vorteilhaftes Ausgestaltungsmerkmal der erfindungsgemäßen Vorrichtung sieht vor, daß das beweglich gehaltene Anpreßelement mit einer Vorspanneinrichtung gekoppelt ist, die das Anpreßelement durch eine Vorspann- bzw. Rückstellkraft in Richtung zur Stützebene und damit zur Werkstückoberfläche hin drückt. Die Vorspannkraft kann hierbei einen vorbestimmten, fest eingestellten Betrag besitzen oder aber variabel einstellbar sein. Beim Durchlauf von Werkstücken mit unterschiedlichen Basisquerschnittshöhen oder unterschiedlich profilierten Werkstückbereichen durch die Anpreßeinrichtung stellt sich somit eine automatische bzw. selbsttätige Veränderung und Anpassung des Anpreßdrucks ein.

Gemäß einer weiteren besonderen Ausgestaltungsform der erfindungsgemäßen Vorrichtung ist das bewegbare Anpreßelement über zumindest einen Teilbereich eines Werkstück-Durchlaufabschnittes in Werkstück-Durchlaufrichtung mit dem Werkstück mitbewegbar. Dies gestattet es beispielsweise, bei Bedarf eine Relativbewegung zwischen dem bewegten Werkstück und dessen zu kaschierender Oberfläche sowie dem mitbewegten Anpreßelement bzw. dessen Anpreßkörper auszuschalten und während der andauernden Werkstückdurchlaufbewegung auch mit einem einzelnen Anpreßelement eine besonders lange Anpreßdauer zu erzielen.

Das bewegbare Anpreßelement ist zweckmäßigerweise mit mindestens einer Überholfreilaufeinrichtung ausgestattet, so daß das Anpreßelement nicht blockieren kann.

Bei einer besonders bevorzugten Variante der erfindungsgemäßen Vorrichtung ist das bewegbare Anpreßelement als Kaschierwalze ausgebildet, die einen als Anpreßkörper fungierenden elastischen Walzenmantel besitzt. Die Kaschierwalze ermöglicht aufgrund ihrer zylindrischen Form die Ausführung einer Rotationsbewegung und damit eines fortlaufenden Abwälzens des elastischen Walzenmantels auf der profilierten Werkstückoberfläche und dem aufzukaschierenden Beschichtungsmaterial. Die Kaschierwalze ist sowohl für eine Anordnung in einer stationären Halterung als auch in einer relativ zum fortschreitenden Werkstück fortbewegbaren Halterung bestens geeignet. Zudem ist die Werkstücklänge bei der Verwendung einer Kaschierwalze nicht begrenzt, da der Walzenmantel fortlaufend auf der mit dem aufzukaschierenden Beschichtungsmaterial versehenen Werkstückoberfläche abrollt und dabei einen Anpreßdruck aufbringt. Das Beschichtungsmaterial wird somit auf effektive Art und Weise kontinuierlich an die zu beschichtende Oberfläche und deren unterschiedlich orientierte Profilierungen angeschmiegt, angedrückt und fixiert. Grundsätzlich sind in Relation zu den Abmessungen der Werkstückprofilierungen größere Walzendurchmesser mit einer dementsprechend größeren Kontaktfläche vorzuziehen. Sofern die Kaschierwalze erwärmt wird, bietet ein größerer Durchmesser auch eine höhere Wärmespeicherkapazität des Walzenkörpers und des Walzenmantels.

Kleine Walzendurchmesser eignen sich hingegen gut, um beispielsweise das Beschichtungsmaterial in einem einzigen Schritt stark zu verformen und an besonders tiefe, schmale Profilierungen anzuschmiegen, anzudrücken und zu fixieren. Für die Beschaffenheit des Walzenmantels gilt das nachfolgend im Zusammenhang mit dem Anpreßkörper Gesagte.

Das bewegbare Anpreßelement kann im Sinne der Erfindung indes auch bandartig ausgebildet sein, wobei die der zu beschichtenden Werkstückoberfläche zugeordnete Bandseite mit einem aus einem einheitlichen oder mehrstückigen Anpreßkörperteil gebildeten Anpreßkörper versehen ist. Vorzugsweise ist diese Anpreßelementart als endlos umlaufendes Band ausgestaltet. Die Längsrichtung des Bandes erstreckt sich hierbei vorzugsweise im wesentlichen parallel zur Durchlaufrichtung, so daß eine Bandseite stets in oder entgegen der Durchlaufrichtung verläuft. Durch die bandartige langgestreckte Ausgestaltung des Anpreßelementes läßt sich während des Werkstückdurchlaufs eine besonders lange Kontaktzeit eines Werkstückflächen- bzw. Beschichtungsmaterialabschnitts mit den Anpreßkörperteilen bzw. dem Anpreßkörper und folglich eine lange Anpreßdauer erzielen.

Analog zu dem zuvor beschriebenen bandartigen Anpreßelement kann dieses auch kettenartig ausgebildet sein und Kettengliedelemente besitzen, deren der zu beschichtenden Werkstückoberfläche zugeordnete Seite mit einem oder mehreren Einzel-Anpreßkörpern versehen ist. Die mit diesem kettenartigen Anpreßelement erzielbaren Effekte sind im wesentlichen die gleichen wie bei dem besagten Anpreßband.

Bei einem noch anderen Ausgestaltungsmerkmal der erfindungsgemäßen Vorrichtung ist das bewegbare Anpreßelement platten- oder rahmenförmig ausgebildet und an seiner der zu beschichtenden Werkstückoberfläche zugewandten Seite mit einem oder mehreren Einzel-Anpreßkörpern versehen. Diese Variante ist besonders in einem solchen Anwendungsfall sehr vorteilhaft einzusetzen, bei dem das gesamte Anpreßelement und nicht nur dessen Anpreßkörper über zumindest einen Teilbereich eines Werkstück-Durchlaufabschnittes in Werkstück-Durchlaufrichtung mit dem Werkstück mitbewegt wird. Der Anpreßkörper kann hierbei beispielsweise als Membran oder Druckkissen ausgestaltet sein. Der Unterschied zu bekannten Membranpressen besteht indes darin, daß das gesamte Anpreßelement mit seinem Anpreßkörper zumindest während der Zeitdauer, in der das Beschichtungsmaterial an die Werkstückoberfläche angeschmiegt, angedrückt und fixiert wird, zusammen mit dem Werkstück in Durchlaufrichtung fortbewegt wird. Jedoch auch das Anlegen und Entfernen des Anpreßkörpers kann bei der erfindungsgemäßen Vorrichtung während des Durchlaufs erfolgen, ohne daß dafür ein Anhalten des Werkstückes erforderlich ist. Es ist lediglich eine Synchronisation zwischen der Werkstückbewegung und der Anpreßelementbewegung notwendig, was aufgrund des Umstandes, daß das Anpreßelement in Werkstück-Durchlaufrichtung mit dem Werkstück mitbewegt wird, einfach durch eine Abstimmung der Anpreßelementfortschrittsgeschwindigkeit auf die Durchlaufgeschwindigkeit erfolgen kann.

Bei einer weiteren Modifikation der erfindungsgemäßen Vorrichtung sind mindestens zwei in Durchlaufrichtung des Werkstückes betrachtet hintereinander angeordnete bewegbare Anpreßelemente vorgesehen. Der Abstand der benachbarten, hintereinander angeordneten Anpreßelemente in Durchlaufrichtung wird in Abhängigkeit der jeweils gegebenen Geometrie und - abmessung der Anpreßelemente, des Werkstückes und seiner Profilierungen sowie der Durchlaufgeschwindigkeit und der Eigenschaften des Beschichtungsmaterials sowie des verwendeten Fixiermittels gewählt. Die jeweiligen Anpreßelemente können gleichartig oder auch unterschiedlich ausgestaltet sein. Ein gleiches gilt für ihre Anpreßkörper. Werden also beispielsweise mehrere Kaschierwalzen hintereinander angeordnet, so können diese gleiche oder aber auch unterschiedliche Walzendurchmesser mit gleichdicken oder unterschiedlich dicken Walzenummantelung aufweisen, wobei auch die Ummantelungen gleiche oder unterschiedliche Eigenschaften besitzen dürfen. Die zuvor genannte Anordnungsart kann generell sowohl bei stationär gehaltenen als auch bei in einer beweglichen Halterung befestigten bewegbaren Anpreßelementen eingesetzt werden; sie ermöglicht in aufeinanderfolgen Einzelschritten eine gezielte Einflußnahme auf das Beschichtungsmaterial und die Werkstückoberfläche. Vornehmlich bei der Verwendung von Kaschierwalzen, die zwar für Werkstücke unbegrenzter Länge einsetzbar sind, jedoch während des schnellen Werkstückdurchlaufs nur mit einem relativen schmalen Walzenmantelabschnitt mit dem Beschichtungsmaterial beziehungsweise der Werkstückoberfläche in Kontakt kommen, kann somit eine längere Kontaktzeit zum Erwärmen, Verformen, Anschmiegen, Anpressen und Fixieren des Beschichtungsmaterials erreicht werden. Dies ist besonders auch bei komplexen Profilierungen oder schwer verformbaren oder fragilen Beschichtungsmaterialien von Vorteil.

Die erfindungsgemäße Vorrichtung ist auch zum gleichzeitigen beidseitigen Kaschieren eines Werkstückes geeignet und weist zu diesem Zweck mindestens zwei auf gegenüberliegenden Seiten der Stützebene angeordnete Anpreßelemente auf. Die gegenüberliegende Anordnung kann hierbei sowohl direkt sein als auch einen seitlichen Versatz aufweisen. Das beidseitig zu kaschierende Werkstück läuft während des Anpreßvorgangs also entweder zwischen den gegenüberliegenden Anpreßelementen hindurch oder wird zumindest über einen Teilbereich der Durchlaufstrecke zwischen zwei gegenüberliegenden Anpreßelementen eingepreßt fortbewegt. Die für das beidseitige Kaschieren vorgesehene Anordnungsvariante der Anpreßelemente läßt sich darüber hinaus mit der zuvor beschriebenen, in Durchlaufrichtung der Werkstücke hintereinander liegenden Anordnung der Anpreßelemente kombinieren. Mit Hilfe dieser erfindungsgemäßen Vorrichtungsmerkmale können sogar beidseitig mit 3D-Profilierungen versehene Werkstücke besonders schnell und wirtschaftlich doppelseitig im Durchlauf kaschiert werden.

Das mindestens eine bewegbare Anpreßelement der erfindungsgemäßen Vorrichtung ist vorzugsweise motorisch angetrieben, wobei der Antrieb bei mehreren Anpreßelementen auch in Gruppen erfolgen kann. Dies ermöglichst es, die Werkstücke auf relativ einfache Art und Weise mit Hilfe des mindestens einen Anpreßelementes durch die Durchlaufstrecke zu bewegen, ohne daß dafür eine separate Werkstück-Transporteinrichtung erforderlich ist. Alternativ dazu ist natürlich ebenso möglich die Werkstücke motorisch über eine entsprechende Werkstück-Transporteinrichtung fortzubewegen und das bewegbare Anpreßelement antriebslos auszugestalten; die Bewegung des Anpreßelementes kann sich dann beispielsweise durch ein Zusammenwirken mit den durchlaufenden Werkstücken ergeben.

Hinsichtlich der Ausgestaltung des Anpreßkörpers des bewegten Anpreßelementes der erfindungsgemäßen Vorrichtung haben sich nachfolgende Ausgestaltungsformen als besonders vorteilhaft erwiesen.

Die Breite des Anpreßkörpers, die sich in der Regel rechtwinklig zur Werkstückdurchlaufrichtung und in Breitenrichtung der Vorrichtung erstreckt, ist vorzugsweise größer gleich der Werkstückbreite. Diese Konfiguration ist sowohl mit einem einzelnen Anpreßelement als auch mit mehreren in Druchlaufrichtung hintereinander angeordneten Anpreßelementen möglich. Auf diese Weise kann für eine vorgegebene maximale Werkstückbreite bereits mit einem einzelnen Anpreßelement eine Vielzahl von unterschiedlich breiten Werkstücken ohne weitere Umrüstarbeiten beschichtet werden. Ergänzend ist anzumerken, daß die Breite des Anpreßkörpers üblicherweise weitgehend mit der Breite des Anpreßelementes korrespondiert, das den Anpreßkörper trägt bzw. diesem zugeordnet ist.

Es ist auch eine erfindungsgemäße Vorrichtungskonstruktion denkbar, bei der mehrere in Durchlaufrichtung hintereinander angeordnete Anpreßelemente jeweils einen Anpreßkörper besitzen, dessen Breite kleiner als die Werkstückbreite ist, wobei die Anpreßkörper zusammen oder bei Betrachtung in Durchlaufrichtung einander seitlich überlappend die Werkstückbreite überdecken. Obwohl die Breite jedes einzelnen Anpreßkörpers also geringer also die Werkstückbreite ist, kann mit dieser Lösung dennoch die gesamte Werkstückoberfläche bearbeitet werden.

Ein anderes vorteilhaftes Vorrichtungsmerkmal ist es, daß der elastische Anpreßkörper des Anpreßelementes während des Anpreßvorgangs relativ zum bewegten Werkstück bewegbar ist. Dadurch kann der Anpreßkörper bei geeigneter Formgebung zum Beispiel bei einem stationär angeordneten Anpreßelement auf der Werkstückoberfläche abrollen oder bei einem in einer beweglichen Halterung fixierten und relativ zum Werkstück fortbewegten Anpreßelement eine Eigenbewegung ausführen. Diese Anpreßkörpervariante ist besonders für ein kontinuierliches Anschmiegen, Andrücken und Fixieren des Beschichtungsmaterials bei hohen Durchlaufgeschwindigkeiten geeignet.

Der elastische Anpreßkörper des Anpreßelementes kann bei bestimmten Anwendungsfällen indes auch für eine während des Anpreßvorgangs relativ zum bewegten Werkstück stillstehende Anordnung ausgebildet sein. Hierbei nimmt der Anpreßkörper beispielsweise die Form eines Druckkissens oder einer elastischen Membran an. Diese Anpreßkörperarten finden hauptsächlich in Zusammenhang mit Anpreßelementen Anwendung, die über zumindest eine Teilstrecke mit dem Werkstück in Durchlaufrichtung mitbewegt werden während der dann relativ zum Werkstück stillstehende Anpreßkörper das Beschichtungsmaterial an die Werkstückoberfläche andrückt, anschmiegt und fixiert.

Für relativ zum Werkstück bewegbare elastische Anpreßkörper hat es sich bewährt, daß diese rotationssymmetrisch ausgebildet sind und somit zusammen mit dem zugehörigen Anpreßelement eine vorzugsweise kontinuierliche Rotationsbewegung ausführen können. Eine rotationssymmetrische Form umfaßt im übrigen auch polygonale oder sternförmige Gestalten mit entsprechenden Vorsprüngen und/oder Einbuchtungen und dergleichen. Primär bei einem in der Gestalt einer Kaschierwalze oder Rolle geformten Anpreßelement ist es sinnvoll, den rotationssymmetrischen elastischen Anpreßkörpern zylindermantelförmig auszugestalten. Bei einer sich drehenden Kaschierwalze bietet sich dem durchlaufenden Werkstück somit stets eine konstante Anpreßkörperschichtdicke, was in den meisten Anwendungsfällen zu guten Kaschierergebnissen führt.

Zum Kaschieren von Werkstücken, die eine in Durchlaufrichtung gesehen stark variierende Basisquerschnittshöhe und/oder sich vorwiegend in Durchlaufrichtung erstreckende Profilierungen aufweisen, hat es sich des weiteren als positiv herausgestellt, daß die Erzeugende des rotationssymmetrischen elastischen Anpreßkörpers der in Durchlaufrichtung betrachteten Kontur der Werkstücke angepaßt ist. Dies ermöglicht nicht nur die Durchlaufkaschierung von komplexeren plattenförmigen Werkstücken, sondern grundsätzlich auch von Werkstücken mit einer an sich vorprofilierten Querschnittsform. Unter dem letztgenannten Begriff "vorprofiliert" ist hierbei nicht die besagte 3D-Profilierung, sondern die Querschnittsgestalt des Werkstückes als solche zu verstehen; die Werkstückoberfläche eines derartigen Werkstückes kann selbstverständlich wiederum mit den besagten 3D-Profilierungen versehen sein.

Im Sinne der Erfindung kann die der Werkstückoberfläche zugeordnete Seite des elastischen Anpreßkörpers auch mit einer Struktur und/oder Textur versehen sein. Das heißt, die Anpreßkörperoberfläche kann beispielsweise Poren, Noppen, Einbuchtungen, Gewebe, Fasern und dergleichen aufweisen. Auf diese Weise lassen sich unter Berücksichtigung der jeweiligen Werkstückoberfläche bestimmte Andrück-, Anschmiege- und Fixiereigenschaften erzielen.

Erfindungsgemäß werden sowohl einschichtige als auch mehrschichtig aufgebaute elastische Anpreßkörper bereitgestellt. Ein mehrschichtig aufgebauter Anpreßkörper kann hierbei entweder aus gleichartigen oder aber unterschiedlichen elastischen Werkstoffen hergestellt sein. Auch ist es in diesem Zusammenhang vorgesehen, daß die einzelnen Schichten des mehrschichtig aufgebauten Anpreßkörpers jeweils eine im wesentlichen gleiche oder aber unterschiedliche Elastizität aufweisen. Ferner können die jeweiligen Schichten eine im wesentlichen gleiche oder unterschiedliche Härte sowie gleiche und/oder unterschiedliche Dicken besitzen. Die vorhergenannten erfindungsgemäßen Maßnahmen dienen insbesondere der Herstellung eines Anpreßkörpers mit einer bestimmten Elastizität und Federeigenschaft und somit der Beeinflussung der mit diesem Anpreßkörper erzielbaren Anschmiege-, Andrück- und Fixiereigenschaften.

Gemäß einen noch weiteren bevorzugten Ausgestaltungsmerkmal der erfindungsgemäßen Vorrichtung ist die Dicke des elastischen Anpreßkörpers größer gleich der maximalen Tiefe und/oder Höhe einer Profilierung des Werkstückes. Dies gewährleistet, daß sich der Anpreßkörper in ausreichendem Maße den Profilierungen des Werkstückes anpassen kann und sämtliche Profilierungen sicher kaschiert werden.

Bei einer Sonderform des Anpreßkörpers ist dieser mit mindestens einem schwellkörperartigen Verformungsabschnitt ausgestattet, der unter Einwirkung eines Wirkmediums über die betriebliche Ausgangsform des Anpreßkörpers hinaus verformbar ist, so daß der Anpreßkörper zumindest zeitweilig in eine Profilierungsvertiefung hinein wirkend und/oder sich einer Profilierungserhebung anpassend verformbar ist. Unter der betrieblichen Ausgangsform wird im Sinne der Erfindung diejenige Gestalt des Anpreßkörpers verstanden, die dieser üblicherweise im Stillstand oder bei einem normalen Betriebszustand aufweist, in dem der schwellkörperartige Verformungsabschnitt deaktiviert ist. Handelt es sich bei dem Anpreßkörper beispielsweise um die elastische Ummantelung einer als Anpreßelement fungierenden zylindrischen Kaschierwalze, so ist die betriebliche Ausgangsform die übliche kreisförmige Querschnittsform der Walze. Der schwellkörperartige Verformungsabschnitt kann beim Beispiel der vorhergenannten Kaschierwalze etwa als ein in die elastische Ummantelung integrierter oder unterhalb der Ummantelung vorgesehener Hohlraum ausgebildet sein, der über ein gasförmiges oder flüssiges Medium - oder auch auf andere Weise (z.B. elektromagnetisch) - mit unterschiedlichen Drücken beaufschlagbar ist, so daß sich die elastische Ummantelung im Bereich des Hohlraumes nach außen und/oder innen verformt und somit beispielsweise eine Aus- oder Einbeulung am Umfang des Walzenmantels bildet. Auf diese Weise kann sich der Anpreßkörper auch während eines raschen Werkstückdurchlaufs an besonders diffizile Profilierungen anpassen. Die Aktivierung bzw. Deaktivierung des schwellkörperartigen Verformungsabschnitts erfolgt zweckmäßigerweise über eine geeignete Steuer- und/oder Regeleinrichtung.

Die Eigenschaften des elastisches Materials, aus dem der elastische Anpreßkörper hergestellt ist, sind für die mit der erfindungsgemäßen Vorrichtung erzielbaren guten Kaschierungsergebnisse von besonderer Bedeutung. Bevorzugte Materialien für den elastischen Anpreßkörper sind daher reversibel verformbare Elastomerwerkstoffe, zum Beispiel Gummi oder dergleichen. Der Anpreßkörperwerkstoff sollte hierbei unter Berücksichtigung der Werkstoffeigenschaften des zu kaschierenden Werkstückes und des Beschichtungsmaterials ausreichend verschleißfest und nach Möglichkeit in einem vorgegebene Temperaturbereich auch hitzebeständig sein. Der elastische Anpreßkörper ist aus mindestens einem solchen Elastomerwerkstoff angefertigt und kann selbstverständlich auch entsprechende Komposite aufweisen.

Bezüglich der Shore-Härte des Elastomerwerkstoffs des elastischen Anpreßkörpers hat sich ein Bereich von 15 bis 80 Shore bewährt, wobei hier wiederum folgende Bereiche bevorzugt sind: 20 bis 60 Shore, 20 bis 40 Shore, 21 bis 30 Shore, sowie als Einzelwert besonders 26 Shore.

Als weiteres Ausgestaltungsmerkmal der erfindungsgemäßen Vorrichtung weist die Werkstück-Stützeinrichtung mindesten zwei in Durchlaufrichtung des Werkstückes gesehen hintereinander angeordnete Stützwalzen auf. Diese Stützwalzen sind im Hinblick auf die bei dem zu beschichtenden Werkstück angestrebten Bearbeitungsgenauigkeiten im wesentlichen unnachgiebig und weitgehend starr ausgestaltet, so daß sie für die auf den Walzen fortbewegten Werkstücke eine formhaltige plane (bei drei oder mehreren Walzen sogar auch gekrümmte) Stützebene bilden. Bei vorgegebenen Walzenbreiten sind daher auch bestimmte Mindestwalzendurchmesser einzuhalten. Die Stützwalzen können aus Metallwerkstoffen, wie zum Beispiel Stahl, oder beliebigen anderen, den genannten Anforderungen entsprechenden Werkstoffen und Werkstoffkombinationen hergestellt sein. Die Werkstück-Stützeinrichtung kann anstelle der genannten Stützwalzen oder zusätzlich dazu jedoch auch mindestens einen Gleit- und Stützkörper aufweisen, zum Beispiel eine Gleitplatte oder dergleichen. Eine solche Stützeinrichtung ist konstruktiv besonders einfach und kostengünstig herzustellen und für diverse Anwendungsfälle geeignet.

Außerdem ist es erfindungsgemäß vorgesehen, daß die Werkstück-Stützeinrichtung durch mindestens einen Teil einer Werkstück-Transporteinrichtung gebildet ist. Die Werkstück-Bewegungseinrichtung übernimmt hier also gleichzeitig die Funktion einer Stützeinrichtung und umgekehrt. Im Falle der zuvor erwähnten Stützwalzen könnten diese beispielsweise motorisch angetrieben und in Rotation versetzt sein und die Werkstücke über die von den Walzenaußendurchmessern gebildete Stützebene transportieren.

Einer weiteren erfindungsgemäßen Detaillösung entsprechend kann von den mindestens zwei zum beidseitigen Kaschieren eines Werkstückes auf gegenüberliegenden Seiten der Stützebene vorgesehenen Anpreßelementen mindestens eines einen Teil der Werkstück-Stützeinrichtung bilden. Mit anderen Worten übernehmen hier also die Anpreßelemente selbst zumindest einen Teil der Stützfunktion für das durchlaufende Werkstück und tragen aufgrund dieser vorteilhaften Doppelfunktion gleichzeitig zur Bildung und Stabilisierung er Stützebene bei.

Bei mehreren auf einer Seite der Stützebene in Durchlaufrichtung hintereinander angeordneten Anpreßelementen ist es auch von Vorteil, daß zwischen mindestens Zweien dieser Anpreßelemente mindestens ein Zwischenstützelement angeordnet ist, das zumindest einen Teil der Stützebene bildet. Bei einem Zwischenstützelement kann es sich im Sinne der Erfindung beispielsweise um mindestens eine weitere Stützwalze oder eine Stützfläche handeln; Die einzelnen Zwischenstützwalzen oder Zwischenstützflächen können hierbei sowohl gleiche als auch unterschiedliche Abmessungen, Formgebungen und/oder Stützeigenschaften aufweisen. Durch ein Zwischenstützelement kann die Stützweite zwischen zwei benachbarten Anpreßelementen reduziert und damit auch eine durch die Stütz- und Andrückkräfte unerwünschte Durchbiegung des plattenförmigen Werkstückes verhindert oder auf ein vertretbares Maß verringert werden.

Ein wiederum anderes Ausgestaltungsmerkmal der erfindungsgemäßen Vorrichtung sieht vor, daß das Anpreßelement und die Stützeinrichtung zusammenwirkend einen Werkstück-Durchgangsspalt mit einer Durchgangshöhe bilden, die geringer ist als die Basisquerschnittshöhe des durch den Spalt in Durchlaufrichtung hindurch zu führenden Werkstücks. Im Falle der Verwendung einer als Anpreßelement fungierenden Kaschierwalze bzw. Anpreßwalze sowie mindestens einer als Stützeinrichtung dienenden Stützwalze könnte der besagte Durchgangsspalt also beispielsweise durch den fest vorgegebenen oder variabel einstellbaren radialen Abstand zwischen den Mantelflächen der sich gegenüberliegenden Kaschierwalze und der Stützwalze gebildet werden. Beim Durchlauf des Werkstückes durch den Durchgangsspalt wird somit der Anpreßkörper, d.h. hier die Ummantelung der Kaschierwalze, in Kontakt mit der Werkstückoberfläche und dem darauf aufgelegten Beschichtungsmaterial elastisch zusammengedrückt, wodurch das entsprechend präparierte Beschichtungsmaterial an die Werkstückoberfläche und deren Profilierungen angeschmiegt, angedrückt und fixiert wird. Es ist an dieser Stelle anzumerken, daß ein Durchgangsspalt im Sinne der Erfindung selbst dann vorliegen kann, wenn sich die Umfangsfläche der unnachgiebigen Stützwalze und die Ummantelung der Kaschierwalze berühren und/oder die Ummantelung hierbei bereits zu einem gewissen Grad elastisch verformt ist. Der Grund dafür liegt darin, daß der Durchgangsspalt während des Durchlaufs des Werkstückes gewissermaßen dynamisch durch die elastische Deformation der Ummantelung gebildet wird. Die zulässige minimale Durchgangshöhe des Spaltes ist dann erreicht, wenn entweder keine verarbeitungstechnisch sinnvolle Deformation der elastischen Walzenummantelung mehr möglich ist, oder bei maximal zulässiger Deformation die resultierende Durchgangshöhe kleiner (gleich) der maximalen Basisquerschnittshöhe des Werkstückes ist, oder die elastischen Rückstellkräfte so groß werden, daß es zu einer Beschädigung der Werkstückoberfläche und/oder des Beschichtungsmaterials kommt.

Wie bereits weiter oben in Verbindung mit dem erfindungsgemäßen Verfahren angedeutet, ist es für die Verarbeitung bestimmter Beschichtungsmaterialien und Fixiermittel von Vorteil, die Werkstückoberfläche und/oder das Beschichtungsmaterial vor und/oder während des von dem Anpreßelement ausgeführten Anpreßvorgangs zu erwärmen. Zu diesem Zweck ist in der erfindungsgemäßen Vorrichtung dem Anpreßelement zumindest eine Heizeinrichtung zum Erwärmen des elastischen Anpreßkörpers zugeordnet. Die Heizleistung der jeweiligen Heizeinrichtung ist vorzugsweise individuell einstellbar. Hierbei umfaßt die Einstellbarkeit im Sinne der Erfindung nicht nur eine manuelle oder automatische Einstellung, sondern auch eine Steuerung und/oder Regelung mittels einer geeigneten Steuer- und/oder Regeleinrichtung.

Gemäß einem Aspekt der Erfindung ist es vorgesehen, die Heizeinrichtung in das Anpreßelement zu integrieren. Bei einem als hohle Kaschierwalze ausgebildeten Anpreßelement könnten also zum Beispiel im Walzeninneren elektrische Heizelemente vorgesehen sein oder das Walzeninnere könnte von einem gasförmigen oder flüssigen Heizmedium durchströmt werden. Statt dessen oder zusätzlich dazu ist es möglich, die Heizeinrichtung dem Anpreßelement gegenüberliegend anzuordnen. Die Heizeinrichtung ist also von dem Anpreßelement getrennt. Bei einer solchen Heizeinrichtung kann es sich beispielsweise um eine Heizmatte oder einen Heizstrahler handeln, der auf die elastische Ummantelung der Kaschierwalze gerichtet ist.

In Zusammenhang mit der letztgenannten Heizeinrichtungsvariante hat es sich als besonders vorteilhaft herausgestellt, daß die Heizeinrichtung mit mindestens einem Stellglied gekoppelt und von einer von dem Anpreßkörper entfernten Stand-by- und/oder Nothaltposition zu dem Anpreßkörper hin in eine Betriebsposition und wieder zurück bewegbar ist. Als Stellglieder können z.B. Pneumatikzylinder, Hydraulikzylinder, Elektromotoren und dergleichen dienen. Auf diese Weise kann die Heizeinrichtung gezielt an den thermisch empfindlichen elastischen Anpreßkörper herangefahren und dessen Erwärmung bei konstanter Heiztemperatur über den Abstand eingestellt werden; ferner ist die Heizeinrichtung bei Bedarf wieder leicht zu entfernen.

Im laufenden Betrieb befindet sich der über die Heizeinrichtung erwärmte elastische Anpreßkörper in nahezu permanentem Kontakt mit dem Beschichtungsmaterial und der Werkstückoberfläche, so daß stets ein Wärmeübergang und damit eine Wärmeabfuhr von dem Anpreßkörper vorhanden ist. Dementsprechend wird die Heizeinrichtung während des Kaschiervorgangs relativ nahe an die Oberfläche des elastischen Anpreßkörper herangefahren. Im Falle einer Maschinenfehlfunktion, bei sehr großen Werkstückabständen oder einfach bei Beendigung des Durchlaufs einer Charge Werkstücke kann die Wärmeabfuhr jedoch abrupt unterbrochen werden, so daß ohne weitere Gegenmaßnahmen eine rasche thermische Schädigung des elastischen Anpreßkörpers eintreten wird. Die erfindungsgemäße Vorrichtung sieht deshalb vor, daß die Heizeinrichtung direkt und/oder indirekt mit einer Nothalteinrichtung verbunden ist, die eine mit dem Stellglied verbundene Steuer- und/oder Regeleinheit und einen dem Anpreßkörper zugeordneten und mit der Steuer- und/oder Regeleinheit verbundenen Temperatursensor aufweist, der bei Überschreiten einer vorbestimmten Grenztemperatur ein Signal an die Steuer- und/oder Regeleinheit und damit die Heizeinrichtung und/oder das Stellglied liefert und die Heizeinrichtung abschaltet und/oder das Stellglied betätigt und das Anpreßelement und/oder die Heizeinrichtung von der Betriebsposition in die entfernte Nothalt- oder Stand-by-Position verfährt; die Nothalteinrichtung kann bei Bedarf sogar mit einer Kühleinrichtung kombiniert sein. Auf diese Weise ist es möglich, den empfindlichen elastischen Anpreßkörper, der in der Regel aus einem Elastomermaterial hergestellt ist, effektiv vor einer Überhitzung und thermischen Schädigung zu schützen. Eine derartige Nothalteinrichtung kann bei Anbindung einer geeigneten Zusatzschalteinrichtung gleichzeitig auch als normaler Betriebsschalter zum Aktivieren und Deaktivieren der Heizeinrichtung und zum Verfahren der Heizeinrichtung in die Betriebs- oder Stand-by-Position dienen.

In Verbindung mit der Heizeinrichtung hat es sich auch als sinnvoll erwiesen, der Anpreßeinrichtung bezogen auf die Werkstück-Durchlaufrichtung eine Werkstück-Vorwärmeinrichtung vorzuschalten. Somit kann ein Werkstück bereits vor Eintritt in die Anpreßeinrichtung auf eine bestimmte Temperatur vorgewärmt und die Temperaturdifferenz zwischen dem Werkstück und dem erwärmten elastischen Anpreßkörper sowie dem von diesem direkt kontaktieren Beschichtungsmaterial reduziert werden.

Die erfindungsgemäße Vorrichtung umfaßt auch eine solche Ausgestaltungsform, bei der ein oder mehrere angetriebene Anpreßelemente zumindest einen Teil der Werkstück-Bewegungseinrichtung bilden und die Werkstücke in der Durchlaufrichtung fortbewegen. Die Anpreßelemente üben somit eine vorteilhafte Doppelfunktion aus und tragen auf diese Weise zu einer vereinfachten, wirtschaftlichen Konstruktion bei. Zum Bewegen der Werkstücke ist, wie bereits weitere oben in Verbindung mit der Werkstück-Stützeinrichtung abgehandelt, natürlich ebenso eine separate Werkstück-Transporteinrichtung möglich, zum Beispiel in der Form eines Transportbandes oder einer Transportwalzenstrecke oder dergleichen. Diese Werkstück-Transporteinrichtung ist selbstverständlich auch mit den angetriebenen Anpreßelementen kombinierbar.

Zur Verarbeitung von Beschichtungsmaterialien, die nicht bereits selbst mit einem vorbereiteten Fixiermittel, z.B. einer Haftoder Klebemittelschicht, ausgestattet sind, stellt die erfindungsgemäße Vorrichtung eine der Anpreßeinrichtung bezogen auf die Durchlaufrichtung vorgeschaltete Fixiermittelauftragseinrichtung bereit, mit der das Fixiermittel vor oder unmittelbar vor dem eigentlichen Anpreßvorgang auf das Beschichtungsmaterial und/oder die Werkstückoberfläche auftragbar ist. Somit kann der Fixiermittelauftrag kontinuierlich im Rahmen der mit der erfindungsgemäßen Vorrichtung durchführbaren Bearbeitungsschritte erfolgen.

Ein weiteres Ausgestaltungsmerkmal der erfindungsgemäßen Vorrichtung ist mindestens eine Steuer- und/oder Regeleinrichtung, die beim Durchlauf bestimmter Abschnitte des Werkstücks die Durchlaufgeschwindigkeit verändert. Zu den hier zu betrachtenden Werkstückabschnitten sowie dem Zweck der Steuer- und/oder Regeleinrichtung wird auf die bereits weiter oben erläuterten korrespondierenden Verfahrensschritte verwiesen. Die Steuer- und/oder Regeleinrichtung umfaßt zweckmäßigerweise geeignete Sensoren, welche für eine Erkennung der jeweiligen Werkstückabschnitte ausgelegt sind.

Auch hat es sich als vorteilhaft erwiesen, daß die erfindungsgemäße Vorrichtung mit mindestens einer dem Anpreßelement zugeordneten Reinigungseinrichtung ausgestattet ist. Bei der Reinigungseinrichtung kann es sich beispielsweise um eine dem Anpreßelement gegenüberliegende Blaseinrichtung handeln, die ölfreie Druckluft ausstößt. Berührende Reinigungseinrichtung sind ebenso möglich. Die Reinigungseinrichtung ermöglicht ein leichtes Entfernen von Verschmutzungen des Anpreßelements beziehungsweise dessen Anpreßkörper.

In einer noch anderen Ausgestaltungsvariante der erfindungsgemäßen Vorrichtung ist vorgesehen, daß einem bewegbaren Anpreßelement in einer Werkstück-Durchlaufrichtung und auf einer der zu kaschierenden Werkstückoberfläche abgewandten Seite mindestens eine Beschichtungsmaterial-Tiefzieheinrichtung nachgeschaltet ist, die über einen vorbestimmten Durchlaufstreckenabschnitt mit den Werkstücken mitbewegbar ist.

Dies gestattet es auf vorteilhafte Art und Weise, auch kritische Werkstückbereiche, die mit dem beweglichen Anpreßelement nicht oder nicht vollständig zu erfassen sind, wie zum Beispiel schmale Plattenseitenränder, tiefe Einbuchtungen, Hinterschneidungen oder ähnlich geformte Werkstückbereiche, die sich insbesondere in einem recht scharfen Winkel relativ zur Plattenhauptebene erstrecken, formgenau und mit einer hohen Fertigungsqualität in einem einzigen Durchlauf mit dem Beschichtungsmaterial dreidimensional zu kaschieren. Das Tiefziehen ermöglicht hierbei einen hohen Verformungsgrad des Beschichtungsmaterials, der durch die Verformungswirkung des vorgeschalteten beweglichen Anpreßelement noch weiter gesteigert werden kann. Diesbezüglich ist hervorzuheben, daß das bewegliche Anpreßelement das Beschichtungsmaterial an den hier zu betrachtenden kritischen Werkstückbereichen zwar nicht selbst vollständig in den endgültigen Verformungszustand bringen kann, jedoch bereits ein Vorformen bewirkt, so daß in Kombination mit dem anschließenden Tiefziehen selbst bei erheblichen Formänderungen ein Versagen bzw. Reißen des Beschichtungsmaterials sicher vermieden werden kann; auf diese Weise ist ein optimaler Verformungszustand realisierbar. Das ermöglicht es, selbst komplizierte Werkstücke in einem Arbeitsgang mit einer großen Produktionsgeschwindigkeit präzise und in einem kontinuierlichen Ablauf bei einer hervorragenden Reproduzierbarkeit automatisch zu kaschieren. Somit kann ein enormer weiterer Rationalisierungseffekt erzielt und ein qualitativ hochwertiges Produkt äußerst wirtschaftlich hergestellt werden.

Vorzugsweise besitzt die Tiefzieheinrichtung eine Wirkfläche, die größer als eine auf die Stützebene projizierte Grundfläche eines Werkstücks ist, so daß mit der Tiefzieheinrichtung Beschichtungsmaterialbereiche tiefziehbar sind, die seitlich über die Grundfläche des Werkstückes hinausragen.

Die Tiefzieheinrichtung kann aber auch eine Wirkfläche besitzen, die kleiner gleich der Grundfläche des Werkstücks ist.

Es ist bevorzugt, das die Größe der Wirkfläche der Tiefzieheinrichtung einstellbar ist.

Ferner ist es vorgesehen, dass die Beschichtungsmaterial-Tiefzieheinrichtung in einer Ausführungsform eine Werkstück-Niederhalteeinrichtung umfaßt, die auf eine der Stützebene abgewandte Seite des Werkstücks wirkt.

Die Größe einer Wirkfläche der Werkstück-Niederhalteeinrichtung kann einstellbar sein.

In einer weiteren möglichen Variante umfaßt die Beschichtungsmaterial-Tiefzieheinrichtung eine Beschichtungsmaterial-Einspanneinrichtung.

Ein Einspannbereich der Beschichtungsmaterial-Einspanneinrichtung kann hierbei einstellbar sein.

Ferner ist es im Sinne der Erfindung möglich, dass im Bereich des für die Beschichtungsmaterial-Tiefzieheinrichtung vorgesehenen Durchlaufstreckenabschnitts eine Beschichtungsmaterial-Erwärmungseinrichtung vorgesehen ist, die auf einen im wesentlichen parallel zur Stützebene verlaufenden Hauptflächenabschnitt der Werkstücke wirkt.

Vorzugsweise ist die Beschichtungsmaterial-Erwärmungseinrichtung auf einer der Beschichtungsmaterial-Tiefzieheinrichtung gegenüberliegenden Seite der Stützebene angeordnet.

Ferner kann die Beschichtungsmaterial-Erwärmungseinrichtung ein umlaufendes Endlosband mit Obertrum und Untertrum umfassen, wobei der Obertrum im wesentlichen in der Stützebene und in Durchlaufrichtung verläuft und eine dem Hauptflächenabschnitt der Werkstücke zugeordnete Werkstückstütz- und Wärmeübertragungsfläche bildet, und wobei der Untertrum einem Erwärmungselement zugeordnet ist, das diejenige Seite des Endlosbandes erwärmt, die bei einer fortschreitenden Umlaufbewegung des Endlosbandes anschließend im Bereich des Obertrums die Werkstückstütz- und Wärmeübertragungsfläche bildet.

In Verbindung mit der zuvor genannten Ausgestaltungsform ist des Weiteren vorgesehen, daß das Endlosband aus einem temperaturbeständigen und elastischen und/oder elastisch verformbaren Material hergestellt ist.

Das Endlosband wirkt vorzugsweise mit der Beschichtungsmaterial-Einspanneinrichtung zusammen, so daß das tiefzuziehende Beschichtungsmaterial zwischen dem Obertrum des Endlosbandes und der Beschichtungsmaterial-Einspanneinrichtung einklemmbar ist.

Der Beschichtungsmaterial-Tiefzieheinrichtung kann in Durchlaufrichtung mindestens eine Werkstück-Kühleinrichtung nachgeschaltet sein.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Seitenansicht einer erfindungsgemäßen Vorrichtung gemäß einer ersten Ausführungsform,
- Fig. 2: eine schematische Draufsicht und Schnittansicht eines zu kaschierenden plattenförmigen Werkstückes,
- Fig. 3: eine schematische Seitenansicht einer erfindungsgemäßen Vorrichtung gemäß einer zweiten Ausführungsform,
- Fig. 4: eine schematische Seitenansicht einer Anpreßeinrichtung einer erfindungsgemäßen Vorrichtung gemäß einer dritten Ausführungsform,
- Fig. 5: eine schematische Seitenansicht einer Anpreßeinrichtung einer erfindungsgemäßen Vorrichtung gemäß einer vierten Ausführungsform,
- Fig. 6: eine schematische Seitenansicht einer Anpreßeinrichtung einer erfindungsgemäßen Vorrichtung gemäß einer fünften Ausführungsform,
- Fig. 7: eine schematische Querschnittsansicht eines Anpreßelementes einer erfindungsgemäßen Vorrichtung gemäß einer sechsten Ausführungsform,
- Fig. 8: eine schematische Querschnittsansicht eines Anpreßelementes einer erfindungsgemäßen Vorrichtung gemäß einer siebten Ausführungsform,
- Fig. 9: eine schematische Seitenansicht einer erfindungsgemäßen Vorrichtung gemäß einer achten Ausführungsform,
- Fig. 10: eine schematische, teilweise geschnittene Seitenansicht einer Tief zieheinrichtung der erfindungsgemäßen Vorrichtung von Fig. 9,
- Fig. 11: eine schematische, geschnittene Draufsicht entlang der Linie III - III in Fig. 10 auf eine Beschichtungsmaterial-Einspanneinrichtung der Tiefzieheinrichtung von Fig. 10,
- Fig. 12: eine schematische Querschnittsansicht eines mittels der erfindungsgemäßen Vorrichtung von Fig. 9 mit einem flexiblen fixierfähigen Beschichtungsmaterial vorkaschierten plattenförmigen Werkstückes, und
- Fig. 13: eine schematische Querschnittsansicht des Werkstücks von Fig. 12, wobei sich das vorkaschierte Beschichtungsmaterial in einem tiefgezogenen Zustand befindet.

### BESCHREIBUNG VON AUSFÜHRUNGSBEISPIELEN DER ERFINDUNG

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

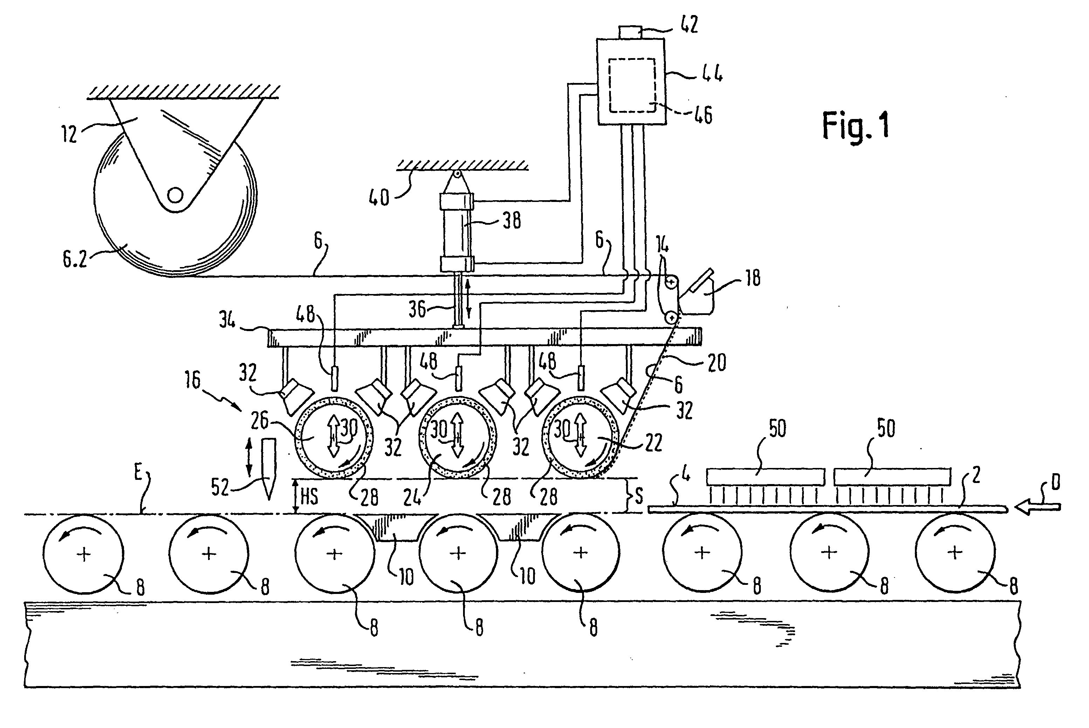

In der Fig. 1 ist eine schematische Seitenansicht einer erfindungsgemäßen Vorrichtung gemäß einer ersten Ausführungsform dargestellt. Diese Vorrichtung ist dazu ausgelegt, plattenförmige Werkstücke 2, deren Oberfläche 4 bezogen auf eine Werkstücklängsrichtung L und Werkstückbreitenrichtung B unterschiedlich orientierte Profilierungen P aufweist, einseitig mit einem flexiblen fixierfähigen Beschichtungsmaterial 6, das heißt im vorliegenden Fall einer mit einem Dekor versehenen Kunststoffolie 6 zu kaschieren. Die Kunststoffolie 6 wird in Rollenform 6.2 bereitgestellt.

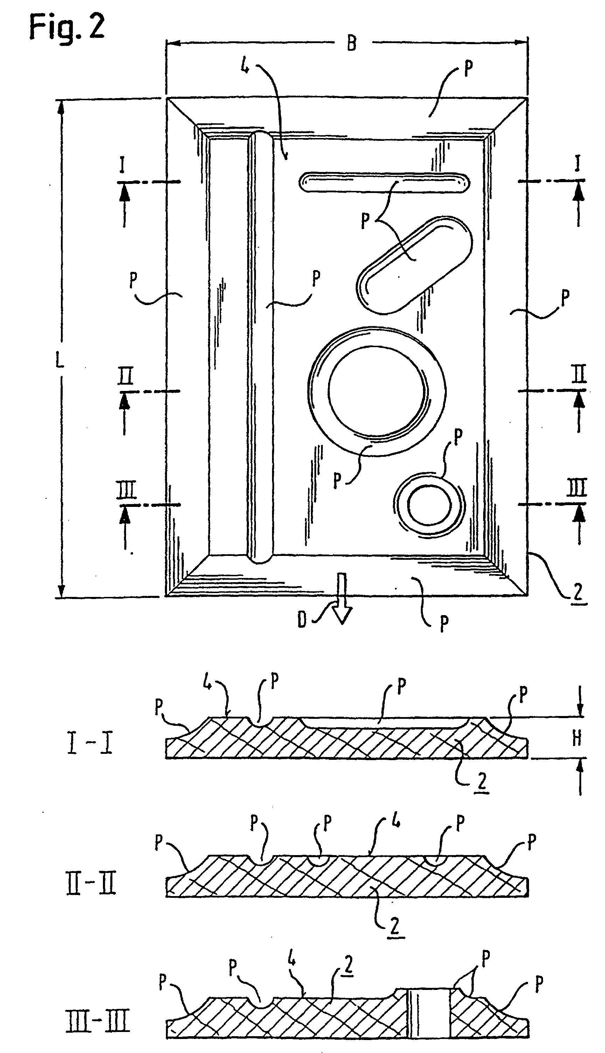

In der Fig. 2 ist in einer schematische Draufsicht und Schnittansicht beispielhaft ein einzelnes plattenförmiges Werkstück 2 skizziert. Für das vorliegende Ausführungsbeispiel handelt es sich dabei um eine rechteckige Preßspanplatte. Wie in der Zeichnung erkennbar, weist die mit der Kunststoffolie 6 zu kaschierende Oberfläche 4 dieser Platte 2 diverse Profilierungen P in der Gestalt von Formkanten, Nuten bzw. Rinnen, Erhebungen und einer Durchgangsöffnung auf. Es ist ersichtlich, daß diese Art von Profilierungen P, die auch als 3D-Profilierungen bezeichnet werden, sich nicht nur in einer Richtung erstrecken, sondern unterschiedlichste Orientierungen sowohl in Werkstückbreiten- B als auch in Längsrichtung L besitzen. Hierbei finden sich sowohl geradlinige als auch kurvenförmige Verläufe, einschließlich komplexerer Formen wie z.B. eine kreisförmige Nut und eine Erhebung mit einem bezogen auf die Werkstückdicke und die Tiefe der andere Profilierungen P nicht unerheblichen Niveauunterschied. Die Basisquerschnittshöhe des Werkstückes 2 ist mit dem Bezugszeichen H gekennzeichnet.

Es werden nun die wesentlichen Komponenten der erfindungsgemäßen Vorrichtung erläutert werden, die entlang einer in der Darstellung gemäß Fig. 1 von recht nach links verlaufenden, geradlinigen Werkstückdurchlaufstrecke angeordnet sind. Die durch diesen Aufbau vorgegebene Werkstückdurchlaufrichtung ist durch einen Pfeil und das Bezugszeichen D angedeutet. Fundamente, Rahmen und Halterungen für die jeweiligen Vorrichtungskomponenten sind, sofern für die nachfolgenden Darlegungen nicht zwingend erforderlich, der Übersichtlichkeit halber nicht dargestellt. Die Vorrichtung umfaßt eine Werkstück-Stützeinrichtung 8, die eine plane Stützebene E bildet, auf der die Werkstücke 2 auf einer Seitenfläche liegend abgestützt bewegbar sind; die Stützebene E ist in der Figur durch eine dünne strichpunktierte Linie angedeutet. Die Werkstück-Stützeinrichtung weist eine Vielzahl von in Durchlaufrichtung D gesehen hintereinander angeordneten zylindrischen Stützwalzen 8 sowie zwei Gleit- und Stützkörper 10 auf, die zwischen jeweils zwei von drei benachbarten Stützwalzen 8 gehalten sind. Die Stützwalzen 8, die sich quer zur Durchlaufrichtung D erstrecken und eine Länge größer der maximalen Werkstückbreite B besitzen, sind aus einem im wesentlichen unnachgiebigen Stahlwerkstoff hergestellt; ihr Längen/Durchmesserverhältnis ist zudem so gewählt, daß sie sich aufgrund der gegebenen Werkstückgewichte sowie der durch andere Vorrichtungskomponenten hervorgerufenen Krafteinwirkungen nicht wesentlich durchbiegen oder anderweitig verformen. Ein gleiches gilt für die Gleit- und Stützkörper 10. Auf diese Weise steht eine formhaltige horizontale plane Stützebene E zur Verfügung. Die Stützwalzen 8 sind darüber hinaus motorisch angetrieben, so daß sie die manuell oder über eine automatische Beschickungseinrichtung auf die Walzen 8 aufgelegten Werkstücke 2 in Durchlaufrichtung D auf der Stützebene E fortbewegen. Die Stützwalzen 8 stellen hier also gleichzeitig eine Werkstück-Transporteinrichtung dar.

Die Vorrichtung ist ferner mit einer Halterung 12 für die Folienrolle 6.2 ausgestattet, von der die Kunststoffolie 6 abgerollt und über zwei Umlenkrollen 14 den Werkstücken 2 sowie einer nach folgend noch detaillierter beschriebenen Anpreßeinrichtung 16 zugeführt wird. Die Folienbreite ist zweckmäßigerweise größer gleich der maximalen Werkstückbreite B. Im Bereich zwischen den Umlenkrollen 14 ist eine Fixiermittelauftragseinrichtung 18
vorgesehen, mit der ein Fixiermittel 20, d.h. im vorliegenden Fall ein Leim 20, vollflächig und in geeigneter Dosierung auf die Rückseite der Kunststoffolie 6 aufgetragen wird.

Oberhalb der Stützebene E ist im Bereich der drei mit den Gleitund Stützkörper 10 korrespondierenden Stützwalzen 8 die bereits zuvor kurz erwähnte Anpreßeinrichtung 16 angeordnet, welche zum Anpressen der mit dem Leim 20 versehenen Kunststoffolie 6 auf die zu beschichtende Oberfläche 4 eines jeweiligen Werkstücks 2 dient. Die Anpreßeinrichtung 16 ist ausgestattet mit drei während des Anpreßvorgangs bewegbaren Anpreßelementen, nämlich drei drehbaren zylindrischen Kaschierwalzen 22, 24, 26, die an einer nicht gezeigten Halterung stationär bzw. ortsfest fixiert sind und sich rechtwinkelig zur Durchlaufrichtung D quer über die Stützebene E erstrecken.
Die Länge der Kaschierwalzen 22, 24, 26 ist größer als die maximale Werkstückbreite B. Im vorliegenden Fall sind die Kaschierwalzen 22, 24, 26 über eine nicht gezeigte Antriebseinrichtung motorisch angetrieben und rotieren in der durch Pfeile angedeuteten Richtung. Zusätzlich ist jede Kaschierwalze 22, 24, 26 mit einer Überholfreilaufeinrichtung ausgestattet. Die Kaschierwalzen 22, 24, 26 besitzen ferner jeweils einen als Anpreßkörper fungierenden und der zu beschichtenden Oberfläche 4 der Werkstücke 2 zugeordneten elastischen rotationssymmetrischen und an seinem Umfang zylinderförmigen Walzenmantel 28, der sich während des Anpreßvorgangs auf der Werkstückoberfläche 4 und der darauf aufliegenden Kunststoffolie 6 abwälzt und diese fortlaufend an die zu beschichtende Oberfläche 4 und deren unterschiedlich orientierte Profilierungen P angeschmiegt, angedrückt und fixiert.

Der elastische Walzenmantel 28 einer jeden Kaschierwalze 22, 24, 26 ist im vorliegenden Beispiel einschichtig aufgebaut und aus einem reversibel verformbaren Elastomerwerkstoff hergestellt. Die Dicke, die Elastizität sowie die Härte des Walzenmantels 28 ist für jede Kaschierwalze 22, 24, 26 gleich; Die Shore-Härte des Walzenmantels 28 beträgt jeweils 26 Shore. Es wird an dieser Stelle nochmals explizit darauf hingewiesen, daß die Dicke und der Aufbau des Walzenmantels 28 sowie die verwendeten Werkstoffe und Werkstoffeigenschaften für die jeweiligen Kaschierwalzen 22, 24, 26 natürlich auch unterschiedlich sein können. Die Dicke eines jeweiligen Walzenmantels 28 ist zumindest größer gleich der maximalen Tiefe bzw. Höhe einer Profilierung P des Werkstückes 2, im vorliegenden Fall ist sie sogar größer gleich der Basisquerschnittshöhe H.

Wie aus der Fig. 1 des weiteren ersichtlich, bilden die Umfangsflächen der Kaschierwalzen 22, 24, 26 und der Stützwalzen 8 sowie die Oberflächen der Gleit- und Stützkörper 10 zusammen einen Werkstück-Durchgangsspalt S, durch den ein Werkstück 2 während seines Durchlaufs durch die Anpreßeinrichtung 16 hindurchtritt. Die Durchgangshöhe HS des Durchgangsspalt S ist hierbei geringer als die Basisquerschnittshöhe H des hindurchtretenden Werkstücks 2. In der Zeichnung ist der Durchgangsspalt S aus Gründen der besseren Anschaulichkeit stark vergrößert dargestellt, wie leicht aus einem Vergleich mit dem in Seitenansicht dargestellten Werkstück 2 deutlich wird. Zur Einstellung der Durchgangshöhe HS in Abhängigkeit der Basisquerschnittshöhe H einer zu kaschierenden Charge Werkstücke 2 sind die Kaschierwalzen 22, 24, 28 jeweils individuell über eine nicht gezeigte Höhenverstelleinrichtung relativ zur Stützebene E und damit zur zu kaschierenden Werkstückoberfläche 4 höhenverstellbar. Die Höhenverstellbarkeit ist jeweils durch einen mit dem Bezugszeichen 30 gekennzeichneten Doppelpfeil angedeutet.

Für die Durchgangshöhe HS des Spaltes S ist eine Grundeinstellung gewählt, bei der die Umfangsfläche des elastischen Walzenmantels 28 einer jeden Kaschierwalze 22, 24, 26 in radialer Richtung relativ zum zugeordneten Werkstück 2 ca. zwei bis fünf Millimeter unterhalb der Basisoberfläche des durchlaufenden Werkstückes 2 liegt. Bezogen auf ein vollkommen glattes Werkstück 2 würde sich der Walzenmantel 28 beim Durchlauf eines Werkstückes 2 also um mindestens 2 mm elastisch verformen. Für jede Kaschierwalze 22, 24, 26 könnte grundsätzlich natürlich auch eine unterschiedliche Grundeinstellung vorgenommen werden. Es ist offensichtlich, daß bei der gegebenen Anordnung durch die Höheneinstellung 30 der Kaschierwalzen 22, 24, 26 und die damit verbundene Festlegung der Durchgangshöhe HS des Durchgangsspaltes S auch der von den Kaschierwalzen 22, 24, 26 auf das Werkstück 2 ausgeübte Anpreßdruck eingestellt wird. Je nach Durchgangshöhe HS und Basisquerschnittshöhe H eines Werkstückes 2 wird sich der elastische Walzenmantel 28 nämlich mehr oder weniger stark elastisch deformieren und eine entsprechende Rückstellkraft und damit Anpreßkraft auf die Werkstückoberfläche und die aufliegende Kunststoffolie 6 ausüben.

Aus der Fig. 1 geht des weiteren hervor, daß jeder Kaschierwalze 22, 24 ,26 eine Heizeinrichtung 32 zugeordnet ist. Bei dieser Heizeinrichtung handelt es sich um jeweils zwei seitlich und oberhalb einer Kaschierwalze 22, 24, 26 und dieser gegenüberliegend an einem gemeinsamen Trägerelement 34 angeordnete Heizstrahler 32, die auf den elastischen Walzenmantel 28 gerichtet sind und diesen erwärmen. Die Heizleistung eines jeden Heizstrahlers 32 ist individuell einstellbar und so gewählt, daß der Walzenmantel 28 im laufenden Betrieb auf eine Temperatur von 20°C bis 200°C erwärmbar ist. Das Trägerelement 34 ist mit einer Zylinderstange 36 eines an einem Vorrichtungsgestell 40 fixierten Hydraulikzylinders 38 gekoppelt, mit dessen Hilfe das Trägerelement 34 und damit die Heizstrahler 32 von einer von dem Walzenmantel 28 entfernten Stand-by- oder Nothaltposition zu dem Walzenmantel 28 hin in eine der Fig. 1 entsprechenden Betriebsposition und wieder zurück bewegbar sind. Die Beweglichkeit der Zylinderstange 36 ist durch einen Doppelpfeil angedeutet.

Die Heizeinrichtung 32 ist mit einem Betriebsschalter 42 sowie einer Nothalteinrichtung 44 verbunden. Die Nothalteinrichtung 44 weist eine mit dem Hydraulikzylinder 38 verbundene Steuer- und Regeleinheit 46 auf, die wiederum drei Temperatursensoren 48 besitzt, die jeweils einer der drei Kaschierwalzen 22, 24, 26 zugeordnet sind. Der jeweilige Temperatursensor 48 ist in einem geringen Abstand zu dem gegenüberliegenden Walzenmantel 28 einer Kaschierwalze 22, 24, 26 angeordnet und erfaßt die Temperatur des erwärmten Walzenmantels 28. Beim Überschreiten einer vorbestimmten Grenztemperatur liefert der Temperatursensor 48 ein Signal an die Steuer- und Regeleinheit 46, welche die Heizstrahler 32 abschaltet, den Hydraulikzylinder 38 aktiviert und das Trägerelement 34 mit den Heizstrahlern 32 von der Betriebsposition in die entfernte Nothalt- oder Stand-by-Position verfährt. Eine entsprechende Aktivierung oder Deaktivierung des Hydraulikzylinders 38 zur Bewegung des Trägerelementes 34 für Wartungszwecke oder dergleichen ist auch manuell mittels des Betriebsschalters 42 möglich.

Den Kaschierwalzen 22, 24, 26 ist bezogen auf die Werkstück-Durchlaufrichtung D eine Vorwärmeinrichtung 50 vorgeschaltet, die oberhalb der Stützebene E angebracht ist und die zu beschichtende Oberfläche 4 der darunter durchlaufenden Werkstücke 2 erwärmt.

In der Zeichnung ist auch erkennbar, daß der Bahnanfang der Kunststoffolie 6, mit der die Werkstücke 2 zu beschichten sind, von der Fixiermittelauftragseinrichtung 18 kommend an den Walzenmantel 28 der in Durchlaufrichtung D ersten Kaschierwalze 22 angelegt ist und leicht an dieser anhaftet. Beim Durchlauf eines Werkstückes 2 wird die Kunststoffolie 6 daher durch die Anpreß- und Klemmwirkung zwischen der rotierenden ersten Kaschierwalze 22 und der Werkstückoberfläche 4 automatisch mitgezogen, dabei abgerollt und auf die laufende Werkstückoberfläche 4 aufgelegt. Die erste Kaschierwalze 22 fungiert hier demzufolge gleichzeitig als Beschichtungsmaterial-Auflegeeinrichtung.

In Durchlaufrichtung D gesehen ist hinter den Kaschierwalzen 22, 24, 26 eine Trennvorrichtung 52 zum Trennen der zugeführten und auf die zu beschichtende Oberfläche 4 eines fortlaufend bewegten Werkstücks 2 aufgelegten Kunststoffolie 6 vorgesehen.

Nachfolgend wird nun das erfindungsgemäße Verfahren zum Kaschieren der plattenförmigen Werkstücke 2 beschrieben werden. Die Durchführung des Verfahrens erfolgt mittels der zuvor beschriebenen erfindungsgemäßen Vorrichtung.

Zunächst werden die Werkstücke 2 einer zu verarbeitenden Werkstückcharge manuell oder maschinell nacheinander und vorzugsweise in Werkstücklängsrichtung D auf die Stützwalzen 8 am Beginn der Durchlaufstrecke (in der Fig. 1 auf der rechten Seite) aufgelegt. Die mit dem Beschichtungsmaterial 6 zu kaschierende Werkstückoberfläche 4 ist hierbei den Stützwalzen 8 und der durch die Stützwalzen 8 gebildeten Stützebene E abgewandt. Die Werkstücke 2 können entweder Stoß an Stoß aufeinanderfolgen oder aber einen gewissen Zwischenraum zueinander aufweisen. Ein bestimmter Werkstückabstand ist in der Regel nicht vorgeschrieben, so daß die Abstände zwischen den einzelnen Werkstücken 2 durchaus variieren dürfen. Des weiteren müssen die Werkstücke 2 nicht speziell ausgerichtet werden, das heißt, sie können bei geeigneter Maschinenbreite in Durchlaufrichtung D gesehen auch leicht gegeneinander versetzt oder schräg auf die Stützwalzen 8 aufgelegt sein. Für das vorliegende Beispiel wird angenommen, daß die Werkstückbreite B in Relation zur Maschinenbreite eine nebeneinander liegende Anordnung der Werkstücke 2 nicht zuläßt, was bei geeigneter Werkstück- und Maschinenbreite natürlich grundsätzlich möglich ist.

Durch die gleichförmig und einheitlich angetriebenen Stützwalzen 8 wird ein einzelnes Werkstück 2 auf der Stützebene E kontinuierlich und in einer durch die Walzendrehrichtung vorbestimmten Durchlaufrichtung D zu den Kaschierwalzen 22, 24, 26 hin fortbewegt. Die Rotationsgeschwindigkeit der Stützwalzen 8 sowie der nachfolgenden Kaschierwalzen 22, 24, 26 ist derart gewählt und aufeinander abgestimmt, daß sich für die gesamte Durchlaufstrecke eine Durchlaufgeschwindigkeit von ca. 30 m/min ergibt. Das Werkstück 2 durchläuft nun zunächst die Vorwärmeinrichtung 50. Dort wird die Werkstückoberfläche 4 auf eine Temperatur von ca. 65 °C vorgewärmt. Anschließend läuft das Werkstück 2 in den von den Stützwalzen 8 und den Kaschierwalzen 22, 24, 26 gebildeten Durchgangsspalt S hinein. Mit der ersten Kaschierwalze 22 wird dem Werkstück 2 die kurz zuvor mittels der Fixiermittelauf tragseinrichtung 18 mit einer vollflächigen Leimschicht 20 versehenen Kunststoffolie 6 zugeführt und auf die vorgewärmte, zu beschichtende Oberfläche 4 des sich während dieses Vorgangs weiterbewegenden Werkstückes 2 aufgelegt. Während des Durchlaufs des Werkstückes 2 unter der erste Kaschierwalze 22 hindurch wird die Kunststoffolie 6 mit Hilfe des mittels der Heizstrahler 32 auf eine Temperatur von 160 °C erwärmten, sich reversibel verformenden und auf der Kunststoffolie 6 und der Werkstückoberfläche 4 abwälzenden elastischen Walzenmantels 28 fortlaufend an die zu beschichtende vorgewärmte Oberfläche 4 und deren unterschiedlich orientierte Profilierungen P (siehe Fig. 2) angeschmiegt, angedrückt und bereits in einen gewissen Maße vorfixiert. Aufgrund der Temperatur des Walzenmantels 28 wird bei diesem Vorgang die Kunststoffolie 6 zusätzlich plastisch verformt, was das Anschmiegen und Anpassen der Folie 6 besonders an die Profilierungen P erleichtert.

Von der ersten Kaschierwalze 22 bewegt sich das Werkstück 2 kontinuierlich zu der zweiten und dritten Kaschierwalze 24, 26 weiter, an denen jeweils das Anschmiegen, Andrücken und Fixieren der Kunststoffolie 6 in der bereits zuvor beschriebenen Art und Weise vervollständigt wird. Während dieses Vorgangs wird das Werkstück 2 zusätzlich von den Gleit- und Stützkörpern 10 unterstützt, so daß es sich nicht durch die Temperatureinwirkung und die Anpreßkräfte durchbiegen oder verformen kann. Anschließend verläßt das sich auf der Stützebene E weiter fortbewegende Werkstück 2 die Anpreßeinrichtung 16, 22, 24, 26 und den Durchgangsspalt S an dem durch die dritte Kaschierwalze 26 begrenzten Spaltende. Der Kaschiervorgang als solcher ist damit abgeschlossen. Hinter dem kaschierten Werkstück 2 wird dann die überstehende Kunststoffolie 6 mittels der Trennvorrichtung 52 abgetrennt. Das Werkstück 2 ist am Ende der Durchlaufstrecke der erfindungsgemäßen Vorrichtung angelangt und kann, sofern sich der Vorrichtung eine andere Durchlaufbearbeitungsmaschine oder dergleichen anschließt, einer weiteren Bearbeitungsstation zugeführt werden.

Für die nachfolgenden Werkstücke 2 verlaufen die beschriebenen Verfahrensschritte analog. Es ist ersichtlich, daß bei einem geringen Abstand der aufeinanderfolgenden Werkstücke 2 manche Bearbeitungsschritte für ein vorauseilendes Werkstück 2 noch nicht vollständig abgeschlossen sind, wenn die gleichen Bearbeitungsschritte für ein nacheilendes Werkstück 2 bereits beginnen. So wird sich bei einem entsprechenden Werkstückabstand beispielsweise ein rückwärtiger Flächenabschnitt eines vorauseilenden Werkstückes 2 noch unter der zweiten und/oder dritten Kaschierwalze 24, 26 befinden, während ein vorderer Flächenabschnitt eines nachfolgenden Werkstücks 2 bereits unter die erste Kaschierwalze 22 läuft.

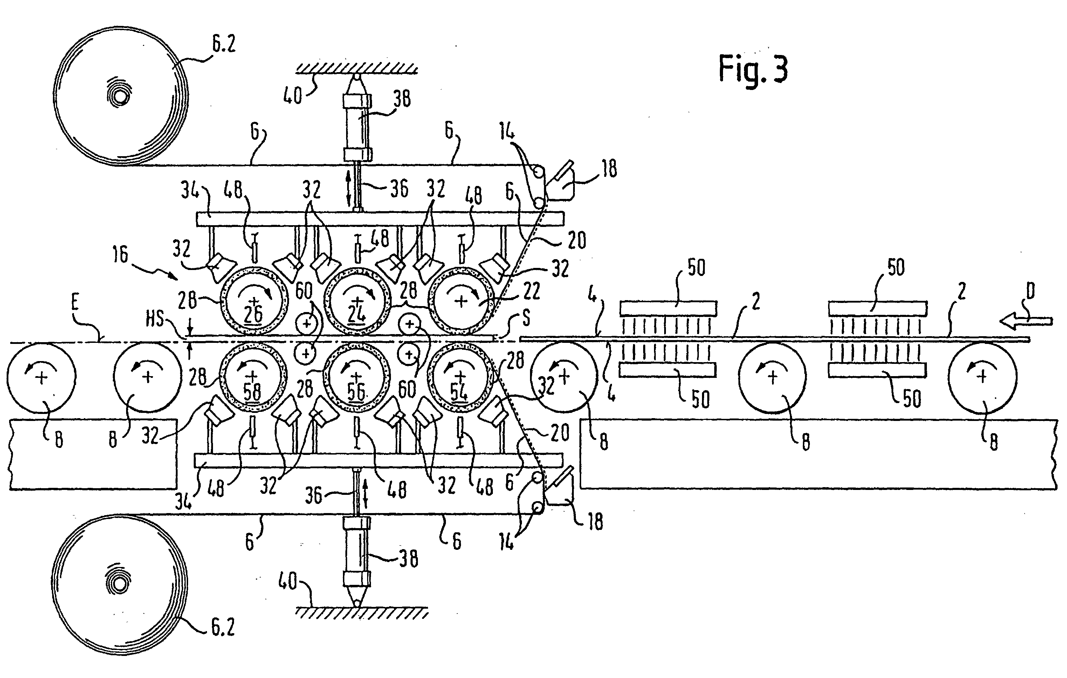

Fig. 3 zeigt eine schematische Seitenansicht einer erfindungsgemäßen Vorrichtung gemäß einer zweiten Ausführungsform. Diese Vorrichtung ist zum beidseitigen Kaschieren von Werkstücken 2 ausgelegt. Die Mehrzahl der einzelnen Vorrichtungskomponenten entspricht im wesentlichen der Variante nach Fig. 1; der Übersichtlichkeit halber sind in der Fig. 3 jedoch einige Bauelemente, die in der Fig. 1 gezeigt sind, weggelassen worden. Die Besonderheit der Vorrichtung nach Fig. 3 besteht darin, daß die Anpreßeinrichtung 16 insgesamt sechs Kaschierwalzen 22, 24, 26; 54, 56, 58 aufweist, von denen jeweils drei auf gegenüberliegenden Seiten der Stützebene E angeordnet sind und mit der jeweils direkt gegenüberliegenden Kaschierwalze ein Walzenpaar bilden. Der Durchgangsspalt S wird hier also hauptsächlich durch die einander in einem bestimmten Abstand gegenüberliegend angeordneten Stützwalzen 22, 24, 26; 54, 56, 58 selbst gebildet. Anstelle der weiter oben beschriebenen Gleit- und Stützkörper 10 sind zudem andere Zwischenstützelemente 60, nämlich Zwischenstützwalzen 60 vorgesehen, die zwischen jeweils zwei benachbarten Kaschierwalzen 22, 24, 26; 54, 56, 58 einer jeweiligen Stützebenenseite angeordnet sind. Die in der Figur unteren Kaschierwalzen 54, 56, 58 übernehmen gleichzeitig auch eine Stützfunktion für das Werkstück 2. Der in Bezug auf die Stützebene E senkrechte Abstand der Zwischenstützwalzen 22, 24, 26; 54, 56, 58 zueinander ist entsprechend auf die Durchgangshöhe HS des Durchgangsspalts S abgestimmt. Wie in der Fig. 3 des weiteren zu erkennen, sind für das zweiseitige Kaschieren die Kunststoffolienrolle 6.2, die Fixiermittelauftragseinrichtung 18, die Heizeinrichtung 32 mit ihrem Trägerelement 34 und dem Hydraulikzylinder 38 sowie die Vorwärmeinrichtung 50 jeweils doppelt und gewissermaßen spiegelbildlich zur Stützebene E vorgesehen. Der Kaschiervorgang erfolgt für jede Werkstückseite 4 analog zu der bereits im Zusammenhang mit der Fig. 1 beschriebenen Art und Weise.

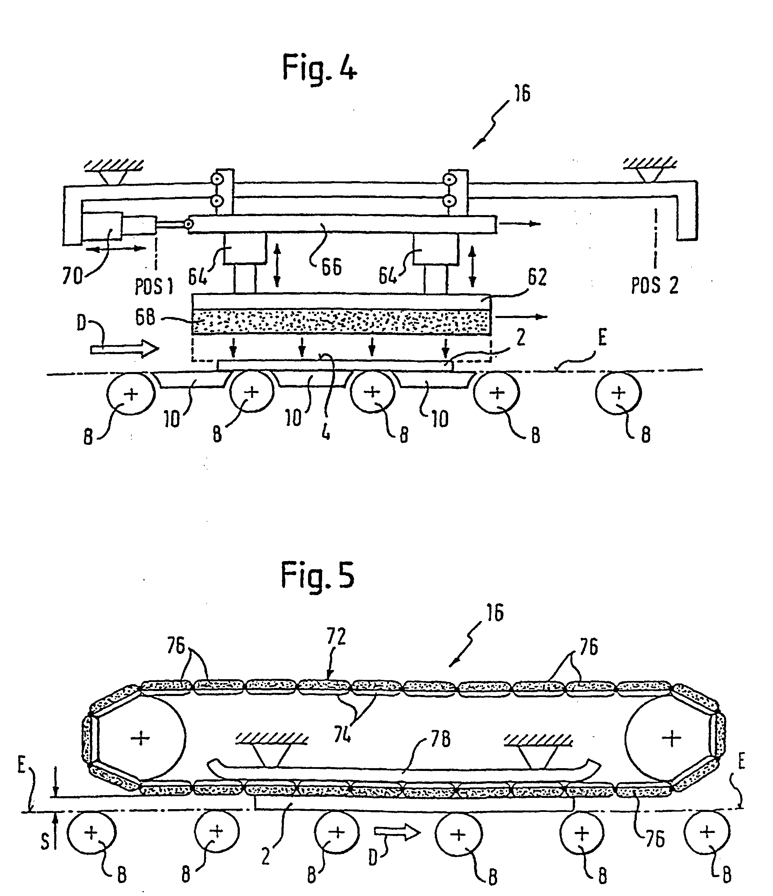

In der Fig. 4 ist eine schematische Seitenansicht einer Anpreßeinrichtung einer erfindungsgemäßen Vorrichtung gemäß einer dritten Ausführungsform dargestellt. Bei dieser Variante ist daß Anpreßelement 62 plattenförmig ausgebildet und über zwei gleichförmig längenverstellbare Stellglieder 64 an einer beweglichen Anpreßelementhalterung 66 gehalten. Die Stellglieder 64 gestatten es, das Anpreßelement 62 zur Stützebene E und damit zur Werkstückoberfläche 4 hin und zurück zu verfahren. Der elastische Einzel-Anpreßkörper 68 ist in der Form eines ebenfalls plattenförmigen, elastischen Druckkissens 68 ausgestaltet, das an der Unterseite, d.h. der der zu beschichtenden Werkstückoberfläche 4 zugewandten Seite des Anpreßelementes 62 fixiert und mit diesem mitbewegbar. Die Abmessungen des Druckkissens 68 sind größer als die Abmessungen eines jeweils zu kaschierenden Werkstückes 2, so daß das Druckkissen 68 das Werkstück 2 vollflächig abdeckt. Die Anpreßelementhalterung 66 ist an einem Bewegungsmechanismus 70 fixiert, der die Anpreßelementhalterung 66 mit dem Anpreßelement 62 und dem Druckkissen 68 in Durchlauf richtung D und entgegen der Durchlaufrichtung D sowie im wesentlichen parallel zur Stützebene E bewegt.

Zum einseitigen Kaschieren eines Werkstückes 2 wird das fixierfähige Beschichtungsmaterial 6 auf die Werkstückoberfläche 4 aufgelegt und das so vorbereitete Werkstück 2 auf die Stützwalzen 8 plaziert und von diesen in Durchlaufrichtung D fortbewegt. Beim Eintritt des Werkstückes 2 in die Anpreßeinrichtung 16 befindet sich das Anpreßelement 62 in einem zurückgezogenen Zustand in der linken Startposition POS1 und wird über den Bewegungsmechanismus 70 in Durchlaufrichtung D beschleunigt bis seine Fortbewegungsgeschwindigkeit der des Werkstückes 2 entspricht. Gleichzeitig werden die Stellglieder 64 im wesentlichen gleichförmig ausgefahren, so daß sich das Druckkissen 68 auf das Beschichtungsmaterial 6 und das Werkstück 2 preßt und hierbei das Beschichtungsmaterial 6 an die Werkstückoberfläche 4 und deren Profilierungen P anschmiegt, andrückt und fixiert. Währenddessen wird das Anpreßelement 62 über einen Teilbereich des durch die Vorrichtung vorgegebenen Werkstück-Durchlaufabschnittes in Durchlaufrichtung D mit dem fortschreitenden Werkstück 2 mitbewegt. Im Gegensatz zu den Ausführungsformen nach Fig. 1 und Fig. 3 steht hierbei das Druckkissen 68 während des Anpreßvorgangs relativ zum bewegten Werkstück 2 still. Kurz vor Erreichen der Endposition POS2 des Bewegungsmechanismus 70 wird das Druckkissen 68 des Anpreßelementes 62 durch Einfahren der Stellglieder 64 von der Werkstückoberfläche 4 abgehoben und abgebremst. Das fertig kaschierte Werkstück 2 hingegen wird in Durchlaufrichtung D weiterbewegt und kann entweder der Vorrichtung entnommen oder einer weiteren Bearbeitungsstation zugeführt werden. Zum Kaschieren eines nächsten Werkstückes 2 wird das Anpreßelement 62 mit seiner Anpreßelementhalterung 66 wieder in die Startposition S1 verfahren, und der beschriebenen Kaschierungsvorgang kann sich wiederholen.

In der Fig. 5 ist eine schematische Seitenansicht einer Anpreßeinrichtung 16 einer erfindungsgemäßen Vorrichtung gemäß einer vierten Ausführungsform dargestellt. Bei dieser Ausführungsform ist das bewegbare Anpreßelement 72 kettenartig ausgebildet, und zwar in der Form einer endlos umlaufenden Kette. Diese Kette besitzt eine Vielzahl von Kettengliedelementen 74, deren der zu beschichtenden Werkstückoberfläche 4 zugeordnete Seite jeweils mit einem druckkissenartigen Einzel-Anpreßkörpern 76 ausgestattet ist. Der Abstand zwischen der Unterseite der Anpreßkörper 76 und der Stützebene E definiert ähnlich wie bei den Varianten nach Fig. 1 und 3 einen Durchgangsspalt S. Um beim Durchlauf eines Werkstückes 2 ein Ausweichen des langgestreckten Kettenabschnitts zu vermeiden und einen geeigneten Anpreßdruck über die elastischen druckkissenartigen Binzel-Anpreßkörpern 76 der Kettengliedelemente 74 aufzubauen, sind die Kettengliedelemente 74 an ihrer dem Werkstück 2 abgewandten Seite von einem Gegendruckelement 78 gestützt. Die Wirkung des kettenartigen Anpreßelementes 72 ist vergleichbar mit der einer Kaschierwalze, jedoch ist aufgrund des langgestreckten Kettenverlaufs die Anpreßdauer bei Durchlauf eines Werkstückes 2 gegenüber einer Kaschierwalze erheblich länger. Beachtenswert bei dieser Variante ist auch, daß sich die Einzel-Anpreßkörpern 76 bis zur Herstellung des Kontaktes mit dem Werkstück 2 bzw. noch unmittelbar zu Beginn des Anpreßvorgangs relativ zum bewegten Werkstück 2 bewegen, wohingegen sie während des eigentlichen Anpreßvorgangs relativ zum bewegten Werkstück 2 stillstehen und sich mit dem Werkstück 2 synchron mitbewegen.

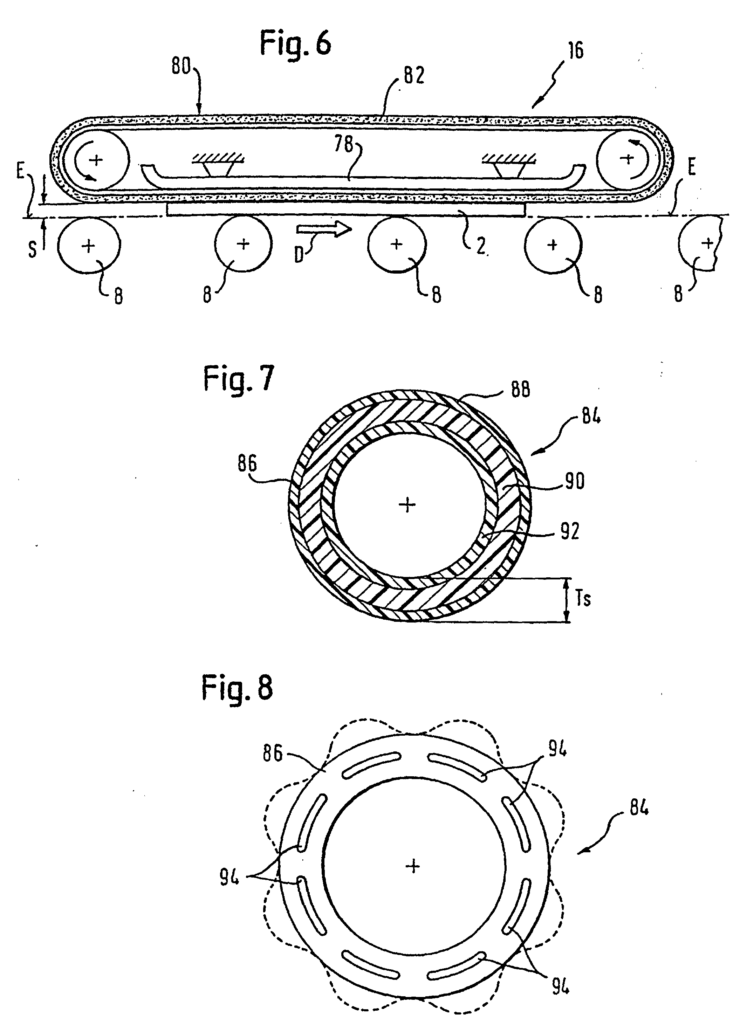

Fig. 6 zeigt eine schematische Seitenansicht einer Anpreßeinrichtung 16 einer erfindungsgemäßen Vorrichtung gemäß einer fünften Ausführungsform, bei der das bewegbare Anpreßelement 80 in der Form eines endlos umlaufenden Bandes ausgebildet ist. Die der zu beschichtenden Werkstückoberfläche 4 zugeordnete Bandseite ist mit einer elastischen Schicht 82 versehen, die einen einheitlichen Anpreßkörper 82 bildet. Die Funktions- und Wirkungsweise dieser Ausgestaltungsform entspricht der gemäß Fig. 5.

In der Fig. 7 ist eine schematische Querschnittsansicht eines Anpreßelementes einer erfindungsgemäßen Vorrichtung gemäß einer sechsten Ausführungsform skizziert. Das als zylindrische Kaschierwalze 84 ausgebildete Anpreßelement besitzt einen elastischen Walzenmantel 86, der aus mehreren Schichten 88, 90, 92 aufgebaut ist. Die Schichten 88, 90, 92 sind aus Elastomerwerkstoffen mit unterschiedlichen Materialeigenschaften hergestellt, so daß sich für den Walzenmantel 86 eine bestimmte Federkennlinie ergibt. Bei einem fest vorgegebenen und/oder variablen Abstand zwischen dem Walzenmantel 86 und der Oberfläche 4 des durchlaufenden Werkstücks 2 mit dem darauf aufliegenden Beschichtungsmaterial 6 ist der von dem Walzenmantel 86 in Zusammenwirkung mit dem Werkstück 2 erzeugte Anpreßdruck auch durch die Dicke Ts des Walzenmantels 86 bestimmt. Dementsprechend wird die Kaschierwalze 84 beim Kaschieren eines Werkstückes 2 bestimmte Anschmiege- und Anpreßeigenschaften aufweisen.

Fig. 8 zeigt eine schematische Querschnittsansicht eines Anpreßelementes 84 einer erfindungsgemäßen Vorrichtung gemäß einer siebten Ausführungsform. Das ebenfalls als Kaschierwalze 84 ausgestaltete Anpreßelement besitzt einen Walzenmantel 86, der mit einer Vielzahl von schwellkörperartigen Verformungsabschnitt 94 versehen ist. Bei diesen Verformungsabschnitten handelt es sich um mehrere in Umfangsrichtung und in Walzenbreitenrichtung im Walzenmantel 86 eingeformte schlitzartige Hohlräume 94, die unter Einwirkung eines Wirkmediums, zum Beispiel von Druckluft oder einer druckbeaufschlagten Flüssigkeit, eine Verformung des Walzenmantels 86 über seine normale zylindrische Ausgangsform hinaus bewirken. Wie in der Zeichnung durch die gestrichelten Linien angedeutet, nimmt der Walzenmantel 86 dann eine wellenförmige Außenkontur an. Der verformte Walzenmantel 86 paßt sich auf diese Weise besonders gut an Profilierungsvertiefungen und Profilierungserhebungen an, die quer zur Durchlaufrichtung D auf der zu kaschierenden Werkstückoberfläche 4 verlaufen. Die Walzenmantelvorsprünge wirken dabei in die Profilierungsvertiefungen hinein. Die Walzenmantel-einbuchtungen hingegen schmiegen sich besonders wirksam an die Profilierungserhebungen an.

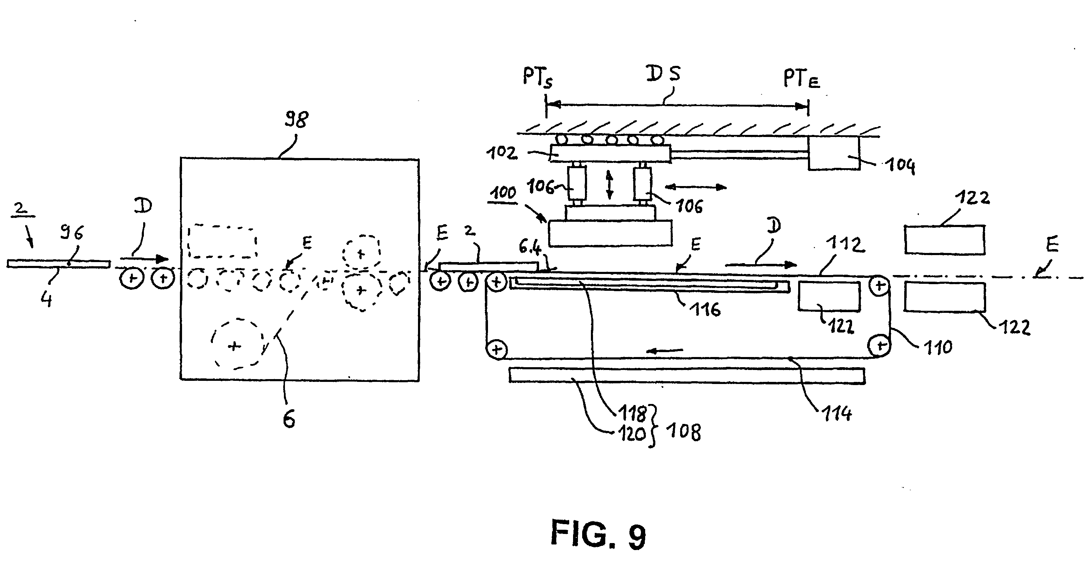

In der Fig. 9 ist eine schematische Seitenansicht einer erfindungsgemäßen Vorrichtung gemäß einer achten Ausführungsform dargestellt. Diese Vorrichtung ist dazu ausgelegt, plattenförmige Werkstücke 2, die eine Oberfläche 4, die einen im wesentlichen parallel zu einer Stützebene E verlaufenden Hauptflächenabschnitt des Werkstückes 2 darstellt und später eine Deckfläche oder Sichtseite des fertigen Werkstückes 2 bildet, sowie sich im wesentlichen rechtwinkelig an diese Oberfläche 4 anschließende schmale Plattenseitenränder 96 besitzen, einseitig (d.h. hier einen untenliegenden Hauptflächenabschnitt 4 und die sich daran anschließenden umlaufenden Plattenseitenränder 96) mit einem verformbaren, flexiblen fixierfähigen Beschichtungsmaterial 6 dreidimensional zu kaschieren. Der Hauptflächenabschnitt 4 kann hierbei bezogen auf eine Werkstücklängsrichtung und Werkstückbreitenrichtung unterschiedlich orientierte 3D-Profilierungen aufweisen, die in den Zeichnungen mit dem Bezugszeichen P gekennzeichnet sind. Für dieses Ausführungsbeispiel wird als Beschichtungsmaterial 6 eine thermoplastische Kunststoffolie verwendet.

Das Bezugszeichen 98 kennzeichnet allgemein einen Vorrichtungsteil, der folgende Vorrichtungskomponenten umfaßt: eine Werkstück-Stützeinrichtung, die die Stützebene E bildet, auf der die Werkstücke 2 abgestützt in einer in der Darstellung gemäß Fig. 9 von rechts nach links verlaufenden kurvenförmigen oder geradlinigen Werkstückdurchlaufstrecke bewegbar sind; eine Werkstück-Bewegungseinrichtung zum fortlaufenden Bewegen der Werkstücke in einer durch einen Pfeil angedeuteten vorbestimmten Durchlauf richtung D auf der Stützebene E; eine Beschichtungsmaterial-Zuführeinrichtung und eine Beschichtungsmaterial-Auflegeeinrichtung zum Zuführen und Auflegen des Beschichtungsmaterials 6 auf die zu beschichtende Oberfläche der fortlaufend bewegten Werkstücke; eine Vorwärmeinrichtung für das Werkstück 2 und das Beschichtungsmaterial 6; und eine Anpreßeinrichtung zum Anpressen des Beschichtungsmaterials 6 auf die zu beschichtende Oberfläche 4, wobei die Anpreßeinrichtung ein oder mehrere während des Anpreßvorgangs bewegbare Anpreßelemente (hier; sog. Kaschierwalzen) besitzt, die jeweils wenigstens einen dem Beschichtungsmaterial und der zu beschichtenden Oberfläche zugeordneten elastischen Anpreßkörper aufweisen, der das Beschichtungsmaterial 6 fortlaufend an die zu beschichtende Oberfläche 4 und deren unterschiedlich orientierte 3D-Profilierungen P angeschmiegt, angedrückt und fixiert. Diese Vorrichtungskomponenten sind aus der vorhergehenden Beschreibung zu den Fig. 1 bis 8 bekannt und sollen an dieser Stelle nicht nochmals weiter im Detail erläutert werden.

In dem Vorrichtungsteil 98 wird das Beschichtungsmaterial 6 auf die den Hauptflächenabschnitt 4 bildende Werkstückoberfläche, die der Stützebene E zugewandt ist bzw. auf dieser aufliegt, sowie die in dem Hauptflächenabschnitt 4 befindlichen 3D-Profilierungen P aufkaschiert.

Das zu kaschierende Werkstück 2 wird hierzu an einer in der Fig. 9 auf der linken Seite befindlichen Eingabeseite in den Vorrichtungsteil 98 eingegeben, so daß es mit dem Hauptflächenabschnitt 4 nach unten auf der Stützebene E aufliegt, und kontinuierlich in Durchlaufrichtung D auf der Stützebene E bewegt wird. Zunächst wird das Werkstück 2 dann durch Abblasen, Absaugen oder Bürsten gereinigt und anschließend vorgewärmt. Dann wird von einer unterhalb der Stützebene E befindlichen Stelle das bereits mit einem Fixiermittel versehene und auf ein bestimmtes Aufmaß vorgeschnittene Beschichtungsmaterial 6 in Durchlaufrichtung D auf die Stützebene E zugeführt. Das Aufmaß ist so gewählt, daß das resultierende Beschichtungsmaterialstück 6 größer als eine auf die Stützebene E projizierte Grundfläche des Werkstücks 2 ist und nach dem nun folgenden Vorkaschieren noch allseitig über die Grundfläche des Werkstückes 2 hinausragt. Das weiter voranschreitende Werkstück 2 läuft nun mit dem zu kaschierenden untenliegenden Hauptflächenabschnitt 4 auf das Beschichtungsmaterialstück 6 auf, und das Beschichtungsmaterial 6 wird folglich zwischen Werkstück 2 und Stützebene E auf diese Werkstückoberfläche 4 passend aufgelegt. Im Anschluß daran wird das Beschichtungsmaterial 6 mittels der Kaschierwalzen flächig an den Hauptflächenabschnitt 4 und die 3D-Profilierungen P angepreßt, so daß das Beschichtungsmaterial 6 fortlaufend an den Hauptflächenabschnitt 4 und dessen unterschiedlich orientierte 3D-Profilierungen P angeschmiegt, angedrückt und fixiert wird.

Das auf diese Weise vorkaschierte Werkstück verläßt den Vorrichtungsteil 98 an der in Fig. 9 rechten Seite und wird auf einer Fortsetzung der Stützebene E weiter in Durchlaufrichtung D fortbewegt.

Wie aus der Fig. 9 des Weiteren ersichtlich, ist dem Vorrichtungsteil 98, in dem, wie erwähnt, die als Kaschierwalzen ausgestalteten Anpreßelemente angeordnet sind, in Durchlaufrichtung D und auf einer dem vorkaschierten Hauptflächenabschnitt 4 abgewandten Seite eine Beschichtungsmaterial-Tiefzieheinrichtung 100, nachfolgend kurz Tief zieheinrichtung 100 genannt, nachgeschaltet, die über einen vorbestimmten Durchlaufstreckenabschnitt DS mit dem Werkstück 2 mitbewegbar ist. Zu diesem Zweck ist die Tiefzieheinrichtung 100 an einer im wesentlichen parallel zur Durchlaufrichtung D verfahrbaren Halterung 102 befestigt und mit einer Bewegungseinrichtung 104 ausgestattet, mit der die Tiefzieheinrichtung 100 parallel zur Durchlaufrichtung D von einer Startposition PT_{S} zu einer Endposition PT_{E} und zurück bewegbar ist, wie in Fig. 9 durch einen horizontalen Doppelpfeil angedeutet. Der durch die Startposition PT_{S} und die Endposition PT_{E} vorgegebene Bewegungsbereich der Bewegungseinrichtung 104 bestimmt hierbei die maximale Länge des zuvor genannten Durchlaufstreckenabschnitts DS. Die Halterung 102 weist überdies eine Stelleinrichtung 106 auf, die es gestattet, die Tiefzieheinrichtung 100 im wesentlichen rechtwinkelig zur Durchlaufrichtung D in Richtung zur Stützebene E und damit zum Werkstück 2 hin abzusenken und wieder in entgegengesetzter Richtung anzuheben, wie in Fig. 9 durch einen vertikalen Doppelpfeil angedeutet.

Vor und im Bereich des für die Tiefzieheinrichtung 100 vorgesehenen Durchlaufstreckenabschnitts DS ist auf einer der Tiefzieheinrichtung 100 gegenüberliegenden Seite eine Beschichtungsmaterial-Erwärmungseinrichtung 108, nachfolgend kurz Erwärmungseinrichtung 108 genannt, angeordnet. Die Erwärmungseinrichtung 108 umfaßt im vorliegenden Fall ein umlaufendes Endlosband 110 mit Obertrum 112 und Untertrum 114. Das Endlosband 110 dient hierbei gleichzeitig als Werkstück-Bewegungseinrichtung. Der Obertrum 112 läuft im wesentlichen in der Stützebene E und in Durchlaufrichtung D und bildet eine dem Hauptflächenabschnitt 4 des Werkstücks 2 zugeordnete Werkstückstütz- und Wärmeübertragungsfläche, auf der das Werkstück 2 in Durchlaufrichtung D transportiert wird. Der Obertrum 112 wird auf seiner dem Werkstück 2 abgewandten Seite durch eine flächige Stützeinrichtung 116 gestützt, in die ein erstes Heizelement 118 der Erwärmungseinrichtung 108 integriert ist. Wie in der Fig. 9 ferner erkennbar, ist dem Untertrum 114 ein zweites Heizelement 120 zugeordnet, das diejenige Seite des Endlosbandes 110 erwärmt, die bei einer fortschreitenden Umlaufbewegung des Endlosbandes 110 anschließend im Bereich des Obertrums 112 die Werkstückstütz- und Wärmeübertragungsfläche bildet und das Beschichtungsmaterial 6 des vorkaschierten Werkstückes 2 direkt kontaktiert. Das Endlosband 110 ist aus einem temperaturbeständigen und elastischen deformierbaren Material hergestellt, das für ein Zusammenwirken mit der Tief zieheinrichtung 100 ausgelegt ist. Dies wird nachfolgend noch detaillierter beschrieben werden.

Der Tiefzieheinrichtung 100 sind in Durchlaufrichtung D eine Werkstück-Kühleinrichtung 122 sowie weitere Bearbeitungsstationen zum Ausschneiden von überstehendem Beschichtungsmaterial 6, zum Entfernen von Beschichtungsmaterialresten sowie zum Reinigen und Ausfördern von fertig kaschierten Werkstücken 2 nachgeschaltet. In der Fig. 9 ist der Übersichtlichkeit halber nur die Werkstück-Kühleinrichtung 122 eingezeichnet. Der Anfang der Kühleinrichtung 122 liegt bezogen auf die Durchlaufrichtung D noch innerhalb des für die Tiefzieheinrichtung 100 vorgesehenen Durchlaufstreckenabschnitts DS.

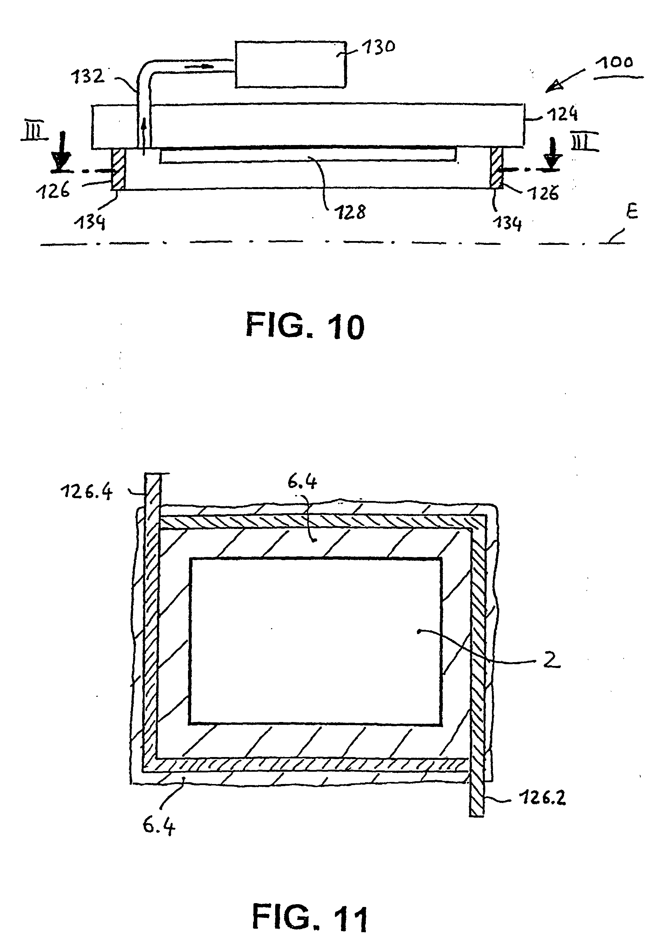

Aus der Fig. 10, die eine schematische, teilweise geschnittene Seitenansicht der Tiefzieheinrichtung 100 der erfindungsgemäßen Vorrichtung von Fig. 9 darstellt, gehen weitere Einzelheiten der Tiefzieheinrichtung 100 hervor. Die Tiefzieheinrichtung 100 umfaßt eine obere Grundplatte 124, eine rahmenartige Beschichtungsmaterial-Einspanneinrichtung 126, im nachfolgenden kurz Einspanneinrichtung 126 genannt, eine elastische bzw. flexible Werkstück-Niederhalteeinrichtung 128, im nachfolgenden kurz Niederhalteeinrichtung 128 genannt, eine Evakuierungseinrichtung 130 und einen Evakuierungsanschluß 132, der in den durch den Einspannrahmen 126, die Grundplatte 124 und die Niederhalteeinrichtung 128 begrenzten Raum mündet.

Fig. 11 zeigt mit Blickrichtung auf die Stützebene E eine schematische, geschnittene Draufsicht entlang der Linie III - III in Fig. 10 auf den Einspannrahmen 126 der in Fig. 10 gezeigten Einspanneinrichtung. In die Fig. 11 ist zusätzlich das vorkaschierte Werkstück 2 mit seinen allseitig über die Grundfläche überstehenden Beschichtungsmaterialbereichen 6.4 eingezeichnet. Die überstehenden Beschichtungsmaterialbereichen 6.4 sind hierbei durch eine breite Schraffierung angedeutet. Die auf die Stützebene E projizierte innere Rahmenfläche des Einspannrahmens 126 stellt gleichzeitig die (maximale) Wirkfläche der Tiefzieheinrichtung 100 dar. Der Einspannrahmen 126 ist aus zwei in der Draufsicht L-förmigen Rahmenteilen 126.2, 126.4 zusammengesetzt, die gegeneinander verschiebbar sind, so daß die Rahmengröße und damit der Einspannbereich und die Wirkfläche der Tiefzieheinrichtung 100 einstellbar sind (eine Einstellbarkeit einer Wirkfläche der Niederhalteeinrichtung 128 könnte z.B. auf ähnliche Weise realisiert werden). Im vorliegenden Beispiel ist die Rahmengröße so gewählt, daß die Tiefzieheinrichtung 100 eine Wirkfläche besitzt, die größer als die Grundfläche des Werkstücks ist (wie deutlich in der Fig. 11 zu erkennen), und daß die zur Stützebene E weisenden freien Rahmenränder 134 (siehe Fig. 10) noch allseitig über den überstehenden Beschichtungsmaterialbereichen 6.4 liegen.

Wird die Tiefzieheinrichtung 100 mit dem in einer derartigen Position relativ zum Werkstück 2 ausgerichteten Einspannrahmen 126 abgesenkt, kommen die zur Stützebene E weisenden freien Rahmenränder 134 auf den überstehenden Beschichtungsmaterialbereichen 6.4 zu liegen und spannen diese zwischen sich und dem Endlosband 110 ein. Das Endlosband 110 wirkt also derart mit der Einspanneinrichtung 126 zusammen, daß das tiefzuziehende Beschichtungsmaterial 6, 6.4 zwischen dem Obertrum 112 des Endlosbandes 110 und der Einspanneinrichtung 126 eingeklemmt ist, wobei das elastisch deformierbare Material des Endlosbandes 110 gleichzeitig als eine Abdichtung fungiert. Im abgesenkten Zustand der Tiefzieheinrichtung 100 wird außerdem die Niederhalteeinrichtung 128 elastisch gegen die der Stützebene E abgewandte Seite des Werkstücks 2 gepreßt und drückt dieses 2 gegen das Endlosband 110 und dessen Stützeinrichtung 116. Tiefzieheinrichtung 100, Werkstück 2 und der Obertrum 112 des Endlosbandes 110 bewegen sich in diesem Zustand gleichförmig in Durchlaufrichtung D.

Es wird nun das mit der oben beschriebenen Vorrichtung durchführbare erfindungsgemäße Verfahren beschrieben werden, und zwar beginnend bei dem Zeitpunkt, zu dem das vorkaschierte Werkstück 2 den Vorrichtungsteil 98 verläßt und sich weiter auf der Stützebene E in Richtung Tiefzieheinrichtung 100 bewegt, die sich vorerst in einem angehobenen Zustand in ihrer Startposition PT_{S} befindet. Zunächst gelangt das Werkstück 2 auf seiner Durchlaufstrecke in den in der Fig. 9 linken Bereich des Obertrums 112 des Endlosbandes 110 und wird dort durch das von dem ersten und zweiten Heizelement 118, 120 erwärmte Endlosbandmaterial vorgewärmt. Währenddessen wird die Tiefzieheinrichtung 100 bereits vertikal in Richtung zur Stützebene E hin abgesenkt und in Durchlaufrichtung D horizontal beschleunigt, bis sich das Werkstück 2 und die Tiefzieheinrichtung 100 in einem im wesentlichen relativbewegungsfreien Zustand zueinander befinden und die Einspanneinrichtung 126 eine Position über dem Werkstück 2 einnimmt, wie Sie in der geschnittenen Draufsicht gemäß Fig. 11 dargestellt ist. Dann wird die Tiefzieheinrichtung 100 vollständig abgesenkt, so daß das Werkstück 2 und seine überstehenden Beschichtungsmaterialbereiche 6.4 in der bereits weiter oben beschriebenen Art und Weise eingespannt werden. Das Werkstück 2 und das Beschichtungsmaterial 6, 6.4 wird weiterhin durch den Obertrum 112 bzw. die Heizelemente 118, 120 erwärmt.

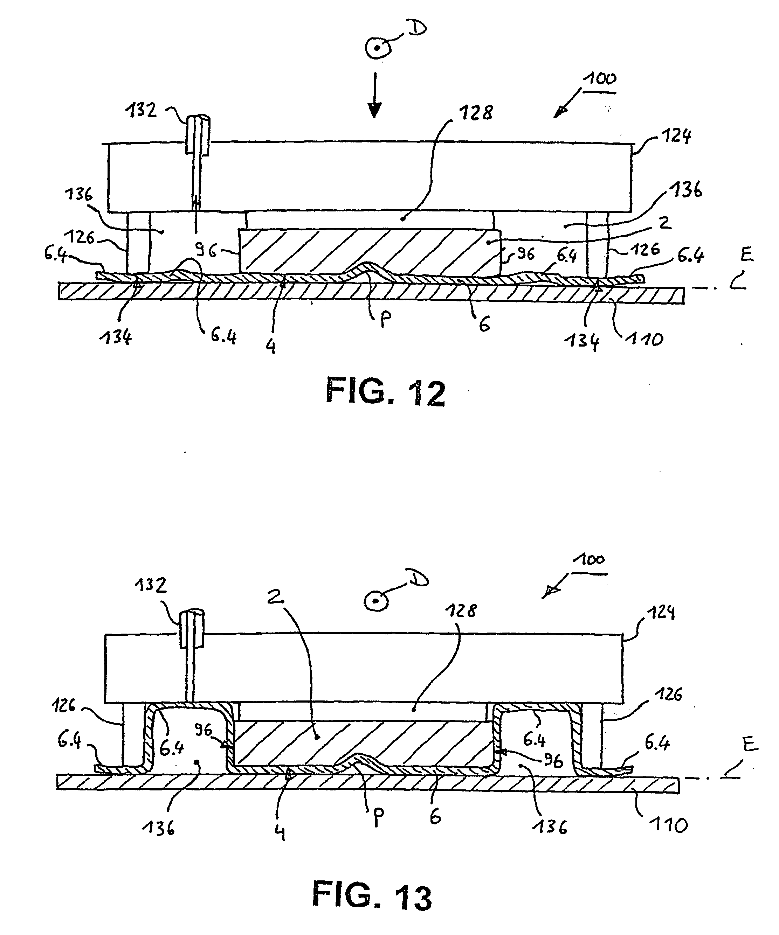

Das Werkstück 2 befindet sich nun in einem Zustand, wie er in der Fig. 12 dargestellt ist, die eine schematische Querschnittsansicht des eingespannten und sich auf den Betrachter zu bewegenden vorkaschierten Werkstückes 2 zeigt. In der Zeichnung ist auch eine bereits vollständig kaschierte rinnenförmige 3D-Profilierung P des Werkstückes 2 erkennbar. Der durch die Grundplatte 124, den Einspannrahmen 126, die Niederhalteeinrichtung 128 und die verbleibenden freien Werkstückoberflächen, die gemeinsam eine Art Matrize ausbilden, sowie durch das Endlosband 110 abgegrenzte Hohlraum 136 ist nun im wesentlichen hermetisch verschlossen. Während das Werkstück 2 und die Tiefzieheinrichtung 100 in diesem Zustand weiter gemeinsam in Durchlaufrichtung D voranschreiten, wird die Evakuierungseinrichtung 130 aktiviert, der Hohlraum 136 über den Evakuierungsanschluß 132 evakuiert, wie durch einen Pfeil angedeutet, und dadurch der Tiefziehvorgang eingeleitet.

Während die Tiefzieheinrichtung 100 weiter mit den Werkstück 2 mitbewegt wird, verformen sich die innerhalb des Einspannrahmens 126 befindlichen überstehenden und weiterhin erwärmten Beschichtungsmaterialbereiche 6.4 in einer in Bezug auf den vorkaschierten Hauptflächenabschnitt 4 entgegengesetzten Richtung in den Hohlraum 136 hinein. Hierbei schmiegt sich das Beschichtungsmaterial 6 bzw. 6.4 auch bündig an die Plattenseitenränder 96 an, wird an diese angedrückt und durch das Fixiermittel an den Plattenseitenränder 96 fixiert, bis ein tiefgezogener Zustand erreicht ist, wie er in Fig. 13 in einer der Fig. 12 entsprechenden Querschnittsansicht dargestellt ist.

Das Werkstück 2 und seine tiefgezogenen Beschichtungsmaterialbereiche 6.4 werden dann, während sie weiter mit der Tiefzieheinrichtung 100 fortbewegt werden, gekühlt (122), bis ein stabiler Formzustand und Haftungszustand des Beschichtungsmaterials 6 bzw. 6.4 erreicht ist. Nun wird die Evakuierungseinrichtung 130 deaktiviert und ein Umgebungsdruck an den Evakuierungsanschluß 132 angelegt, so daß sich die Tiefzieheinrichtung 100 von dem Werkstück 2 trennen läßt. Hierzu wird die Tiefzieheinrichtung 100 nach oben zurückgezogen und bis zum Erreichen ihrer Endposition PT_{E} abgebremst, während das fertig kaschierte Werkstück 2 weiter in der Durchlaufrichtung D fortbewegt und weiter gekühlt (122) und/oder aus überschüssigen tiefgezogenen Beschichtungsmaterialflächen ausgeschnitten, von Beschichtungsmaterialresten befreit sowie gereinigt und aus der Vorrichtung herausgefördert wird.

Für nachfolgende Werkstücke 2 wird die Tiefzieheinrichtung 100 wieder in Ihre Startposition PT_{S} zurückgefahren und die beschriebenen Verfahrensschritte wiederholen sich analog.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs können das erfindungsgemäße Verfahren und die erfindungsgemäße Vorrichtung vielmehr auch andere als die oben beschriebenen Ausgestaltungsformen annehmen. Das Verfahren und die Vorrichtung können hierbei insbesondere Merkmale aufweisen, die eine Kombination aus den jeweiligen Einzelmerkmalen der zugehörigen Ansprüche sowie der in den Ausführungsformen beschriebenen Details darstellen. Obwohl in den obigen Ausführungsbeispielen Werkstücke mit einer rechteckigen Umrißform beschrieben wurden, sind mit dem erfindungsgemäßen Verfahren und der erfindungsgemäßen Vorrichtung selbstverständlich auch Werkstücke mit beliebigen anderen Umrißformen (z.B. rund, oval, polygonal usw.) zu kaschieren. Obwohl die Werkstückdurchlaufstrecke in den obigen Beispielen geradlinig ausgebildet ist, kann sie (auch in der Draufsicht) ebenso kurvenförmig beziehungsweise gekrümmt sein und/oder einen unstetigen Streckenabschnitt aufweisen. Obwohl die Tiefzieheinrichtung oben nur in Verbindung mit einem einzelnen Werkstück beschrieben wurde, kann sie grundsätzlich auch für das gleichzeitige Tiefziehen mehrerer Werkstücke ausgelegt sein. Auch können mit der Tiefzieheinrichtung bei einer entsprechenden Einstellung ihres Wirkbereiches Beschichtungsmaterialbereiche tiefgezogen werden, die innerhalb der Grundfläche eines vorkaschierten Werkstückes liegen. Ferner ist es vorgesehen, die Tiefzieheinrichtung bei Bedarf mit zusätzlichen Saug-, Anpreß- oder Druckelementen, z.B. Druckkissen oder dergleichen, auszustatten. Die Werkstück-Niederhalteeinrichtung kann grundsätzlich auch so ausgestaltet sein, daß sie auf eine der Stützebene E zugewandte Seite des Werkstücks wirkt; zu diesen Zweck ist es denkbar, die Werkstück-Niederhalteeinrichtung beispielsweise als Saugeinrichtung auszulegen; ferner kann die Werkstück-Niederhalteeinrichtung mit einem auf der ihr jeweils abgewandten Seite der Stützebene bzw. des Werkstückes angeordneten Gegenhalter oder dergleichen zusammenwirken. Anstelle des oben beschriebenen Endlosbandes könnte z.B. auch ein oder mehrere Plattenelemente verwendet werden, die mit der Tiefzieheinrichtung zusammenwirken und mit dieser und dem Werkstück in Durchlaufrichtung mitbewegbar sind. Schließlich kann die erfindungsgemäße Vorrichtung mit Kontroll-, Steuer- oder Regeleinrichtungen ausgerüstet sein, die es gestatten, den Verfahrensablauf auf gewünschte Weise zu kontrollieren bzw. zu beinflussen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 2: Plattenförmiges Werkstück
- 4: Oberfläche / Hauptflächenabschnitt von 2
- 6: Beschichtungsmaterial / Kunststoffolie / thermoplastische Kunststoffolie
- 6.2: Folienrolle
- 6.4: Überstehende Beschichtungsmaterialbereiche
- 8: Stützwalzen / Werkstück-Transporteinrichtung
- 10: Gleit- und Stützkörper
- 12: Halterung für 6.2
- 14: Umlenkrollen
- 16: Anpreßeinrichtung
- 18: Fixiermittelauftragseinrichtung
- 20: Fixiermittel / Leim
- 22: Kaschierwalze von 16; hier auch: Beschichtungsmaterial-Auflegeeinrichtung
- 24: Kaschierwalze von 16
- 26: Kaschierwalze von 16
- 28: elastischer Walzenmantel von 22, 24, 26, 54, 56, 58
- 30: Höhenverstellung von 22, 24, 26
- 32: Heizeinrichtung / Heizstrahler
- 34: Trägerelement für 32
- 36: Zylinderstange von 38
- 38: Hydraulikzylinder
- 40: Vorrichtungsgestell
- 42: Betriebsschalter
- 44: Nothalteinrichtung
- 46: Steuer- und Regeleinheit
- 48: Temperatursensoren
- 50: Vorwärmeinrichtungen
- 52: Trennvorrichtung
- 54: Kaschierwalze von 16; hier auch: Beschichtungsmaterial-Auflegeeinrichtung
- 56: Kaschierwalze von 16
- 58: Kaschierwalze von 16
- 60: Zwischenstützelemente / Zwischenstützwalzen
- 62: Plattenförmiges Anpreßelement
- 64: Stellglieder
- 68: Anpreßelementhalterung
- 68: Druckkissen / Einzel-Anpreßkörper von 62
- 70: Bewegungsmechanismus für 68, 62
- 72: Kettenartiges Anpreßelement
- 74: Kettengliedelemente von 70
- 76: Druckkissenartige Einzel-Anpreßkörper von 74
- 78: Gegendruckelement
- 80: Bandartiges Anpreßelement
- 82: Elastische Bandschicht / Anpreßkörper von 80
- 84: Kaschierwalze
- 86: Walzenmantel von 84
- 88: Walzenmantelschicht
- 90: Walzenmantelschicht
- 92: Walzenmantelschicht
- 94: schwellkörperartige Verformungsabschnitte / schlitzartige Hohlräume in 86
- 96: Plattenseitenränder von 2
- 98: Vorrichtungsteil
- 100: Beschichtungsmaterial-Tiefzieheinrichtung
- 102: Verfahrbare Halterung von 100
- 104: Bewegungseinrichtung von 100
- 106: Stelleinrichtung von 100
- 108: Beschichtungsmaterial-Erwärmungseinrichtung
- 110: Umlaufendes Endlosband
- 112: Obertrum von 110
- 114: Untertrum von 110
- 116: Stützeinrichtung für 110
- 118: Erstes Heizelement von 108
- 120: Zweites Heizelement von 108
- 122: Werkstück-Kühleinrichtung
- 124: Grundplatte von 100
- 126: Beschichtungsmaterial-Einspanneinrichtung / Einspannrahmen
- 126.2: L-förmiges Rahmenteil von 126
- 126.4: L-förmiges Rahmenteil von 126
- 128: Werkstück-Niederhalteeinrichtung von 100
- 130: Evakuierungseinrichtung von 100
- 132: Evakuierungsanschluß von 100
- 134: Freie Rahmenränder von 126
- 136: Hohlraum

- B: Breitenrichtung von 2
- D: Durchlaufrichtung
- DS: Durchlaufstreckenabschnitt von 100
- E: Stützebene
- H: Basisquerschnittshöhe von 2
- HS: Durchgangshöhe von S
- L: Längsrichtung von 2
- P: Profilierungen / 3D-Profilierungen von 2
- POS1: Startposition von 70
- POS2: Endposition von 70
- PT_{S}: Startposition von 100
- PT_{E}: Endposition von 100
- S: Durchgangsspalt
- Ts: Dicke des Walzenmantels 86

## Patentansprüche

1. Verfahren zum Kaschieren von plattenförmigen Werkstücken (2), deren Oberfläche (4) bezogen auf eine Werkstücklängs- (L) und Breitenrichtung (B) unterschiedlich orientierte Profilierungen (P) aufweist, mit einem flexiblen fixierfähigen (20) Beschichtungsmaterial (6),
umfassend folgende Schritte:
a) fortlaufendes Bewegen (8) der Werkstücke (2) in einer vorbestimmten Durchlaufrichtung (D) auf einer Stützebene (E),
b) Zuführen (14, 22) und Auflegen (22) des Beschichtungsmaterials (6) auf die zu beschichtende Oberfläche (4) der fortlaufend bewegten Werkstücke (2), und
c) Anpressen des Beschichtungsmaterials (6) auf die zu beschichtende Oberfläche (4) mittels mindestens einem sich während des Anpressvorgangs bewegenden Anpresselement (22, 24, 26, 54, 56, 58, 62, 72, 80, 84), das wenigstens einen dem Beschichtungsmaterial (6) und der zu beschichtenden Oberfläche (4) zugeordneten elastischen Anpresskörper (28, 68, 76, 82, 86) aufweist, so dass das Beschichtungsmaterial (6) fortlaufend an die zu beschichtende Oberfläche (4) und deren unterschiedlich orientierte Profilierungen (P) angeschmiegt, angedrückt und fixiert wird.

2. Verfahren nach Anspruch 1,
**dadurch gekennzeichnet, dass**
das zugeführte und auf die zu beschichtende Oberfläche (4) der fortlaufend bewegten Werkstücke (2) aufgelegte Beschichtungsmaterial (6) nach jedem Werkstück (2) abgetrennt (52) wird.

3. Verfahren nach Anspruch 2,
**dadurch gekennzeichnet, dass**
das Abtrennen des Beschichtungsmaterials (6) vor dem Anpressen und Fixieren des Beschichtungsmaterials (6) an die Werkstückoberfläche (4) erfolgt.

4. Verfahren nach Anspruch 2 oder 3,
**dadurch gekennzeichnet, dass**
das Abtrennen (52) des Beschichtungsmaterials nach dem Anpressen und Fixieren des Beschichtungsmaterials (6) an die Werkstückoberfläche (4) erfolgt.

5. Verfahren nach einem oder mehreren der vorhergenannten Ansprüche,
**dadurch gekennzeichnet, dass**
das Kaschieren beidseitig mittels mindestens zwei, jeweils auf gegenüberliegenden Seiten der Stützebene (E) angeordneten und einer jeweiligen Werkstückoberfläche (4) zugeordneten, sich während des Anpressvorgangs bewegenden Anpresselementen (22, 24, 26, 54, 56, 58, 62, 72, 80, 84) erfolgt.

6. Verfahren nach einem oder mehreren der vorhergenannten Ansprüche,
**dadurch gekennzeichnet, dass**
das Kaschieren mittels mindestens zwei in Durchlaufrichtung (D) der Werkstücke (2) hintereinander angeordneten Anpresselementen (22, 24, 26; 54, 56, 58) erfolgt.

7. Verfahren nach einem oder mehreren der vorhergenannten Ansprüche,
**dadurch gekennzeichnet, dass**
das sich bewegende Anpresselement (22, 24, 26; 54, 56, 58, 72, 80) während des Anpressvorgangs relativ zu den fortschreitenden Werkstücken (2) stationär gehalten wird.

8. Verfahren nach einem oder mehreren der vorhergenannten Ansprüche,
**dadurch gekennzeichnet, dass**
das sich bewegende Anpresselement (62) während des Anpressvorgangs relativ zu den fortschreitenden Werkstücken (2) bewegt (70) wird.

9. Verfahren nach einem oder mehreren der vorhergenannten Ansprüche,
**dadurch gekennzeichnet, dass**
das sich bewegende Anpresselement (62) über zumindest einen Teilbereich eines Werkstück-Durchlaufabschnittes in Werkstück-Durchlaufrichtung (D) mit dem fortschreitenden Werkstück (2) mitbewegt (70) wird.

10. Verfahren nach einem oder mehreren der vorhergenannten Ansprüche,
**dadurch gekennzeichnet, dass**
der Anpresskörper (28) des Anpresselementes (22, 24, 26; 54, 56, 58) während des Anpressvorgangs relativ zum bewegten Werkstück (2) bewegt wird.

11. Verfahren nach einem oder mehreren der vorhergenannten Ansprüche,
**dadurch gekennzeichnet, dass**
der Anpresskörper (68) des Anpresselementes (62) während des Anpressvorgangs relativ zum bewegten Werkstück (2) stillsteht.

12. Verfahren nach einem oder mehreren der vorhergenannten Ansprüche,
**dadurch gekennzeichnet, dass**
der Anpresskörper (86) beim Durchlauf bestimmter Bereiche (P) des Werkstücks (2) zumindest zeitweilig einer in eine Profilierungsvertiefung (P) hinein wirkenden und/oder einer sich einer Profilierungserhebung (P) anpassend wirkenden Zusatzverformung (88) unterworfen wird.

13. Verfahren nach einem oder mehreren der vorhergenannten Ansprüche,
**dadurch gekennzeichnet, dass**
die Werkstücke (2) durch Antrieb von einem oder mehreren Anpresselementen (22, 24, 26; 54, 56, 58) fortbewegt werden.

14. Verfahren nach einem oder mehreren der vorhergenannten Ansprüche,
**dadurch gekennzeichnet, dass**
beim Durchlauf bestimmter Bereiche (P) eines Werkstücks (2) durch die Anpresseinrichtung (16) die Durchlaufgeschwindigkeit verändert wird.

15. Verfahren nach Anspruch 14,
**dadurch gekennzeichnet, dass**
beim Durchlauf eines im Vergleich zu anderen profilierten Bereichen des Werkstücks (2) tiefer profilierten Abschnittes (P) die Durchlaufgeschwindigkeit verringert wird.

16. Verfahren nach Anspruch 14,
**dadurch gekennzeichnet, dass**
beim Durchlauf eines im Vergleich zu anderen profilierten Bereichen des Werkstücks (2) weniger tief profilierten Abschnittes die Durchlaufgeschwindigkeit erhöht wird.

17. Verfahren nach einem oder mehreren der vorhergenannten Ansprüche,
**dadurch gekennzeichnet, dass**
der Anpressdruck bei einem fest vorgegebenen und/oder variablen Abstand zwischen dem Anpresskörper (86) und der Oberfläche (4) des durchlaufenden Werkstücks (2) mit dem darauf aufliegenden Beschichtungsmaterial (6) durch die Dicke (Ts) und/oder den Aufbau (88, 90, 92) und/oder die Elastizität des Materials des elastischen Anpresskörpers (86) bestimmt wird.

18. Verfahren nach einem oder mehreren der vorhergenannten Ansprüche,
**dadurch gekennzeichnet, dass**
beim Kaschieren mittels mindestens zwei in Durchlaufrichtung (D) des Werkstückes (2) betrachtet hintereinander angeordneten Anpresselementen (22, 24, 26; 54, 56, 58) der durch die Anpresselemente (22, 24, 26; 54, 56, 58) auf das Beschichtungsmaterial (6) und die Werkstückoberfläche (4) ausgeübte Druck in Durchlaufrichtung (D) von einem Anpresselement zum nächsten erhöht wird.

19. Verfahren nach einem oder mehreren der vorhergenannten Ansprüche,
**dadurch gekennzeichnet, dass**
d) Tiefziehen (100) des in Schritt c) vorkaschierten Beschichtungsmaterials (6, 6.4) mittels mindestens einer dem Anpresselement in Durchlaufrichtung (D) und auf einer der zu beschichtenden Oberfläche (4) abgewandten Seite nachgeschalteten Beschichtungsmaterial-Tiefzieheinrichtung (100), die über einen vorbestimmten Durchlaufstreckenabschnitt (DS) mit den Werkstücken (2) mitbewegbar (104) ist.

20. Vorrichtung zum Kaschieren von plattenförmigen Werkstücken (2), deren Oberfläche (4) bezogen auf eine Werkstücklängs- (L) und Breitenrichtung (B) unterschiedlich orientierte Profilierungen (P) aufweist, mit einem flexiblen fixierfähigen (20) Beschichtungsmaterial (6), umfassend
- eine Werkstück-Stützeinrichtung (8), die eine Stützebene (E) bildet, auf der die Werkstücke (2) abgestützt bewegbar sind,
- eine Werkstück-Bewegungseinrichtung (8) zum fortlaufenden Bewegen der Werkstücke (2) in einer vorbestimmten Durchlaufrichtung (D) auf der Stützebene (E),
- eine Beschichtungsmaterial-Zuführeinrichtung (14, 22; 54) und eine Beschichtungsmaterial-Auflegeeinrichtung (22; 54) zum Zuführen und Auflegen des Beschichtungsmaterials (6) auf die zu beschichtende Oberfläche (4) der fortlaufend bewegten Werkstücke (2), und
- eine Anpresseinrichtung (16) zum Anpressen des Beschichtungsmaterials (6) auf die zu beschichtende Oberfläche (4), wobei die Anpresseinrichtung (16) mindestens ein während des Anpressvorgangs bewegbares Anpresselement (22, 24, 26, 54, 56, 58, 62, 72, 80, 84) besitzt, das wenigstens einen dem Beschichtungsmaterial (6) und der zu beschichtenden Oberfläche (4) zugeordneten elastischen Anpresskörper (28, 68, 76, 82, 86) aufweist, der das Beschichtungsmaterial (6) fortlaufend an die zu beschichtende Oberfläche (4) und deren unterschiedlich orientierte Profilierungen (P) anschmiegt, andrückt und fixiert.

21. Vorrichtung nach Anspruch 20,
**dadurch gekennzeichnet, dass**
diese mindestens eine Trennvorrichtung (52) zum Trennen des zugeführten und auf die zu beschichtende Oberfläche (4) der fortlaufend bewegten Werkstücke (2) aufgelegten Beschichtungsmaterials (6) aufweist.

22. Vorrichtung nach Anspruch 20 oder 21,
**dadurch gekennzeichnet, dass**
das mindestens eine bewegbare Anpresselement (22, 24, 26; 54, 56, 58; 72, 80, 84) stationär gehalten ist.

23. Vorrichtung nach einem oder mehreren der vorhergenannten Ansprüche,
**dadurch gekennzeichnet, dass**
das mindestens eine bewegbare Anpresselement (62) an einer beweglichen Halteeinrichtung (68) gehalten ist.

24. Vorrichtung nach Anspruch 23,
**dadurch gekennzeichnet, dass**
das an der beweglichen Halteeinrichtung (68) gehaltene bewegbare Anpresselement (62) in einer zu der Werkstückdurchlaufrichtung (D) und/oder der Stützebene (E) im wesentlichen senkrechten und/oder schrägen Richtung beweglich (64) gehalten ist.

25. Vorrichtung nach Anspruch 23,
**dadurch gekennzeichnet, dass**
das Anpresselement (22, 24, 26; 54, 56, 58; 62) relativ zur Stützebene (E) und/oder zur kaschierenden Werkstückoberfläche (4) höhenverstellbar (30; 64) ist.

26. Vorrichtung nach einem oder mehreren der vorhergenannten Ansprüche,
**dadurch gekennzeichnet, dass**
das bewegbare Anpresselement (62) über zumindest einen Teilbereich eines Werkstück-Durchlaufabschnittes in Werkstück-Durchlaufrichtung (D) mit dem Werkstück (2) mitbewegbar (70) ist.

27. Vorrichtung nach einem oder mehreren der vorhergenannten Ansprüche,
**dadurch gekennzeichnet, dass**
das bewegbare Anpresselement als Kaschierwalze (22, 24, 26; 54, 56, 58; 84) ausgebildet ist, die einen als Anpresskörper fungierenden elastischen Walzenmantel (28; 86) besitzt.

28. Vorrichtung nach einem oder mehreren der vorhergenannten Ansprüche,
**dadurch gekennzeichnet, dass**
das bewegbare Anpresselement (80) bandartig ausgebildet ist, wobei die der zu beschichtenden Werkstückoberfläche (4) zugeordnete Bandseite mit einem aus einem einheitlichen oder mehrstückigen Anpresskörperteilen gebildeten Anpresskörper (82) versehen ist.

29. Vorrichtung nach einem oder mehreren der vorhergenannten Ansprüche,
**dadurch gekennzeichnet, dass**
das bewegbare Anpresselement (72) kettenartig ausgebildet ist, und Kettengliedelemente (74) besitzt, deren der zu beschichtenden Werkstückoberfläche (4) zugewandte Seite mit einem oder mehreren Einzel-Anpresskörpern (74) versehen ist.

30. Vorrichtung nach einem oder mehreren der vorhergenannten Ansprüche,
**dadurch gekennzeichnet, dass**
das bewegbare Anpresselement (62) platten- oder rahmenförmig ausgebildet ist und an seiner der zu beschichtenden Werkstückoberfläche (4) zugewandten Seite mit einem oder mehreren Einzel-Anpresskörpern (68) versehen ist.

31. Vorrichtung nach einem oder mehreren der vorhergenannten Ansprüche,
**dadurch gekennzeichnet, dass**
bei mehreren in Durchlaufrichtung (D) hintereinander angeordneten Anpresselementen (22, 24, 26; 54, 56, 58), die jeweils einen Anpresskörper besitzen, dessen Breite kleiner als die Werkstückbreite (B) ist, die Anpresskörper zusammen oder bei Betrachtung in Durchlaufrichtung (D) einander seitlich überlappend die Werkstückbreite (B) überdecken.

32. Vorrichtung nach einem oder mehreren der vorhergenannten Ansprüche,
**dadurch gekennzeichnet, dass**
der elastische Anpresskörper (28, 86) des Anpresselementes (22, 24, 26; 54, 56, 58; 84) während des Anpressvorgangs relativ zum bewegten Werkstück (2) bewegbar ist.

33. Vorrichtung nach einem oder mehreren der vorhergenannten Ansprüche,
**dadurch gekennzeichnet, dass**
der elastische Anpresskörper (68) des Anpresselementes (62) für eine während des Anpressvorgangs relativ zum bewegten Werkstück (2) stillstehende Anordnung ausgebildet ist.

34. Vorrichtung nach einem oder mehreren der vorhergenannten Ansprüche,
**dadurch gekennzeichnet, dass**
die Dicke (Ts) des elastischen Anpresskörpers (86) größer gleich der maximalen Tiefe und/oder Höhe einer Profilierung (P) des Werkstückes (2) ist.

35. Vorrichtung nach einem oder mehreren der vorhergenannten Ansprüche,
**dadurch gekennzeichnet, dass**
der Anpresskörper (86) mit mindestens einem schwellkörperartigen Verformungsabschnitt (94) ausgestattet ist, der unter Einwirkung eines Wirkmediums über die betriebliche Ausgangsform des Anpresskörpers (84) hinaus verformbar ist, so dass der Anpresskörper (84) zumindest zeitweilig in eine Profilierungsvertiefung (P) hinein wirkend und/oder sich einer Profilierungserhebung (P) anpassend verformbar ist.

36. Vorrichtung nach einem oder mehreren der vorhergenannten Ansprüche,
**dadurch gekennzeichnet, dass**
der elastische Anpresskörper (28, 68, 76, 82, 86) aus mindestens einem reversibel verformbaren Elastomerwerkstoff hergestellt ist.

37. Vorrichtung nach einem oder mehreren der vorhergenannten Ansprüche,
**dadurch gekennzeichnet, dass**
das Anpresselement (22, 24, 26) und die Stützeinrichtung (8) zusammenwirkend einen Werkstück-Durchgangsspalt (S) mit einer Durchgangshöhe (HS) bilden, die geringer ist als die Basisquerschnittshöhe (H) des durch den Spalt (S) hindurchzuführenden Werkstücks (2).

38. Vorrichtung nach einem oder mehreren der vorhergenannten Ansprüche,
**dadurch gekennzeichnet, dass**
dem Anpresselement (22, 24, 26; 54, 56, 58) zumindest eine Heizeinrichtung (32) zum Erwärmen des elastischen Anpresskörpers (28) zugeordnet ist.

39. Vorrichtung nach einem oder mehreren der vorhergenannten Ansprüche,
**dadurch gekennzeichnet, dass**
der Anpresseinrichtung (16) eine Fixiermittelauftragseinrichtung (18) vorgeschaltet ist.

40. Vorrichtung nach einem oder mehreren der vorhergenannten Ansprüche,
**dadurch gekennzeichnet, dass**
dem Anpresselement in Durchlaufrichtung (D) und auf einer der zu beschichtenden Oberfläche (4) abgewandten Seite mindestens eine Beschichtungsmaterial-Tiefzieheinrichtung (100) nachgeschaltet ist, die über einen vorbestimmten Durchlaufstreckenabschnitt (DS) mit den Werkstücken (2) mitbewegbar (104) ist.

41. Vorrichtung nach Anspruch 40,
**dadurch gekennzeichnet, dass**
die Beschichtungsmaterial-Tiefzieheinrichtung (100) eine Beschichtungsmaterial-Einspanneinrichtung (126; 126.2, 126.4) umfasst.

42. Vorrichtung nach Anspruch 40 oder 41,
**dadurch gekennzeichnet, dass**
im Bereich des für die Beschichtungsmaterial-Tiefzieheinrichtung (100) vorgesehenen Durchlaufstreckenabschnitts (DS) eine Beschichtungsmaterial-Erwärmungseinrichtung (108, 110, 112, 118, 120) vorgesehen ist, die auf einen im wesentlichen parallel zur Stützebene (E) verlaufenden Hauptflächenabschnitt (4) der Werkstücke (2) wirkt.

43. Vorrichtung nach Anspruch 42,
**dadurch gekennzeichnet, dass**
die Beschichtungsmaterial-Erwärmungseinrichtung (108, 110, 112, 118, 120) auf einer der Beschichtungsmaterial-Tiefzieheinrichtung (100) gegenüberliegenden Seite der Stützebene (E) angeordnet ist.

44. Vorrichtung nach Anspruch 42 oder 43,
**dadurch gekennzeichnet, dass**
- die Beschichtungsmaterial-Erwärmungseinrichtung (108) ein umlaufendes Endlosband (110) mit Obertrum (112) und Untertrum (114) umfaßt,
- wobei der Obertrum (112) im wesentlichen in der Stützebene (E) und in Durchlaufrichtung (D) verläuft und eine dem Hauptflächenabschnitt (4) der Werkstücke (2) zugeordnete Werkstückstütz- und Wärmeübertragungsfläche bildet, und
- wobei der Untertrum (114) einem Erwärmungselement (120) zugeordnet ist, das diejenige Seite des Endlosbandes (110) erwärmt, die bei einer fortschreitenden Umlaufbewegung des Endlosbandes (110) anschließend im Bereich des Obertrums (112) die Werkstückstütz- und Wärmeübertragungsfläche bildet.

45. Vorrichtung nach Anspruch 44,
**dadurch gekennzeichnet, dass**
das Endlosband (110) aus einem temperaturbeständigen und elastischen und/oder elastisch verformbaren Material hergestellt ist.

46. Vorrichtung nach Anspruch 44 oder 45,
**dadurch gekennzeichnet, dass**
das Endlosband (110) mit der Beschichtungsmaterial-Einspanneinrichtung (126) zusammenwirkt, so dass das tiefzuziehende Beschichtungsmaterial (6.4) zwischen dem Obertrum (112) des Endlosbandes (110) und der Beschichtungsmaterial-Einspanneinrichtung (126) einklemmbar ist.

## Claims

1. Method for laminating plate-shaped work pieces (2) whose surface (4), referred to a work piece longitudinal (L) and width direction (B), comprises differently oriented profiled regions (P), with a flexible, fixable (20) coating material (6), including the following steps:
a) continuous movement (8) of the work pieces (2) in a predetermined direction of travel (D) on a supporting plane (E),
b) delivery (14, 22) and laying (22) of the coating material (6) on the surface (4) of the continuously moving work pieces (2) which is to be coated, and
c) pressing the coating material (6) onto the surface (4) to be coated by means of at least one pressing element (22, 24, 26, 54, 56, 58, 62, 72, 80, 84) which is moving during the pressing operation and which comprises at least one resilient pressing body (28, 68, 76, 82, 86) associated with the coating material (6) and the surface (4) to be coated, so that the coating material (6) is continuously applied snugly to the surface (4) to be coated and its differently oriented profiled regions (P), pressed on and fixed.

2. Method according to claim 1, **characterised in that** the coating material (6) which is delivered and laid on the surface (4) of the continuously moving work pieces (2) which is to be coated, is cut off (52) after each work piece (2).

3. Method according to claim 2, **characterised in that** the coating material (6) is cut off before pressing on and fixing the coating material (6) to the work piece surface (4).

4. Method according to claim 2 or 3, **characterised in that** the coating material is cut off (52) after pressing on and fixing the coating material (6) to the work piece surface (4).

5. Method according to one or more of the aforementioned claims, **characterised in that** lamination is effected on both sides by means of at least two pressing elements (22, 24, 26, 54, 56, 58, 62, 72, 80, 84) which are respectively arranged on opposite sides of the supporting plane (E) and associated with a respective work piece surface (4) and are moving during the pressing operation.

6. Method according to one or more of the aforementioned claims, **characterised in that** lamination is effected by means of at least two pressing elements (22, 24, 26; 54, 56, 58) arranged one behind the other in the direction of travel (D) of the work pieces (2).

7. Method according to one or more of the aforementioned claims, **characterised in that** the moving pressing element (22, 24, 26; 54, 56, 58, 72, 80) is held stationary relative to the advancing work pieces (2) during the pressing operation.

8. Method according to one or more of the aforementioned claims, **characterised in that** the moving pressing element (62) is moved (70) relative to the advancing work pieces (2) during the pressing operation.

9. Method according to one or more of the aforementioned claims, **characterised in that** the moving pressing element (62) is moved (70) with the advancing work piece (2) in the direction of work piece travel (D) over at least a portion of a work piece travel section.

10. Method according to one or more of the aforementioned claims, **characterised in that** the pressing body (28) of the pressing element (22, 24, 26; 54, 56, 58) is moved relative to the moving work piece (2) during the pressing operation.

11. Method according to one or more of the aforementioned claims, **characterised in that** the pressing body (68) of the pressing element (62) is stationary relative to the moving work piece (2) during the pressing operation.

12. Method according to one or more of the aforementioned claims, **characterised in that**, during passage of certain regions (P) of the work piece (2), the pressing body (86) is at least temporarily subjected to an additional deformation (88) which works into a recess of a profiled region (P) and/or has the effect of adapting to a projection of a profiled region (P).

13. Method according to one or more of the aforementioned claims, **characterised in that** the work pieces (2) are advanced by driving one or more pressing elements (22, 24, 26; 54, 56, 58).

14. Method according to one or more of the aforementioned claims, **characterised in that**, during passage of certain regions (P) of a work piece (2), the speed of travel is varied by the pressing device (16).

15. Method according to claim 14, **characterised in that**, during passage of a section (P) which is more deeply profiled than other profiled regions of the work piece (2), the speed of travel is reduced.

16. Method according to claim 14, **characterised in that**, during passage of a section which is less deeply profiled than other profiled regions of the work piece (2), the speed of travel is increased.

17. Method according to one or more of the aforementioned claims, **characterised in that**, with a fixed and/or variable distance between the pressing body (86) and the surface (4) of the travelling work piece (2) with the coating material (6) resting thereon, the contact pressure is determined by the thickness (Ts) and/or the structure (88, 90, 92) and/or the elasticity of the material of the resilient pressing body (86).

18. Method according to one or more of the aforementioned claims, **characterised in that**, during lamination by means of at least two pressing elements (22, 24, 26; 54, 56, 58) arranged one behind the other as seen in the direction of travel (D) of the work piece (2), the pressure applied by the pressing elements (22, 24, 26; 54, 56, 58) to the coating material (6) and the work piece surface (4) is first increased by a pressing element in the direction of travel (D).

19. Method according to one or more of the aforementioned claims, **characterised in that**
d) deep drawing (100) of the coating material (6, 6.4) previously laminated in step c) by means of at least one coating material deep-drawing device (100) which is mounted behind the pressing element in the direction of travel (D) and on one side facing away from the surface (4) to be coated, and which is movable (104) with the work pieces (2) over a predetermined travel section (DS).

20. Apparatus for laminating plate-shaped work pieces (2) whose surface (4), referred to a work piece longitudinal (L) and width direction (B), comprises differently oriented profiled regions (P), with a flexible, fixable (20) coating material (6), including
- a work piece support device (8) which forms a supporting plane (E) on which the work pieces (2) are movable in supported fashion,
- a work piece moving device (8) for continuously moving the work pieces (2) in a predetermined direction of travel (D) on the supporting plane (E),
- a coating material delivery device (14, 22; 54) and a coating material laying device (22; 54) for delivering and laying the coating material (6) on the surface (4) of the continuously moving work pieces (2) which is to be coated, and
- a pressing device (16) for pressing the coating material (6) onto the surface (4) to be coated, wherein the pressing device (16) has at least one pressing element (22, 24, 26, 54, 56, 58, 62, 72, 80, 84) which is movable during the pressing operation and which comprises at least one resilient pressing body (28, 68, 76, 82, 86) which is associated with the coating material (6) and the surface (4) to be coated and which continuously applies the coating material (6) snugly to the surface (4) to be coated and its differently oriented profiled regions (P), presses it on and fixes it.

21. Apparatus according to claim 20, **characterised in that** it comprises at least one cutting device (52) for cutting off the coating material (6) delivered and laid on the surface (4) of the continuously moving work pieces (2) which is to be coated.

22. Apparatus according to claim 20 or 21, **characterised in that** the at least one movable pressing element (22, 24, 26; 54, 56, 58; 72, 80, 84) is held stationary.

23. Apparatus according to one or more of the aforementioned claims, **characterised in that** the at least one movable pressing element (62) is held on a movable holding device (68).

24. Apparatus according to claim 23, **characterised in that** the movable pressing element (62) held on the movable holding device (68) is kept movable (64) in a direction substantially perpendicular and/or oblique to the direction of work piece travel (D) and/or to the supporting plane (E).

25. Apparatus according to claim 23, **characterised in that** the pressing element (22, 24, 26; 54, 56, 58; 62) is adjustable in height (30; 64) relative to the supporting plane (E) and/or to the laminating work piece surface (4).

26. Apparatus according to one or more of the aforementioned claims, **characterised in that** the movable pressing element (62) is movable (70) with the work piece (2) in the direction of work piece travel (D) over at least a portion of a work piece travel section.

27. Apparatus according to one or more of the aforementioned claims, **characterised in that** the movable pressing element is constructed as a laminating roller (22, 24, 26; 54, 56, 58; 84) which has a resilient roller shell (28; 86) acting as the pressing body.

28. Apparatus according to one or more of the aforementioned claims, **characterised in that** the movable pressing element (80) is of belt-like construction, wherein the belt side associated with the work piece surface (4) to be coated is provided with a pressing body (82) formed from a one-piece or multi-piece pressing body portions.

29. Apparatus according to one or more of the aforementioned claims, **characterised in that** the movable pressing element (72) is of chain-like construction and has chain link elements (74) whose side facing towards the work piece surface (4) to be coated is provided with one or more single pressing bodies (74).

30. Apparatus according to one or more of the aforementioned claims, **characterised in that** the movable pressing element (62) is of plate-like or frame-like construction and provided with one or more single pressing bodies (68) on its side facing towards the work piece surface (4) to be coated.

31. Apparatus according to one or more of the aforementioned claims, **characterised in that**, in the case of a plurality of pressing elements (22, 24, 26; 54, 56, 58) arranged one behind the other in the direction of travel (D) and each having a pressing body whose width is smaller than the work piece width (B), the pressing bodies cover the work piece width (B) together or, when viewed in the direction of travel (D), overlapping each other laterally.

32. Apparatus according to one or more of the aforementioned claims, **characterised in that** the resilient pressing body (28, 86) of the pressing element (22, 24, 26; 54, 56, 58; 84) is movable relative to the moving work piece (2) during the pressing operation.

33. Apparatus according to one or more of the aforementioned claims, **characterised in that** the resilient pressing body (68) of the pressing element (62) is designed for an arrangement which is stationary relative to the moving work piece (2) during the pressing operation.

34. Apparatus according to one or more of the aforementioned claims, **characterised in that** the thickness (Ts) of the resilient pressing body (86) is greater than or equal to the maximum depth and/or height of a profiled region (P) of the work piece (2).

35. Apparatus according to one or more of the aforementioned claims, **characterised in that** the pressing body (86) is equipped with at least one expansion body-like deformation section (94) which is deformable under the influence of an active medium beyond the initial working shape of the pressing body (84), so that the pressing body (84) is at least temporarily deformable, working into a recess of a profiled region (P) and/or adapting to a projection of a profiled region (P).

36. Apparatus according to one or more of the aforementioned claims, **characterised in that** the resilient pressing body (28, 68, 76, 82, 86) is made from at least one reversibly deformable elastomeric material.

37. Apparatus according to one or more of the aforementioned claims, **characterised in that** the pressing element (22, 24, 26) and the supporting device (8) in cooperation form a gap (S) for passage of the work piece with a height (HS) for passage which is lower than the basic cross-sectional height (H) of the work piece (2) to be passed through the gap (S).

38. Apparatus according to one or more of the aforementioned claims, **characterised in that** associated with the pressing element (22, 24, 26; 54, 56, 58) is at least one heating device (32) for heating the resilient pressing body (28).

39. Apparatus according to one or more of the aforementioned claims, **characterised in that** in front of the pressing device (16) is mounted a fixing agent applicator (18).

40. Apparatus according to one or more of the aforementioned claims, **characterised in that** behind the pressing element in the direction of travel (D) and on one side facing away from the surface (4) to be coated is mounted at least one coating material deep-drawing device (100) which is movable (104) with the work pieces (2) over a predetermined travel section (DS).

41. Apparatus according to claim 40, **characterised in that** the coating material deep-drawing device (100) includes a coating material clamping device (126; 126.2, 126.4).

42. Apparatus according to claim 40 or 41, **characterised in that** in the region of the travel section (DS) provided for the coating material deep-drawing device (100) is provided a coating material heating device (108, 110, 112, 118, 120) which acts on a main surface section (4) of the work pieces (2) running substantially parallel to the supporting plane (E).

43. Apparatus according to claim 42, **characterised in that** the coating material heating device (108, 110, 112, 118, 120) is arranged on one side of the supporting plane (E) opposite the coating material deep-drawing device (100).

44. Apparatus according to claim 42 or 43, **characterised in that**
- the coating material heating device (108) includes a revolving endless belt (110) with upper run (112) and lower run (114),
- wherein the upper run (112) runs substantially in the supporting plane (E) and in the direction of travel (D) and forms a work piece support and heat transfer surface associated with the main surface section (4) of the work pieces (2), and
- wherein the lower run (114) is associated with a heating element (120) which heats the side of the endless belt (110) which, when revolving movement of the endless belt (110) progresses, then forms the work piece support and heat transfer surface in the region of the upper run (112).

45. Apparatus according to claim 44, **characterised in that** the endless belt (110) is made from a temperature-resistant and resilient and/or elastically deformable material.

46. Apparatus according to claim 44 or 45, **characterised in that** the endless belt (110) cooperates with the coating material clamping device (126), so that the coating material (6.4) to be deep-drawn can be clamped between the upper run (112) of the endless belt (110) and the coating material clamping device (126).

## Revendications

1. Procédé pour laminer des pièces en forme de plaque (2), dont la surface (4) présente des profilages (P) orientés différemment par rapport à une direction en longueur (L) et en largeur (B) de la pièce, avec un matériau de revêtement (6) flexible pouvant être fixé (20), comprenant les étapes suivantes :
a) déplacement continu (8) de la pièce (2) dans une direction d'avance (D) prédéterminée sur un plan d'appui (E),
b) apport (14, 22) et application (22) du matériau de revêtement (6) sur la surface à revêtir (4) de la pièce (2) étant déplaçée de façon continue, et
c) compression du matériau de revêtement (6) sur la surface à revêtir (4) au moyen d'au moins un élément de compression (22, 24, 26, 54, 56, 58, 62, 72, 80, 84) se déplaçant au cours de l'opération de compression, qui présente au moins un corps de compression élastique (28, 68, 76, 82, 86) associé au matériau de revêtement (6) et à la surface à revêtir (4), de sorte que le matériau de revêtement (6) soit adapté à, pressé et fixé de façon continue sur la surface à revêtir (4) et ses profilages (P) orientés différemment.

2. Procédé selon la revendication 1, **caractérisé en ce que** le matériau de revêtement (6) apporté et appliqué sur la surface à revêtir (4) des pièces (2) déplacées de façon continue est séparé (52) après chaque pièce (2).

3. Procédé selon la revendication 2, **caractérisé en ce que** la séparation du matériau de revêtement (6) s'effectue avant la compression et la fixation du matériau de revêtement (6) sur la surface (4) de la pièce.

4. Procédé selon la revendication 2 ou 3, **caractérisé en ce que** la séparation (52) du matériau de revêtement s'effectue après la compression et la fixation du matériau de revêtement (6) sur la surface (4) de la pièce.

5. Procédé selon l'une ou plusieurs des revendications précédentes, **caractérisé en ce que** le laminage s'effectue des deux côtés au moyen d'au moins deux éléments de compression (22, 24, 26, 54, 56, 58, 62, 72, 80, 84) disposés respectivement sur des côtés opposés du plan d'appui (E), associés à une surface (4) respective de la pièce et se déplaçant au cours de l'opération de compression.

6. Procédé selon l'une ou plusieurs des revendications précédentes, **caractérisé en ce que** le laminage s'effectue au moyen d'au moins deux éléments de compression (22, 24, 26 ; 54, 56, 58) disposés l'un derrière l'autre dans la direction d'avance (D) des pièces (2).

7. Procédé selon l'une ou plusieurs des revendications précédentes, **caractérisé en ce que** l'élément de compression (22, 24, 26 ; 54, 56, 58, 72, 80) se déplaçant est maintenu stationnaire pendant l'opération de compression par rapport aux pièces (2) s'avançant.

8. Procédé selon l'une ou plusieurs des revendications précédentes, **caractérisé en ce que** l'élément de compression se déplaçant (62) est déplacé (70) pendant l'opération de compression par rapport aux pièces (2) s'avançant.

9. Procédé selon l'une ou plusieurs des revendications précédentes, **caractérisé en ce que** l'élément de compression se déplaçant (62) est entraîné (70) avec la pièce (2) avançant, sur au moins une région partielle d'une portion de passage de la pièce dans la direction d'avance des pièces (D).

10. Procédé selon l'une ou plusieurs des revendications précédentes, **caractérisé en ce que** le corps de compression (28) de l'élément de compression (22, 24, 26 ; 54, 56, 58) est déplacé pendant l'opération de compression par rapport à la pièce déplacée (2).

11. Procédé selon l'une ou plusieurs des revendications précédentes, **caractérisé en ce que** le corps de compression (68) de l'élément de compression (62) est immobile par rapport à la pièce déplacée (2) pendant l'opération de compression.

12. Procédé selon l'une ou plusieurs des revendications précédentes, **caractérisé en ce que** le corps de compression (86) lors du passage de régions déterminée (P) de la pièce (2) est soumis au moins temporairement à une déformation supplémentaire (88) agissant de manière à s'adapter à un soulèvement du profilage (P) et/ou agissant dans un renfoncement du profilage (P).

13. Procédé selon l'une ou plusieurs des revendications précédentes, **caractérisé en ce que** les pièces (2) sont avancées par entraînement d'un ou de plusieurs éléments de compression (22, 24, 26 ; 54, 56, 58).

14. Procédé selon l'une ou plusieurs des revendications précédentes, **caractérisé en ce que** lors du passage de région déterminées (P) d'une pièce (2) à travers le dispositif de compression (16), la vitesse de passage est modifiée.

15. Procédé selon la revendication 14, **caractérisé en ce que** lors du passage d'une portion profilée (P) plus profonde par comparaison avec d'autres régions profilées de la pièce (2), la vitesse de passage est réduite.

16. Procédé selon la revendication 14, **caractérisé en ce que** lors du passage d'une portion profilée moins profonde par comparaison avec d'autres régions profilées de la pièce (2), la vitesse de passage est augmentée.

17. Procédé selon l'une ou plusieurs des revendications précédentes, **caractérisé en ce que** pour une distance fixe prédéfinie et/ou variable entre le corps de compression (86) et la surface (4) de la pièce en mouvement (2) avec le matériau de revêtement (6) appliqué par-dessus, la pression de compression est déterminée par l'épaisseur (Ts) et/ou la constitution (88, 90, 92) et/ou l'élasticité du matériau du corps de compression élastique (86).

18. Procédé selon l'une ou plusieurs des revendications précédentes, **caractérisé en ce que** lors du laminage au moyen d'au moins deux éléments de compression (22, 24, 26 ; 54, 56, 58) disposés l'un derrière l'autre lorsque considérés dans la direction d'avance (D) de la pièce (2), la pression exercée par les éléments de compression (22, 24, 26 ; 54, 56, 58) sur le matériau de revêtement (6) et la surface (4) de la pièce est augmentée dans la direction d'avance (D) d'un élément de compression au suivant.

19. Procédé selon l'une ou plusieurs des revendications précédentes, **caractérisé par**
d) l'emboutissage profond (100) du matériau de revêtement (6, 6.4) prélaminé dans l'étape c), au moyen d'au moins un dispositif d'emboutissage profond de matériau de revêtement (100) placé après l'élément de compression dans la direction d'avance (D) et sur un côté opposé à la surface (4) à revêtir, lequel peut être entraîné (104) avec les pièces (2) sur une portion de trajectoire d'avance prédéterminée (DS).

20. Dispositif pour laminer des pièces en forme de plaque (2), dont la surface (4) présente des profilages (P) orientés différemment par rapport à une direction en longueur (L) et en largeur (B) de la pièce, avec un matériau de revêtement (6) flexible pouvant être fixé (20), comprenant
- un dispositif de support de pièce (8), qui forme un plan d'appui (E) sur lequel les pièces (2) peuvent se déplacer de manière supportée,
- un dispositif de déplacement de pièce (8) pour déplacer de façon continue des pièces (2) dans une direction d'avance prédéterminée (D) sur le plan d'appui (E),
- un dispositif d'apport de matériau de revêtement (14, 22; 54) et un dispositif d'application de matériau de revêtement (22 ; 54) pour l'apport et l'application du matériau de revêtement (6) sur la surface (4) à revêtir des pièces (2) déplacées en continu, et
- un dispositif de compression (16) pour la compression du matériau de revêtement (6) sur la surface (4) à revêtir, le dispositif de compression (16) possédant au moins un élément de compression (22, 24, 26, 54, 56, 58, 62, 72, 80, 84) déplaçable pendant l'opération de compression, qui présente au moins un corps de compression (28, 68, 76, 82, 86) élastique associé au matériau de revêtement (6) et à la surface (4) à revêtir, lequel adapte, presse et fixe de façon continue le matériau de revêtement (6) sur la surface (4) à revêtir et ses profilages (P) orientés différemment.

21. Dispositif selon la revendication 20, **caractérisé en ce que** celui-ci présente au moins un dispositif de séparation (52) pour la séparation du matériau de revêtement (6) apporté et appliqué sur la surface (4) à revêtir des pièces (2) se déplaçant en continu.

22. Dispositif selon la revendication 20 ou 21, **caractérisé en ce que** l'au moins un élément de compression déplaçable (22, 24, 26 ; 54, 56, 58 ; 72, 80, 84) est maintenu stationnaire.

23. Dispositif selon l'une ou plusieurs des revendications précédentes, **caractérisé en ce que** l'au moins un élément de compression déplaçable (62) est maintenu sur un dispositif de fixation (68) mobile.

24. Dispositif selon la revendication 23, **caractérisé en ce que** l'élément de compression (62) déplaçable maintenu sur le dispositif de fixation mobile (68) est maintenu mobile (64) dans une direction essentiellement perpendiculaire et/ou oblique par rapport à la direction d'avance (D) des pièces et/ou par rapport au plan d'appui (E).

25. Dispositif selon la revendication 23, **caractérisé en ce que** l'élément de compression (22, 24, 26 ; 54, 56, 58 ; 62) est déplaçable en hauteur (30 ; 64) par rapport au plan d'appui (E) et/ou à la surface (4) de la pièce à laminer.

26. Dispositif selon l'une quelconque ou plusieurs des revendications précédentes, **caractérisé en ce que** l'élément de compression déplaçable (62) peut être entraîné (70) avec la pièce (2) sur au moins une région partielle d'une portion de passage de la pièce dans la direction d'avance (D) des pièces.

27. Dispositif selon l'une ou plusieurs des revendications précédentes, **caractérisé en ce que** l'élément de compression déplaçable est réalisé en tant que rouleau de laminage (22, 24, 26 ; 54, 56, 58 ; 84), qui possède une enveloppe de rouleau élastique (28 ; 86) servant de corps de compression.

28. Dispositif selon l'une ou plusieurs des revendications précédentes, **caractérisé en ce que** l'élément de compression déplaçable (80) est réalisé en forme de bande, le côté de la bande associé à la surface (4) de la pièce à revêtir étant pourvu d'un corps de compression (82) formé d'une pièce ou de plusieurs pièces de corps de compression en une seule pièce ou en plusieurs pièces.

29. Dispositif selon l'une ou plusieurs des revendications précédentes, **caractérisé en ce que** l'élément de compression déplaçable (72) est réalisé en forme de chaîne, et possède des éléments de chaînons (74), dont le côté tourné vers la surface (4) de la pièce à revêtir est pourvu d'un ou de plusieurs corps de compression (74).

30. Dispositif selon l'une ou plusieurs des revendications précédentes, **caractérisé en ce que** l'élément de compression déplaçable (62) est réalisé en forme de plaque ou de cadre et est pourvu, sur son côté tourné vers la surface (4) de la pièce à revêtir, d'un ou de plusieurs corps de compression individuels (68).

31. Dispositif selon l'une - ou plusieurs des revendications précédentes, **caractérisé en ce que** dans le cas de plusieurs éléments de compression (22, 24, 26 ; 54, 56, 58) disposés les uns derrière les autres dans la direction d'avance (D), qui possèdent chacun un corps de compression, dont la largeur est inférieure à la largeur (B) de la pièce, les corps de compression recouvrent la largeur (B) de la pièce conjointement, ou, vu dans la direction d'avance (D), en se chevauchant latéralement.

32. Dispositif selon l'une ou plusieurs des revendications précédentes, **caractérisé en ce que** le corps de compression élastique (28, 86) de l'élément de compression (22, 24, 26 ; 54, 56, 58 ; 84) est déplaçable pendant l'opération de compression par rapport à la pièce (2) déplacée.

33. Dispositif selon l'une ou plusieurs des revendications précédentes, **caractérisé en ce que** le corps de compression élastique (68) de l'élément de compression (62) est conçu pour un agencement immobile par rapport à la pièce (2) déplacée pendant l'opération de compression.

34. Dispositif selon l'une ou plusieurs des revendications précédentes, **caractérisé en ce que** l'épaisseur (Ts) du corps de compression élastique (86) est supérieure ou égale à la profondeur maximale et/ou à la hauteur maximale d'un profilage (P) de la pièce (2).

35. Dispositif selon l'une ou plusieurs des revendications précédentes, **caractérisé en ce que** le corps de compression (86) est muni d'au moins une portion de déformation (94) en forme de corps ondulé, qui, sous l'effet d'un milieu actif, peut être déformée au-delà de la forme de départ fonctionnelle du corps de compression (84), de sorte que le corps de compression (84) puisse être déformé au moins temporairement en agissant dans un renfoncement du profilage (P) et/ou en s'adaptant à un soulèvement du profilage (P).

36. Dispositif selon l'une ou plusieurs des revendications précédentes, **caractérisé en ce que** le corps de compression élastique (28, 68, 76, 82, 86) est fabriqué à partir d'au moins un matériau élastomère déformable de manière réversible.

37. Dispositif selon l'une ou plusieurs des revendications précédentes, **caractérisé en ce que** l'élément de compression (22, 24, 26) et le dispositif de support (8) forment conjointement une fente (S) pour le passage de la pièce, avec une hauteur de passage (HS) qui est inférieure à la hauteur en section transversale de base (H) de la pièce (2) guidée à travers la fente (S).

38. Dispositif selon l'une ou plusieurs des revendications précédentes, **caractérisé en ce qu'**au moins un dispositif de chauffage (32) pour chauffer le corps de compression (28) est associé à l'élément de compression (22, 24, 26 ; 54, 56, 58).

39. Dispositif selon l'une ou plusieurs des revendications précédentes, **caractérisé en ce qu'**un dispositif d'application d'agent fixateur (18) est placé en amont du dispositif de compression (16).

40. Dispositif selon l'une ou plusieurs des revendications précédentes, **caractérisé en ce qu'**au moins un dispositif d'emboutissage profond de matériau de revêtement (100) est placé en aval de l'élément de compression dans la direction d'avance (D) et sur un côté opposé à la surface (4) à revêtir, lequel peut être entraîné (104) avec les pièces (2) sur une portion de trajectoire d'avance prédéterminée (DS).

41. Dispositif selon la revendication 40, **caractérisé en ce que** le dispositif d'emboutissage profond de matériau de revêtement (100) comprend un dispositif de serrage de matériau de revêtement (126 ; 126.2, 126.4).

42. Dispositif selon la revendication 40 ou 41, **caractérisé en ce que** dans la région de la portion de trajectoire d'avance (DS) prévue pour le dispositif d'emboutissage profond de matériau de revêtement (100) on prévoit un dispositif de chauffage du matériau de revêtement (108, 110, 112, 118, 120), qui agit sur une portion de surface principale (4) de la pièce (2) s'étendant essentiellement parallèlement au plan d'appui (E).

43. Dispositif selon la revendication 42, **caractérisé en ce que** le dispositif de chauffage du matériau de revêtement (108, 110, 112, 118, 120) est disposé sur un côté du plan d'appui (E) opposé au dispositif d'emboutissage de matériau de revêtement (100).

44. Dispositif selon la revendication 42 ou 43, **caractérisé en ce que**
- le dispositif de chauffage du matériau de revêtement (108) comprend une bande sans fin périphérique (110) avec une section supérieure (112) et une section inférieure (114),
- la section supérieure (112) s'étendant essentiellement dans le plan d'appui (E) et dans la direction d'avance (D) et formant une surface de transfert de chaleur et de support de pièce associée à la portion de surface principale (4) des pièces (2), et
- la section inférieure (114) étant associée à un élément de chauffage (120) qui chauffe le côté de la bande sans fin (110) qui, pour un déplacement périphérique continu de la bande sans fin (110), forme ensuite dans la région de la section supérieure (112) la surface de transfert de chaleur et de support de pièce.

45. Dispositif selon la revendication 44, **caractérisé en ce que** la bande sans fin (110) est fabriquée à partir d'un matériau résistant à la chaleur et élastique et/ou élastiquement déformable.

46. Dispositif selon la revendication 44 ou 45, **caractérisé en ce que** la bande sans fin (110) coopère avec le dispositif de serrage de matériau de revêtement (126), de sorte que le matériau de revêtement à emboutir (6.4) puisse être serré entre la section supérieure (112) de la bande sans fin (110) et le dispositif de serrage de matériau de revêtement (126).
